# EUROPEAN PATENT APPLICATION

(11) **EP 2 947 616 A1**
(43) Date of publication of application: **25.11.2015**
(21) Application number: 15170914.4
(22) Date of filing: 10.07.2014
(51) Int. Cl.: G06Q 20/12, G06Q 20/32, G06Q 20/40, G06Q 20/02

(54) **DEVICES, SYSTEMS AND METHODS FOR MACHINE-READABLE TAG GENERATION**

(30) Priority: 10.07.2013 GB 201312398; 11.10.2013 GB 201318072; 11.10.2013 GB 201318073; 11.10.2013 GB 201318074; 11.10.2013 GB 201318075; 11.10.2013 GB 201318076; 11.10.2013 GB 201318078; 11.10.2013 GB 201318071; 12.11.2013 GB 201319950; 03.03.2014 GB 201403720
(62) Divisional of application: 14739541.2
(71) Applicant: Powa Technologies Limited, London EC2N 4AY (GB)
(72) Inventor: WAGNER, Dan, London, EC2N 4AY (GB); INGRAM, David, London, EC2N 4AY (GB); BUTCHER, Steve, London, EC2N 4AY (GB)
(74) Representative: Carpmaels & Ransford LLP

(57) **Abstract**

Devices, systems and methods are disclosed which enable machine-readable tag generation in multiple environments including in electronic transaction type environments. A machine-identifiable tag is utilized to initiate a transaction with an electronic device and various devices and systems supporting such a tag generating and processing platform are described.

## Description

### Field of the Disclosure

This disclosure relates to data processing devices, systems and methods, for example devices, systems and methods operable in the field of electronic transactions, for example transactions which are electronic payments utilizing electronic devices, such as mobile devices, server devices, wireless beacons and other related devices and systems.

### Background

Despite considerable advances in electronic payment technology, users still face considerable challenges. Various electronic tools can be used to help users retrieve information about products through their electronic devices, e.g. mobile phones, and/or instigate payment transactions, but consumers must still navigate mobile web sites, connect to local communication networks, enter relevant financial information, and/or undertake other actions that can be difficult on the small screen of a typical smartphone in order to execute a purchase. A need exists for solutions that can enable a user to purchase an object directly with highly simplified interaction with an electronic device.

Systems for performing transactions can display a machine-identifiable tag, such as a QR code, on a computer. The machine-identifiable tag can be read by an electronic device, such as a smartphone executing a QR code reader application, to initiate a transaction. In such a system, the tag may be displayed adjacent to a product on a website offering goods for sale. When a user scans the tag using the electronic device which is registered with the user's details, the goods can thereby be purchased by the user without requiring the user to input further details, such as their name, address, credit card number and expiry date etc.

Each machine-identifiable tag can be stored as a construct in a memory, e.g. as an image, which is then used at the appropriate time to cause the tag to be output, e.g. displayed on a computer screen. Each tag contains unique information, such as a product code, a time and date etc. or other information which may be used to identify a product and/or transaction which is to be performed. When a machine-identifiable tag is scanned by the electronic device, the unique information associated with the tag is used to identify a product. A transaction, such as a purchase of goods, can then be carried out.

Once such a transaction is initiated, the user of the electronic device may be uncertain that the transaction is proceeding correctly, since the usual manner in which transactions such as online shopping is carried out require that information be input to the website from which goods are to be purchased.

Also, machine-identifiable codes such as QR codes are not something to which an uniformed user can relate. To the uniformed user, QR codes generally appear as distorted image, the significance of which cannot be appreciated. It may not be apparent to the uninformed user that a device with specialised software is required to read the code. Hence, there is a need for more intuitive machine-identifiable tags which allow the user to better understand how to obtain the data contained therein, and for tags which do not confuse the uninformed user.

Also, when a machine-identifiable tag is generated and stored in the memory, it must be retained in the memory so that it can be accessed when a transaction is initiated. This requires very large databases which, consequently, have very slow lookup times for the machine-identifiable tags.

Also, a machine-identifiable tag which comprises data relating to the transaction itself such as product information, a product identifier, a product quantity, a URL on which the machine-identifiable tag is located, user information including billing and payment information, and delivery or shipping information present a security risk. Such data could be intercepted by unscrupulous individuals.

Also, for the system to function securely, only an electronic device that has been authenticated and registered in a secure manner should be allowed to participate in a transaction. Without such an authentication system, any device, or number of devices which are capable of attempting to initiate a transaction could bombard the system which could result in unnecessary system strain.

Electronic price tags exist which can display the current purchase price of an article which is being offered for sale. For example, alongside each type of article which is being offered for sale at a particular location, such as a shop, an electronic price tag can be located adjacent one or more or a group of the articles and configured to display the price of the article on an electronic display. The price tag can be updated from a central location in real time with the current price of the article. This can be done with the price tag being linked to a central server via a wired or wireless connection. Currently it is not possible to make a purchase via the electronic price tag. The price tag is simply a dumb display device which receives and displays current prices for goods.

Users of electronic devices, such as communication devices, e.g. mobile phones, smart phones, tablet devices etc., are now able to purchase goods via such devices using a web browser on the device or via a dedicated application. In this scenario, the entire transaction is directed and controlled via the electronic device.

It would desirable to be able to purchase goods which are present in a shop, whereby such goods use an electronic price tag, and initiate the transaction for such purchase via an electronic device, such as a communication device, e.g. a mobile phone, smart phone, tablet device etc..

Moreover, once such a transaction is initiated, the user of the electronic device may be uncertain that the transaction is proceeding correctly, so it would be desirable to provide further confirmation that the transaction is proceeding or has completed.

### Summary of the Disclosure

Methods, devices and systems are disclosed herein that enable a user to purchase an object directly with highly simplified interaction with a user's electronic device and/or with other devices, servers and systems disclosed herein. For example, a single or reduced number of actions may be undertaken by the user, for example while viewing the object in the camera of the mobile device. Objects may be tagged in-situ or in associated information displayed alongside the object or on a display screen (e.g. on a website)., Each tag may be a machine-readable codes or machine-readable tag, including, for example QR codes, bar codes, digital watermarks, audio watermarks or other distinct markings, or recognized by other object recognition techniques, so that the objects are associated, such as on a SKU-by-SKU basis, with product catalogs of various merchants. Actions on a product, using a tag or other characteristics, can initiate an order process that is managed by one or more of the methods, servers and/or devices disclosed herein, such as delivering an order in appropriate format, with relevant product, delivery and customer financial data, to a merchant's site after initiation of an action by the user. Fulfillment and transaction resolution may be handled by existing commercial entities, or may be managed or assisted by the host of the methods and systems disclosed herein.

References herein to a user include references to a consumer utilizing the disclosed methods, devices and systems, and vice-versa. References herein to electronic device include references to: a user operated electronic device, including a communications device, such as: a laptop, a wireless communications device, e.g. mobile phone, a handheld computer, an media player, a tablet computer or any other electronic device; or a computing device, such as a server device (server). References herein to a machine-identifiable tag include references to a machine-readable tag. References to transaction generally mean an electronic transaction. References to a particular method include a reference to a computer-implemented method, for example a method performed by processing circuitry specifically configured to perform the method, or configured to execute executable instructions for performing the method. The terms "electronic commerce platform," "transaction enablement platform," or "transaction facilitating platform," and similar terms should be understood to encompass a one or more of a range of physical machines, devices and other structures, including servers, browsers, applications (including browser-based applications and mobile applications), services (including web services and services delivered in a software-as-a-service (SaaS) model), application programming interfaces, software code modules, software libraries, data structures, databases, and other structures that are involved in enabling the capability to execute a transaction relating to goods (physical or digital) or services in an electronic environment or in a physical environment with assistance by any of the foregoing. The term should further be understood to encompass the various structures described throughout this disclosure except where context indicates otherwise. The term "mobile device application" should be understood to encompass one or more of a range of physical machines, device and other structures, including servers, browsers, applications (including browser-based applications and mobile applications), services (including web services and services delivered in a software-as-a-service (SaaS) model), application programming interfaces, software code modules, software libraries, data structures, databases, and other structures that are involved in enabling the capability to execute functionality that is attributed in this disclosure to a mobile device application. The term should further be understood to encompass the various structures described throughout this disclosure except where context indicates otherwise.

A method of processing a transaction is disclosed, the method comprising the steps of: generating a machine-identifiable tag, wherein the machine-identifiable tag comprises data indicative of a transaction and carrying out the transaction when an electronic device interprets the machine-identifiable tag. This permits a transaction to be carried out by an electronic device reading a tag. The transaction is then performed when (e.g. only when) the electronic device specifically identifies the machine-identifiable tag as being indicative of the transaction. The transaction may comprise one or more of initiating and/or completing an electronic purchase transaction, e.g. by providing electronic purchase information, such as payment details, e.g. credit or debit card details, to a transacting entity. This method may be combined with any one of the disclosed methods which concern user operation of the electronic device.

The machine-identifiable tag may be: a visual tag, an audio tag, a near-field communication tag, an RFID tag, or a transmission from a beacon, such as a broadcast from a Bluetooth or Bluetooth Low Energy, or Bluetooth Smart beacon, or an odor tag. Examples of a visual tag include QR codes, bar codes and digital watermarks.

An electronic device for outputting a tag comprising machine-identifiable data is disclosed, wherein the data is indicative of a transaction, such that an electronic device interpreting the tag can be used to in performing the transaction. This electronic device may be a client computer and configured to display a webpage pertaining to the transaction that is to be validated. The tag may be generated locally on the device, or requested by the electronic device and generated by and obtained from a remote device, such as a tag server, e.g. over a network, such as a local area network (LAN), or wide area network (WAN), e.g. the Internet. The remote device may generate the tag itself, e.g. as image data, or it may send data for generation of an image of the tag on the electronic device. The data transmitted from the remote device may be termed tag data and comprises data indicative of the transaction which can be performed on processing of the tag. Further discussion is provided below as to what data may or may not be included in the tag data.

A method of validating a transaction is disclosed, the method comprising the steps of: associating an electronic device with identification information, initiating a transaction between a user of the electronic device and a transacting entity, displaying the identification information on a display associated with the transacting entity for validation of the electronic device used to perform the transaction. This method may be combined with one or more of the methods disclosed herein which concern user operation of the electronic device.

The method may comprise the step of: displaying the identification information on a display of the electronic device after or before the step of initiating the transaction with the electronic device. The electronic device may be in communication with a validation entity, such as a validation server. The identification information may be generated by the validation entity on instruction by the electronic device, for example only when the electronic device has identified a machine-readable tag displayed by the transacting entity, the machine-readable tag being indicative of the transaction which is to be performed. Initiation of the transaction may comprise reading the machine-readable tag with the electronic device.

The method further may comprise the step of performing the transaction. The transaction may comprise one or more of initiating and/or completing an electronic purchase transaction, e.g. by providing electronic purchase information, such as payment details, e.g. credit or debit card details, to the transacting entity from the validation entity, for example to its transaction server from the validation entity which is in communication with the electronic device.

The method may comprise the step of displaying confirmation of the completed transaction on the display associated with the transacting entity.

The method may comprise the step of displaying confirmation of the completed transaction on a display of the electronic device when the transaction has been completed.

The transaction may comprise initiation by interpreting a machine-identifiable or readable tag displayed using the electronic device on the display associated with the transacting entity.

The machine-identifiable or readable tag may comprise a visually identifiable code, such as a QR code or bar code displayed on the display associated with the transacting entity.

The visually identifiable code may be displayed in a web browser on the display associated with the transacting entity. The visually identifiable code may be displayed in any application associated with or executing on the electronic device, such as a downloaded application or an online application, digital displays, TV, videos etc. Similar means may be used to provide the non-visual tag, (for example audio or odor tag), such as: an audio output device, e.g. a speaker, or an odor generator respectively.

The machine-identifiable tag may comprise at least one of: an RFID tag, an NFC tag, and a transmission from a beacon, such as a broadcast from a Bluetooth or Bluetooth Low Energy, or Bluetooth Smart beacon.

The method may further comprise the steps of: storing the identification information of a given electronic device on the validation server after associating the given electronic device with identification information; and requesting the identification information from the validation server after initiating the transaction validation using the electronic device.

The identification information may comprise personal information related to the user of the electronic device. This information provides further confirmation to the user that the correct transaction is being processed. In this regard, the information does not necessarily need to be unique, but may be descriptive of some characteristic of the user which is known by the user. Thus, by "related to", the identification information may comprise information which can uniquely identify the user of the electronic device from a group or from all users on an access network which is being accessed by the electronic device for participating in the transaction, or may simply be descriptive of some characteristic of the user which is known by the user and which is stored in the device. For example, the identification information may comprise one or more of: a user name; full or part name of the user; an address of the user; an email address of the user; a location of the user, e.g. coordinates, or other location determined by the device or network.

The identification information may comprise information related to the electronic device. Again, this information provides further confirmation to the user that the correct transaction is being processed. In this regard, the information does not necessarily need to be unique, but may be descriptive of some characteristic of the device and stored in the device. Thus, by "related to", the identification information may comprise information which can uniquely identify the electronic device from a group or from all electronic devices on an access network which is being accessed by the electronic device for participating in the transaction, or may simply be descriptive of some characteristic of the device which can be recognized by the user and which is known by the user and which is stored in the device. For example, the identification information may comprise one or more of: an alphanumeric name of the device; serial number, MAC address, IP address (fixed or dynamic).

An electronic device is capable of identifying a machine-identifiable tag, which facilitates performance of a transaction. The machine-identifiable tag is associated with a particular transaction. The electronic device or functionality thereof may be combined with one or more of the disclosed electronic devices and/or be configured to perform the functionality thereof. The machine-identifiable tag may comprise an off-line tag. An off-line tag may be a tag which is physically printed on material for reading by the electronic device. The machine-identifiable tag may also comprises at least one of: a QR code, an RFID tag, an NFC tag, and a transmission from a beacon, such as a broadcast from a Bluetooth or Bluetooth Low Energy, or Bluetooth Smart beacon.

The electronic device may be a communications device, such as: a wireless communications device, e.g. mobile phone, a handheld computer, an media player, a tablet computer or any other electronic device which is configured to read and identify a machine-identifiable tag and communicate with a validation entity, such as validation server. The electronic device may be handheld or portable. A transaction is any exchange of information, services or goods between the user of the electronic device and the transacting entity. For example, a transaction may be the exchange of payment information for the purchase of goods from a website (which may display the machine-identifiable tag) or on the basis of goods shown in an advertisement (which may contain or display the machine-identifiable tag).

A method of validating a transaction is disclosed, the method comprising the steps of: associating an electronic device with identification information, initiating a transaction between a user of the electronic device and a transacting entity by using the electronic device, and displaying the identification information on a display associated with the transacting entity for validation of the electronic device used to perform the transaction. In this way, the user of the electronic device can be certain that the transaction which will be, or which is being performed, is correct. This method may be combined with one or more of the methods disclosed herein which concern operation of the electronic device.

The method may further comprise the step of displaying the identification information on a display of the electronic device after the step of initiating the transaction with the electronic device. The information gives the user specific feedback that their electronic device has initiated the transaction.

The method may further comprise the step of performing the transaction.

The method may further comprise the step of displaying confirmation of the completed transaction on the display associated with the transacting entity. The user of the electronic device will therefore receive confirmation that the electronic device has successfully initiated the transaction, which is subsequently completed.

The method may further comprise the step of displaying confirmation of the completed transaction on a display of the electronic device. The user of the electronic device will therefore receive confirmation that the electronic device has successfully initiated the transaction, which is subsequently completed.

The method may further comprise initiating the transaction by interpreting a machine-identifiable tag displayed on the display associated with the transacting entity using the electronic device. The user of the electronic device can therefore easily initiate the transaction.

The machine-identifiable tag of the method may be a scanable code, such as a QR code, displayed on the display associated with the transacting entity. This can be easily identified by the electronic device.

The scanable code of the method may be displayed in a web browser on the display associated with the transacting entity.

The method may further comprise storing the identification information on a server after associating the electronic device with identification information, and requesting the identification information from the server after initiating the transaction using the electronic device. This permits the correct identification information to be displayed.

The identification information of the method may comprise personal information related to the user of the electronic device.

The identification information of the method may comprise information related to the electronic device.

An electronic device is disclosed which comprises processing circuitry configured to perform the steps of any one of the methods of the first aspect. The electronic device or functionality thereof may be combined with one or more of the disclosed electronic devices and/or be configured to perform the functionality thereof.

A computer-readable medium is disclosed which comprises computer executable instructions executable by processing circuitry, which, when executed, cause the processing circuitry to perform the steps of any one of the preceding method The computer executable instructions may also include instructions from one or more of the computer-readable media disclosed herein.

A system for validating a transaction is disclosed comprising circuitry configured to associate an electronic device with identification information, initiate a transaction between a user of the electronic device and a transacting entity by using the electronic device, and display the identification information on a display associated with the transacting entity for validation of the electronic device used to perform the transaction. The system may also include aspects of one or more of the other systems disclosed herein.

The system may display the identification information on a display of the electronic device after the step of initiating the transaction with the electronic device. The information gives the user specific feedback that their electronic device has initiated the transaction.

The system may perform the transaction.

The system may display confirmation of the completed transaction on the display associated with the transacting entity. The user of the electronic device will therefore receive confirmation that the electronic device has successfully initiated the transaction, which is subsequently completed.

The system may display confirmation of the completed transaction on a display of the electronic device. The user of the electronic device will therefore receive confirmation that the electronic device has successfully initiated the transaction, which is subsequently completed.

The system may initiate the transaction by interpreting a machine-identifiable tag displayed on the display associated with the transacting entity using the electronic device. The user of the electronic device can therefore easily initiate the transaction.

The machine-identifiable tag of the system may be a scanable code, such as a QR code, displayed on the display associated with the transacting entity. This can be easily identified by the electronic device. The machine-identifiable tag may comprise an off-line tag. An off-line tag may be a tag which is physically printed on material for reading by the electronic device.

The scanable code of the system may be displayed in a web browser on the display associated with the transacting entity.

The system may store the identification information on a server after associating the electronic device with identification information, and request the identification information from the server after initiating the transaction using the electronic device. This permits the correct identification information to be displayed.

The identification information of the system may comprise personal information related to the user of the electronic device.

The identification information of the system may comprise information related to the electronic device.

A method of performing a transaction is disclosed, the method comprising: generating a machine-identifiable tag, wherein the machine-identifiable tag comprises data indicative of a transaction, and initiating the transaction when an electronic device interprets the machine-identifiable tag and said machine-identifiable tag has been validated. This allows a transaction to be initiated by interpreting the machine-identifiable tag with an electronic device. This method may be combined with one or more of the other methods disclosed herein.

The machine-identifiable tag of the method may comprise a non-visual and/or a non-radio-frequency detectable tag.

The method may further comprise generating an additional output associated with a product which is the subject of the transaction. This output can complement the machine-identifiable tag.

The additional output of the method may comprise one or more of: an image, audio and/or video associated with or indicative of the product.

Generating the machine-identifiable tag of the method may comprise generating an audio tag for inclusion in the audio stream which is output, the audio tag being indicative of the transaction. Such a tag is more intuitive which allows the user to better understand how to obtain the data contained therein.

Generating the machine-identifiable tag of the method may comprise generating an odor tag and outputting said odor tag. Such a tag is more intuitive which allows the user to better understand how to obtain the data contained therein.

The audio tag generated by the method may comprise a watermark specifically generated and indicative of the transaction. The watermark may be an audio watermark. The audio watermark may comprise a secondary audio signal that is added to or embedded into a primary audio signal in such a way that the secondary audio signal is disguised and/or undetectable to one sensor type (for example the human ear) but is detectable by an alternate sensor (e.g. the microphone of the electronic device), and can be identified therein by the processing circuitry of the electronic device.

The watermark generated by the method may comprise a pre-defined analogue (a secondary audio signal) or digital signal (secondary signal) embedded within an underlying audio waveform (primary audio signal) representative of the audio tag.

The pre-defined analogue or digital signal generated by the method may be implemented in the time or frequency domain of the audio waveform.

The pre-defined analogue or digital signal generated by the method may be extracted using signal processing techniques.

The tag may be generated locally on the device, or requested by the electronic device and generated by and obtained from a remote device, such as a tag server, e.g. over a network, such as a local area network (LAN), or wide area network (WAN), e.g. the Internet. The remote device may generate the tag itself, e.g. as image data, or it may send data for generation of an image of the tag on the electronic device. The data transmitted from the remote device may be termed tag data and comprises data indicative of the transaction which can be performed on processing of the tag. Further discussion is provided below as to what data may or may not be included in the tag data. An electronic device is disclosed which comprises processing circuitry configured to perform the steps of the preceding method. The device may be a server device which generates the machine-identifiable tag and receives information about the validation of the tag from the electronic device. The server device or functionality thereof may be combined with one or more of the disclosed server devices and/or be configured to perform the functionality thereof.

A computer-readable medium is disclosed which comprises computer executable instructions executable by processing circuitry, which, when executed, cause the processing circuitry to perform the steps of the preceding method. The computer executable instructions may also include instructions from one or more of the other computer-readable media disclosed herein.

An electronic device for outputting a machine-identifiable tag comprising machine-identifiable data is disclosed, wherein the machine-identifiable data is indicative of a transaction such that an additional electronic device interpreting the tag can perform the transaction. The electronic device or functionality thereof may be combined with one or more of the disclosed electronic devices and/or be configured to perform the functionality thereof.

The machine-identifiable tag output by the electronic device may comprise a non-visual and/or a non-radio-frequency detectable tag.

The electronic device may generate an additional output associated with a product which is the subject of the transaction. This output can complement the machine-identifiable tag.

The additional output by the electronic device may comprise one or more of: an image, audio and/or video associated with or indicative of the product.

The electronic device may generate the machine-identifiable tag comprising an audio tag for inclusion in the audio stream which is output, the audio tag being indicative of the transaction. Such a tag is more intuitive which allows the user to better understand how to obtain the data contained therein.

The electronic device may generate the machine-identifiable tag comprising an odor tag and output said odor tag. Such a tag is more intuitive which allows the user to better understand how to obtain the data contained therein.

The audio tag generated by the electronic device may comprise a watermark specifically generated and indicative of the transaction.

The watermark generated by the electronic device may comprise a pre-defined analogue or digital signal embedded within an underlying audio waveform representative of the audio tag.

The pre-defined analogue or digital signal generated by generated by the electronic device may be implemented in the time or frequency domain of the audio waveform.

The pre-defined analogue or digital signal generated by the electronic device may be extracted using signal processing techniques.

A method of providing a machine-identifiable tag in response to a request is disclosed, the method comprising the steps of, receiving a request for a machine-identifiable tag from a requestor, determining whether the machine-identifiable tag exists in a reverse proxy, if it is determined that the machine-identifiable tag exists in the reverse proxy, outputting the machine-identifiable tag from the reverse proxy in response to one or more requests for the machine-identifiable tag, if it is determined that the machine-identifiable tag does not exist in the reverse proxy, encoding a machine-identifiable tag as inline data, transmitting the inline data to the requestor and storing the machine-identifiable tag in a reverse proxy. This method may be combined with one or more of the other methods disclosed herein.

The method may comprise receiving the request for a machine-identifiable tag over an encrypted connection and wherein the receiving step further comprises terminating the encrypted connection.

The machine-identifiable tag of the method may have a defined time to live and wherein the machine-identifiable tag is removed from the reverse proxy once the time to live of the machine-identifiable tag has expired.

The step of storing the machine-identifiable tag of the method may comprise associating, in the reverse proxy, the machine-identifiable tag with at least one item of unique information.

The at least one piece of unique information of the method may comprise one or more of: a product code, a date, a time and a location.

The machine-identifiable tag of the method may comprise a scanable code, such as a QR code. This can be easily identified by the electronic device.

The machine-identifiable tag of the method may be configured to be interpreted by an electronic device.

The method may comprise initiating a transaction between a user of the electronic device and a transacting entity upon interpretation of the machine-identifiable tag by the electronic device.

The machine-identifiable tag of the method may be displayed on a display in communication with the requestor.

The machine-identifiable tag of the method may be displayed in the display via a web browser which is implemented by the requestor.

The requestor of the method may comprise the web browser.

The method may comprise requesting the request for the machine-identifiable tag according to client-side script provided on a web page displayed by the web browser.

The machine-identifiable tag of the method may be displayed on an online shopping web page.

An electronic device is disclosed comprising processing circuitry configured to perform the steps of the preceding method. The electronic device or functionality thereof may be combined with one or more of the disclosed electronic devices and/or be configured to perform the functionality thereof.

A computer-readable medium comprising computer executable instructions is disclosed which when executed by processing circuitry cause the processing circuitry to perform the steps of the preceding method. The computer executable instructions may also include instructions from one or more of the other computer-readable media disclosed herein.

A machine-identifiable tag provider is disclosed which comprises processing circuitry configured to: receive a request for a machine-identifiable tag from a requestor, determine whether the machine-identifiable tag exists in a reverse proxy, if it is determined that the machine-identifiable tag exists in the reverse proxy, output the machine-identifiable tag from the reverse proxy in response to requests for the machine-identifiable tags, if it is determined that the machine-identifiable tag does not exist in the reverse proxy, encode a machine-identifiable tag as data, transmit the data to the requestor and store the machine-identifiable tag in the reverse proxy. The machine-identifiable tag provider may be an electronic device, such as a server device. The server device or functionality thereof may be combined with one or more of the disclosed server devices and/or be configured to perform the functionality thereof.

The machine-identifiable tag generator may comprise a memory, wherein the processing circuitry is in communication with the memory.

A method of requesting a machine-identifiable tag is disclosed, the method comprising the steps of, periodically sending a request for a machine-identifiable tag with a defined time to live to a machine-identifiable tag generator, receiving the machine-identifiable tag from a reverse proxy if the machine-identifiable tag exists on the reverse proxy, and outputting the machine-identifiable tag. This method may be combined with one or more of the other methods disclosed herein.

The step of outputting of the method may comprise displaying the received machine-identifiable tag on a display.

The machine-identifiable tag of the method may be displayed in the display via a web browser.

The machine-identifiable tag of the method may be requested via a client-side script provided on a web page displayed by the web browser.

An electronic device comprising processing circuitry configured to perform the steps of the preceding method.

A computer-readable medium comprising computer executable instructions which when executed by processing circuitry cause the processing circuitry to perform the steps of the methods of the preceding method.

A machine-identifiable tag requestor is disclosed comprising processing circuitry configured to: periodically send a request for a machine-identifiable tag with a defined time to live to a machine-identifiable tag generator, receive the machine-identifiable tag from a reverse proxy if the machine-identifiable tag exists on the reverse proxy, and output the machine-identifiable tag. The machine-identifiable tag requestor may be an electronic device, such as a user operated electronic device. The electronic device or functionality thereof may be combined with one or more of the disclosed electronic devices and/or be configured to perform the functionality thereof.

A method of generating a machine-identifiable tag is disclosed comprising the steps of: receiving a request for a machine-identifiable tag from a requestor, if a machine-identifiable tag corresponding to the request does not already exist in a memory, generating a machine-identifiable tag with a defined time to live, storing the machine-identifiable tag in the memory, and removing the machine-identifiable tag from the memory once the machine-identifiable tag's time to live has expired. Hence, every generated tag is not stored indefinitely. This method may be combined with one or more of the other methods disclosed herein.

The step of storing the machine-identifiable tag of the method comprises associating, in the memory, the machine-identifiable tag with at least one item of unique information. Thus, the process corresponding to the instance of the machine-identifiable tag can be identified.

The at least one item of unique information of the method may be one or more of: a product code, a date, a shop identifier, a time and a location.

The method may further comprise receiving the request for the machine-identifiable tag periodically.

The method may further comprise sending the machine-identifiable tag to the requestor once it has been generated.

The machine-identifiable tag of the method may comprise a scanable code, such as a QR code.

The machine-identifiable tag of the method is configured to be interpreted by an electronic device.

The method may comprise initiating a transaction between a user of the electronic device and a transacting entity is upon interpretation of the machine-identifiable tag by the electronic device.

The machine-identifiable tag of the method may be displayed on a display in communication with the requestor.

The machine-identifiable tag may be displayed in the display via a web browser which is implemented by the requestor.

The requestor of the method may comprise the web browser.

The method may comprise requesting the request for the machine-identifiable tag according to client-side script provided on a web page displayed by the web browser.

The machine-identifiable tag of the method may be displayed on an online shopping web page.

An electronic device is disclosed which comprises processing circuitry configured to perform the steps of the preceding method. The electronic device may be a server device which generates the machine-identifiable tag. The server device or functionality thereof may be combined with one or more of the server devices disclosed herein and/or be configured to perform the functionality thereof.

A computer-readable medium is disclosed which comprises computer executable instructions which when executed by processing circuitry cause the processing circuitry to perform the steps of the preceding method. The computer executable instructions may also include instructions from one or more of the other computer-readable media disclosed herein.

A machine-identifiable tag generator is disclosed which comprises processing circuitry configured to: receive a request for a machine-identifiable tag from a requestor, if a machine-identifiable tag corresponding to the request does not already exist in a memory, generate a machine-identifiable tag with a defined time to live, store the machine-identifiable tag in the memory, remove the machine-identifiable tag from the memory once the machine-identifiable tag's time to live has expired. Hence, every generated tag is not stored indefinitely. The machine-identifiable tag generator may be an electronic device, such as a server device. The server device or functionality thereof may be combined with one or more of the server devices disclosed herein and/or be configured to perform the functionality thereof.

The machine-identifiable tag generator may comprise a memory, wherein the processing circuitry is in communication with the memory.

A method of requesting a machine-identifiable tag is disclosed which comprises the steps of: periodically sending a request for a machine-identifiable tag with a defined time to live to a machine-identifiable tag generator, receiving the machine-identifiable tag if a preceding machine-identifiable tag's time to live has not expired, and outputting the machine-identifiable tag. This method may be combined with one or more of the other methods disclosed herein.

The outputting of the method may further comprise displaying the received machine-identifiable tag on a display.

The machine-identifiable tag of the method may be displayed in the display via a web browser.

The method may comprise requesting the request for the machine-identifiable tag via a client-side script provided on a web page displayed by the web browser.

An electronic device is disclosed which comprises processing circuitry configured to perform the steps of the preceding method. The electronic device may be a server device which generates the machine-identifiable tag. The server device or functionality thereof may be combined with one or more of the server devices disclosed herein and/or be configured to perform the functionality thereof.

A computer-readable medium is disclosed which comprises computer executable instructions which when executed by processing circuitry cause the processing circuitry to perform the steps of the preceding method. The computer executable instructions may also include instructions from one or more of the other computer-readable media disclosed herein.

A machine-identifiable tag requestor is disclosed which comprises processing circuitry configured to periodically send a request for a machine-identifiable tag with a defined time to live to a machine-identifiable tag generator, receive the machine-identifiable tag if a preceding machine-identifiable tag's time to live has expired, and output the machine-identifiable tag. The machine-identifiable tag generator may be an electronic device, such as a server device, or user operated electronic device. The user operated electronic device or server device, or functionality thereof may be combined with one or more of the user operated electronic or server devices disclosed herein and/or be configured to perform the functionality thereof.

A computer-readable medium is disclosed comprising computer executable instructions which when executed by processing circuitry cause the processing circuitry to perform the steps of the preceding method. The computer executable instructions may also include instructions from one or more of the other computer-readable media disclosed herein.

A machine-identifiable tag generator is disclosed which comprises: processing circuitry configured to: receive a request for a machine-identifiable tag from a requestor, if a machine-identifiable tag corresponding to the request does not already exist in a memory, generate a machine-identifiable tag with a defined time to live, store the machine-identifiable tag in the memory, remove the machine-identifiable tag from the memory once the machine-identifiable tag's time to live has expired. Hence, every generated tag is not stored indefinitely. The machine-identifiable tag generator may be an electronic device, such as a server device, or user operated electronic device. The user operated electronic device or server device, or functionality thereof may be combined with one or more of the user operated electronic or server devices disclosed herein and/or be configured to perform the functionality thereof.

The machine-identifiable tag generator may comprise a memory, wherein the processing circuitry is in communication with the memory.

A method of requesting a machine-identifiable tag is disclosed, comprising the steps of periodically sending a request for a machine-identifiable tag with a defined time to live to a machine-identifiable tag generator, receiving the machine-identifiable tag if a preceding machine-identifiable tag's time to live has not expired, and outputting the machine-identifiable tag. This method may be combined with one or more of the other methods disclosed herein.

The outputting of the method may further comprise displaying the received machine-identifiable tag on a display.

The machine-identifiable tag of the method may be displayed in the display via a web browser.

The method may comprise requesting the request for the machine-identifiable tag via a client-side script provided on a web page displayed by the web browser.

A electronic device is disclosed comprising processing circuitry configured to perform the steps of the preceding method. The electronic device may be a server device, or user operated electronic device. The user operated electronic device or server device, or functionality thereof may be combined with one or more of the user operated electronic or server devices disclosed herein and/or be configured to perform the functionality thereof.

A computer-readable medium is disclosed comprising computer executable instructions which when executed by processing circuitry cause the processing circuitry to perform the steps of the preceding method. The computer executable instructions may also include instructions from one or more of the other computer-readable media disclosed herein.

A machine-identifiable tag requestor comprising processing circuitry configured to: periodically send a request for a machine-identifiable tag with a defined time to live to a machine-identifiable tag generator, receive the machine-identifiable tag if a preceding machine-identifiable tag's time to live has expired, and output the machine-identifiable tag. The machine-identifiable tag generator may be an electronic device, such as a server device. The server device or functionality thereof may be combined with one or more of the server devices disclosed herein and/or be configured to perform the functionality thereof.

A method of processing a machine-identifiable tag is disclosed, the method comprising the steps of: generating an instance of a machine-readable tag, wherein the machine-readable tag comprises data unique to the instance of the machine-identifiable tag; identifying, with an electronic device, an identifier corresponding to the instance of the machine-readable tag, sending the identifier to a tag validation device which is configured to participate in a transaction associated with the instance of the machine-identifiable tag, wherein the machine-identifiable tag does not comprise data relating to the transaction itself. Since the tag comprises an identifier, and not data relating to the transaction itself, and given that the identifier is known only to the validation device, the tag is inherently secure. This method may be combined with one or more of the other methods disclosed herein.

The data unique to the instance of the machine-identifiable tag of the method may comprise a Uniform Resource Locator ("URL").

The Uniform Resource Locator of the method may comprise a location of the tag validation device and the identifier unique to the instance of the machine-identifiable tag.

Therefore, the electronic device can send the identifier to the validation device.

The data relating to the transaction itself which is not comprised in the machine-identifiable tag of the method may comprise one or more of: product information, a product identifier, product quantity, a URL on which the instance of the machine-identifiable tag is located, user information, and a delivery or shipping information. Omission of this type of data from the tag results in a more secure tag.

The machine-identifiable tag of the method may comprise a scanable code, such as a QR code. This can be easily identified by the electronic device.

An electronic device is disclosed which comprises processing circuitry configured to perform the steps of the preceding method. The electronic device may be a server device, or user operated electronic device. The user operated electronic device or server device, or functionality thereof may be combined with one or more of the user operated electronic or server devices disclosed herein and/or be configured to perform the functionality thereof.

A computer-readable medium is disclosed comprising computer executable instructions executable by processing circuitry, which, when executed, cause the processing circuitry to perform the steps of the preceding method. The computer executable instructions may also include instructions from one or more of the other computer-readable media disclosed herein.

A validation server for initiating a transaction is disclosed, the validation server is configured to generate an instance of a machine-identifiable tag, wherein the a machine-identifiable tag comprises data unique to the instance of the machine-identifiable tag, receive from an electronic device an identifier corresponding to the instance of the machine-identifiable tag, initiate a transaction associated with the instance of the machine-identifiable tag, and wherein the machine-identifiable tag does not comprise data relating to the transaction itself. Since the tag comprises an identifier, and not data relating to the transaction itself, and given that the identifier is known only to the validation device, the tag is inherently secure. The validation server or functionality thereof may be combined with one or more of the server devices disclosed herein and/or be configured to perform the functionality thereof.

The data unique to the instance of the machine-identifiable tag generated by the validation device may comprise a Uniform Resource Locator ("URL").

The Uniform Resource Locator generated by the validation device may comprise a location of the tag validation device and the identifier unique to the instance of the machine-identifiable tag. Therefore, the electronic device identifying the machine-identifiable tag can send the identifier to the validation device.

The data relating to the transaction itself which is not comprised in the machine-identifiable tag generated by the validation device may comprise one or more of: product information, a product identifier, product quantity, a URL on which the instance of the machine-identifiable tag is located, user information, and a delivery or shipping information. Omission of this type of data from the tag results in a more secure tag.

The machine-identifiable tag generated by the validation device may comprise a scanable code, such as a QR code. This can be easily identified by the electronic device.

An electronic device for requesting a transaction is disclosed, the electronic device configured to identify, in a machine-identifiable tag, data unique to the instance of the machine-identifiable tag, send an identifier corresponding to the instance of the machine-identifiable tag to a validation server to initiate the transaction associated with the instance of the machine-identifiable tag, and wherein the electronic device does not send data relating to the transaction itself. Since the tag comprises an identifier, and not data relating to the transaction itself, and given that the identifier is known only to the validation device, the tag is inherently secure. The electronic device may be a user operated electronic device. The electronic device or functionality thereof may be combined with one or more of the disclosed electronic devices and/or be configured to perform the functionality thereof.

The data unique to the instance of the machine-identifiable tag identified by the electronic device may comprise a Uniform Resource Locator ("URL").

The Uniform Resource Locator identified by the electronic device may comprise a location of the tag validation device and the identifier unique to the instance of the machine-identifiable tag. Therefore, the electronic device identifying the machine-identifiable tag can send the identifier to the validation device.

The data relating to the transaction itself which is not comprised in the machine-identifiable tag identified by the electronic device may comprise one or more of: product information, a product identifier, product quantity, a URL on which the instance of the machine-identifiable tag is located, user information, and a delivery or shipping information. Omission of this type of data from the tag results in a more secure tag.

The machine-identifiable tag identified by the electronic device may comprise a scanable code, such as a QR code. This can be easily identified by the electronic device.

A method of authenticating an electronic device with a validation device for participating in a transaction is disclosed, the method comprising: obtaining user data at a tag output device, outputting a machine-identifiable tag via the tag output device, wherein the machine-identifiable tag comprises data instructing the electronic device to send authentication data to a validation device, sending the user data to the validation device, identifying the data instructing the electronic device to send authentication data to a validation device via the machine-identifiable tag with the electronic device, and sending the authentication data from the electronic device to the identified validation device to associate the electronic device with the user data. This means that only a device which is authenticated with the validation device can participate in transactions. This method may be combined with one or more of the other methods disclosed herein.

The method may further comprise outputting with the tag output device information identifying the electronic device when the electronic device identifies the machine-identifiable tag. This provides a user of the electronic device with feedback that the electronic device is being authenticated.

The method may further comprise outputting information indicative of the electronic device being associated and/or and the user with which the electronic device is associated. This provides a user of the electronic device with specific feedback that the electronic device is being authenticated.

The user data of the method may further comprise one or more of: a user's name, postal address, email address, phone number, and payment information, such as credit or debit card details. This is tethered to authenticated electronic device so that it can subsequently participate in transactions.

The authentication data of the method may be unique to the electronic device. This allows this device to be uniquely authenticated.

The method may comprise at the tag output device, outputting a reference to a resource from which the electronic device can obtain software executable on the electronic device for sending data to the validation device when the software identifies the machine-identifiable tag. The electronic device is thus capable of obtaining all the information needed to authenticate the device.

The machine-identifiable tag of the method may comprise the reference to a resource. The electronic device is thus capable of obtaining all the information needed to authenticate the device from the tag itself.

The reference of the method may comprise a Uniform Resource Locator ("URL").

The method may further comprise the step of revoking via the validation device the association of the electronic device with the user data. Such a device can no longer participate in a transaction.

The method may further comprise, upon registration and authentication of the electronic device, participating in a transaction via the electronic device by identifying a further machine-identifiable tag and sending information of the further machine-identifiable tag and information identifying the electronic device to the validation device. An electronic device can participate in a transaction by identifying a further machine-identifiable tag since the electronic device is now authenticated to do so.

The further machine-identifiable tag of the method may comprise a scanable code, such as a QR code. This can be easily identified by the electronic device.

The machine-identifiable tag of the method may comprise a scanable code, such as a QR code. This can be easily identified by the electronic device.

A system is disclosed comprising processing circuitry configured to perform the steps of the preceding method. The system may comprise the tag output device and the electronic device which may be a user operated electronic device. The system may further comprise the validation device.

An electronic device for authenticating the electronic device with a validation device is disclosed, the electronic device comprising processing circuitry configured to: identify an instruction to send authentication data to a validation device from a machine-identifiable tag, and send the authentication data from the electronic device to the validation device to associate the electronic device with user data input at a tag output device which outputs the machine-identifiable tag. This means that only a device which is authenticated with the validation device can participate in transactions. The electronic device may be a user operated electronic device. The electronic device or functionality thereof may be combined with one or more of the disclosed electronic devices and/or be configured to perform the functionality thereof. The electronic device, tag output device and validation device may be comprised within a system.

The tag output device may output information identifying the electronic device when the electronic device identifies the machine-identifiable tag. This provides a user of the electronic device with feedback that the electronic device is being authenticated.

The tag output device may output information indicative of the electronic device being associated and/or and the user with which the electronic device is associated. This provides a user of the electronic device with specific feedback that the electronic device is being authenticated.

The user data may input at the tag output device may further comprise one or more of: a user's name, postal address, email address, phone number, and payment information, such as credit or debit card details. This is tethered to authenticated electronic device so that it can subsequently participate in transactions.

The authentication data sent by the electronic device may be unique to the electronic device. This allows this device to be uniquely authenticated.

The tag output device may output a reference to a resource from which the electronic device can obtain software executable on the electronic device for sending data to the validation device when the software identifies the machine-identifiable tag. The electronic device is thus capable of obtaining all the information needed to authenticate the device.

The machine-identifiable tag at the tag output device may comprise the reference to a resource. The electronic device is thus capable of obtaining all the information needed to authenticate the device from the tag itself.

The reference may comprise a Uniform Resource Locator ("URL").

The electronic device may via the validation device have its association with the user data revoked. Such a device can no longer participate in a transaction.

Upon registration and authentication of the electronic device, the electronic device may participate in a transaction by identifying a further machine-identifiable tag and sending information of the further machine-identifiable tag and information identifying the electronic device to the validation device. An electronic device can participate in a transaction by identifying a further machine-identifiable tag since the electronic device is now authenticated to do so.

The further machine-identifiable tag identified by the electronic device may comprise a scanable code, such as a QR code. This can be easily identified by the electronic device.

The machine-identifiable tag identified by the electronic device may comprise a scanable code, such as a QR code. This can be easily identified by the electronic device.

A validation device for authenticating an electronic device with the validation device is disclosed, the validation device comprising: processing circuitry configured to: receive authentication data from an electronic device, associate the electronic device with user data input at a tag output device from which the electronic device obtains a machined-identifiable tag comprising data to instruct the electronic device to send authentication, and authenticate the electronic device. The validation device may be a server device, such as a validation server. The server device, or functionality thereof may be combined with one or more of the server devices disclosed herein and/or be configured to perform the functionality thereof.

The tag output device may output information identifying the electronic device when the electronic device identifies the machine-identifiable tag. This provides a user of the electronic device with feedback that the electronic device is being authenticated.

The tag output device may output information indicative of the electronic device being associated and/or and the user with which the electronic device is associated. This provides a user of the electronic device with specific feedback that the electronic device is being authenticated.

The user data may input at the tag output device may further comprise one or more of: a user's name, postal address, email address, phone number, and payment information, such as credit or debit card details. This is tethered to authenticated electronic device so that it can subsequently participate in transactions.

The authentication data sent by the electronic device may be unique to the electronic device. This allows this device to be uniquely authenticated.

The tag output device may output a reference to a resource from which the electronic device can obtain software executable on the electronic device for sending data to the validation device when the software identifies the machine-identifiable tag. The electronic device is thus capable of obtaining all the information needed to authenticate the device.

The machine-identifiable tag at the tag output device may comprise the reference to a resource. The electronic device is thus capable of obtaining all the information needed to authenticate the device from the tag itself.

The reference may comprise a Uniform Resource Locator ("URL").

The electronic device may via the validation device have its association with the user data revoked. Such a device can no longer participate in a transaction.

Upon registration and authentication of the electronic device, the electronic device may participate in a transaction by identifying a further machine-identifiable tag and sending information of the further machine-identifiable tag and information identifying the electronic device to the validation device. An electronic device can participate in a transaction by identifying a further machine-identifiable tag since the electronic device is now authenticated to do so.

The further machine-identifiable tag identified by the electronic device may comprise a scanable code, such as a QR code.

A machine-identifiable tag output device is disclosed, comprising: a display and processing circuitry in communication with the display, wherein the display is configured to output a machine-identifiable tag for identifying by an electronic device for use in initiating an electronic transaction, and wherein upon detection of a pending transaction processing message, the processing circuitry causes the output on the display to be modified to indicate that the processing of a transaction is in progress. The user of the electronic device is thus provided with feedback that the electronic device has successfully initiated a transaction, which is subsequently processed. The machine-identifiable tag output device is an electronic device which may be combined with one or more of the user operated electronic or server devices disclosed herein and/or be configured to perform the functionality thereof.

The processing circuitry of the device may be configured to: upon detection of a transaction completion message, cause the display to be modified to indicate that the transaction has been completed.

A machine-identifiable tag output device is disclosed, comprising: a display and processing circuitry, wherein the display is configured to output a machine-identifiable tag for identifying by an electronic device for use in initiating an electronic transaction, and wherein upon detection of a transaction completion message, the processing circuitry is configured to cause the display to be modified to indicate that the transaction has been completed. The user of the electronic device is thus provided with feedback that the electronic device has successfully initiated a transaction, which is subsequently completed. The machine-identifiable tag output device is an electronic device which may be combined with one or more of the user operated electronic or server devices disclosed herein and/or be configured to perform the functionality thereof.

The processing circuitry of the device may be configured to, upon detection of a pending transaction processing message, cause the output on the display to be modified to indicate that the processing of a transaction is in progress.

The processing circuitry of the device may be configured to cause the output on the display to be modified to provide identification information on the display upon detection of the pending transaction processing message.

The provided identification information may comprise personal information which is related and/or unique to the user of the electronic device.

The provided identification information may comprise information which is related and/or unique to the electronic device.

The device may initiate the transaction following interpretation of the machine-identifiable tag displayed on the display by the electronic device.

The machine-identifiable tag displayed on the display may be a machine-readable code, such as a scanable code, for example a QR code or a bar code. This can be easily identified by the electronic device.

A system for processing transactions is disclosed, comprising: the machine-identifiable tag output device as hereinbefore described in its first aspect above, a tag validation device, and an electronic device configured to identify the machine-identifiable tag output on the display, wherein the electronic device and machine-identifiable tag output device are in communication with the tag validation device, wherein the electronic device is configured, upon identification of the machine-identifiable tag output by the machine-identifiable tag output device, to transmit first data pertaining to the identified machine-identifiable tag and second data identifying the electronic device or a user thereof to the tag validation device, wherein the tag validation device is configured, upon receipt of the first data and second data, to initiate transaction processing for a product identified by the first data based on transaction processing information corresponding to the second data and transmits the pending transaction processing message to the tag output device. The user of the electronic device is thus provided with feedback that the electronic device has successfully initiated a transaction, which is subsequently processed. The system may also include aspects of one or more of the other systems disclosed herein.

A system for processing transactions is disclosed, comprising: the machine-identifiable tag output device as hereinbefore described in its second aspect above, a tag validation device, and an electronic device configured to identify the machine-identifiable tag output on the display, wherein the electronic device and machine-identifiable tag output device are in communication with the tag validation device, wherein the electronic device is configured, upon identification of the machine-identifiable tag output by the machine-identifiable tag output device, to transmit first data pertaining to the identified machine-identifiable tag and second data identifying the electronic device or a user thereof to the tag validation device, wherein the tag validation device is configured, upon receipt of the first data and second data, to initiate transaction processing for a product identified by the first data based on transaction processing information corresponding to the second data, wherein upon satisfactory completion of the transaction processing, the tag validation device transmits the transaction completion message to the tag output device. The user of the electronic device is thus provided with feedback that the electronic device has successfully initiated a transaction, which is subsequently completed. The system may also include aspects of one or more of the other systems disclosed herein.

The tag validation device may be configured to transmit a transaction failure message to the tag output device when it is determined that the transaction processing cannot be completed following its initiation, wherein the processing circuitry of the tag output device is configured to modify the display to indicate that the transaction processing has failed. Therefore, the user of the electronic device will know that the electronic device was unable to initiate a successful transaction.

The system may further comprise a transaction processing device configured to receive the transaction processing information from the tag validation device to perform the transaction processing, and transmit a notification of completion or failure of the transaction processing to the tag validation device. Therefore, the user of the electronic device will know that the electronic device was unable to initiate a successful transaction.

A method of processing transactions is disclosed comprising: identifying with an electronic device a machine-identifiable tag output on a display of a tag output device, upon identification of the machine-identifiable tag output by the machine-identifiable tag output device, transmitting by the electronic device first data pertaining to the identified machine-identifiable tag and second data identifying the electronic device or a user thereof to a tag validation device, upon receipt of the first data and second data by the tag validation device, initiating transaction processing for a product identified by the first data based on transaction processing information corresponding to the second data, transmitting a pending transaction processing message from the tag validation device to the tag output device, and upon receipt of the pending transaction processing message by the tag output device, modifying the output of the display to indicate that the transaction processing is in progress. The user of the electronic device is thus provided with feedback that the electronic device has successfully initiated a transaction, which is subsequently processed. This method may be combined with one or more of the other methods disclosed herein.

A method of processing transactions comprising: identifying the machine-identifiable tag output on the display with an electronic device, upon identification of the machine-identifiable tag output by the machine-identifiable tag output device, transmitting by the electronic device first data pertaining to the identified machine-identifiable tag and second data identifying the electronic device or a user thereof to a tag validation device, upon receipt of the first data and second data by the tag validation device, initiating transaction processing for a product identified by the first data based on transaction processing information corresponding to the second data, initiating transaction processing for a product identified by the first data based on transaction processing information corresponding to the second data, upon satisfactory completion of the transaction processing, transmitting a transaction completion message from the tag validation device to the tag output device, and upon receipt of the transaction completion message by the tag output device, modifying the output of the display to indicate that the transaction processing is complete. The user of the electronic device is thus provided with feedback that the electronic device has successfully initiated a transaction, which is subsequently completed. This method may be combined with one or more of the other methods disclosed herein.

An electronic device is disclosed comprising processing circuitry configured to perform the steps of either of the previous two methods.

A computer-readable medium comprising computer executable instructions executable by processing circuitry is disclosed, which, when executed, cause the processing circuitry to perform the steps of either of the previous two methods.

A method for performing an electronic transaction is disclosed, the method comprising steps of: receiving, at a server from an electronic device, payment instrument verification data associated with a payment instrument; combining, at the server, the verification data with payment instrument data pertaining to the payment instrument; and initiating the electronic transaction with the combined data.

A method for performing an electronic transaction is disclosed, the method comprising steps of: sending, from an electronic device to a server, verification data associated with a payment instrument for combining with the payment instrument data stored at the server.

A method for performing an electronic transaction is disclosed, the method comprising steps of: sending, from an electronic device, verification data associated with a payment instrument to a server; receiving the verification data at the server; obtaining, at the server, payment instrument data pertaining to the payment instrument; combining, at the server, the verification data with the data pertaining to the payment instrument to initiate a transaction; and initiating the electronic transaction with the combined data.

In existing systems, payment instrument information may be stored on a particular system, but additional verification information has to be manually entered when it is desired to initiate an electronic transaction. The aforementioned methods for performing such transactions permit an electronic device to store and send the associate verification information and thus reduce the interaction of a user with the transaction process.

Prior to the step of sending from the electronic device, the method may further comprise requesting a biometric authentication at the electronic device and proceeding with the step of sending the verification data only if a valid authentication of a user associated with the electronic device via the biometric authentication is determined. The biometric authentication may comprise a fingerprint authentication at the electronic device.

The payment instrument data may not comprise the verification data. The verification data may comprise a payment instrument verification data, such as Card Security Code (CSC), e.g. Card Verification Value (CVV), and the payment instrument comprises a payment card. The verification data may not be stored on the server prior to it being received by the server. The verification data may be stored on the electronic device.

The payment instrument data may comprise at least one of: a payment card number; at least one date associated with the payment card; an issue number associated with the payment card; at least one address associated with the payment card; at least one name associated with the payment card; and at least one identifier to indicate data pertaining to the payment means.

The payment instrument data may be stored at the server prior to it being received by the server.

The payment instrument data may be stored in memory at the server alongside identification data associated with the payment instrument, or is stored in memory at one or more additional servers and obtained upon request by the server.

The electronic device may send the identification data to the server, wherein the identification data identifies the payment instrument data pertaining to the payment instrument for combining with the verification data by performing a lookup of the verification data received from the electronic device in the memory.

The electronic device may store verification data and corresponding identification data for a plurality of payment instruments.

The electronic device may send data indicative of the electronic transaction which is to be performed to the server.

The verification data may be stored on the electronic device in memory in a first encrypted form.

The electronic device may decrypt the verification data in its memory using a first encryption-decryption algorithm associated with the electronic device.

The electronic device may encrypt the decrypted verification data into a second encrypted form using a second encryption-decryption algorithm associated with the server, and the step of sending comprises sending the encrypted verification data in its second encrypted form to the server.

The server may decrypt the re-encrypted verification data using the second encryption-decryption algorithm prior to combining it with the payment instrument data.

The combined data may be sent by the server to a transaction server for carrying out the electronic transaction.

The data pertaining to the payment instrument may be obtained by the server from one or more additional servers.

The payment instrument data may comprise a plurality of subsets of payment instrument data, each of which is obtained by the server from a separate additional server.

A computer-readable medium is disclosed comprising computer executable instructions executable by processing circuitry, which, when executed, cause the processing circuitry to perform the steps of the preceding method.

A server is disclosed comprising: processing circuitry configured to: receive from an electronic device, verification data associated with a payment instrument; combine the verification data with payment instrument data pertaining to the payment instrument; and initiate the electronic transaction with the combined data. The processing circuitry of the server may be further configured to perform the steps the preceding method.

A computer-readable medium is disclosed comprising computer executable instructions executable by processing circuitry, which, when executed, cause the processing circuitry to perform the steps of the preceding methods.

A user operable electronic device is disclosed comprising: processing circuitry configured to: send to a server, verification data associated with a payment instrument for combining with the payment instrument data stored at the server. The processing circuitry of the electronic device may be configured to perform the steps of the preceding method.

A system for performing an electronic transaction is disclosed comprising: the server; and the electronic device.

A method for configuring a wireless beacon is disclosed, the method comprising steps of: receiving, at an electronic device, identification information from a wireless beacon; sending, by the electronic device, an indication to a server that it has received the identification information; based on the identification information, receiving at the electronic device, configuration data for the beacon, from the server; and sending, by the electronic device, the configuration data to the wireless beacon.

A method for configuring a wireless beacon is disclosed, the method comprising steps of: receiving, at a server, an indication that an electronic device has detected identification information from a wireless beacon; based on the identification information, identifying, by the server, configuration data for the beacon; and sending, by the server, the configuration data to the electronic device.

A method for configuring a wireless beacon is disclosed, the method comprising steps of: receiving, at an electronic device, identification information from a wireless beacon; sending, by the electronic device, an indication to a server that it has received the identification information; receiving, at the server, an indication that an electronic device has detected the identification information from a wireless beacon; based on the identification information, identifying, by the server, configuration data for the beacon; sending, by the server, the configuration data to the electronic device; and sending, by the electronic device, the configuration data to the wireless beacon.

Wireless beacons are often located in locations where there may be no local network infrastructure or the operator of the beacons is different to the operator of the local network infrastructure. The aforementioned methods for configuring a wireless beacon overcome this problem by ensuring that beacons can be configured by electronic devices as they roam around locations where beacons are located. The electronic devices may be connected to their own network, but also be in communication with one or more wireless beacons. Thus, when the electronic device is in range of a beacon, it can pass configuration information to it for configuring it.

The method may further comprise performing by the beacon a configuration operation on the beacon with the configuration data.

The identification information may be of a first type, and the configuration operation may comprise configuring the beacon identification information to be of a second type. The identification information of the first type may be different to the identification information of the second type.

The identification information of the first type may comprise a first unique identifier, and the identification information of the second type may comprise a second unique identifier.

The first unique identifier may differ from the second unique identifier by at least one characteristic.

The at least one characteristic may comprise at least one of: a universally unique identifier (UUID), a major value, a minor value, an indication of a transmission power of the beacon, a beacon transmission interval, and a period of repetition.

The method may further comprise, following receipt of the configuration data at the wireless beacon, establishing a first mode of communication between the electronic device and the beacon.

The first mode of communication may bea unidirectional mode of communication whereby the electronic device is configured to transmit data to the beacon and the wireless beacon is configured to receive data from the beacon.

The method may further comprise, following receipt of the configuration data at the wireless beacon, establishing a second mode of communication between the electronic device and the beacon.

The second mode of communication may be a bidirectional mode of communication whereby the electronic device is configured to transmit data to the beacon and the wireless beacon is configured to receive data from the beacon, and transmit data to the electronic device.

The data transmitted to the beacon may comprise data associated with the beacon, such as a firmware update.

The wireless beacon may send and/or receive data to and/or from a remote device which is in communication with the electronic device via a communication interface of the electronic device.

The communication interface may be configured to communicate with the remote device over a network, such as a local area network (LAN), or wide area network (WAN), e.g. the Internet.

The communication interface may be configured to communicate with the remote device via a long-range wireless protocol, such as one or more of: LTE, UMTS, 3G, EDGE, GPRS, GSM and Wi-Fi, or equivalent protocols. In this regard and for the purposes of all embodiments herein concerning a long-range wireless protocol, a long-range wireless protocol may be a protocol which is capable and designed for communication over 5, 10, 20, 30, 40, 50, or 100m. This is in contrast to short-range wireless protocol mentioned below. The long-range wireless protocol may communicate based utilizing higher power than the short-range wireless protocol. The range (e.g. line of sight distance) between the long-range end nodes (electronic device and router or base station) for the long-range wireless protocol may be greater than the range (e.g. line of sight distance) between the short-range end nodes (e.g. electronic device and wireless beacon).

The data may be passed to and/or from a further device to which the beacon is in direct communication.

The wireless beacon may send and/or receive data for the further device via the communication interface of the electronic device to and/or from the remote device.

The beacon may be configured to communicate with the electronic device via a short-range wireless communications protocol (as discussed above in contrast to the long-range protocol).

The short-range wireless protocol may be Bluetooth, or Bluetooth Low Energy, or Bluetooth Smart, and the wireless beacon may be configured to communicate with the electronic device according to such a protocol. In this regard and for the purposes of all embodiments herein concerning a short-range wireless protocol, the short-range wireless protocol may be a protocol which is capable and designed for communication over less than 1, 5, 10, 20, 30, 40, 50, or 100m.

The configuration data may be sent to the wireless beacon by the electronic device under control of the server according to a schedule.

A computer-readable medium is disclosed comprising computer executable instructions executable by processing circuitry, which, when executed, cause the processing circuitry to perform the steps of the preceding method.

An electronic device for configuring a wireless beacon is disclosed, comprising: a first transceiver configured to receive identification information from a wireless beacon; a second transceiver configured to transmit an indication to a server that it has received the identification information from the wireless beacon, and in response receive from the server configuration data for configuring the wireless beacon; and wherein the first transceiver is configured to send the configuration data to the wireless beacon.

The electronic device may further comprise: processing circuitry in communication with the first and second transceivers and configured to perform the steps of the preceding method.

A communications system is disclosed comprising: the preceding electronic device; the preceding wireless beacon; and the server, wherein the electronic device and wireless beacon are each configured to communicate with each other, the server and electronic device are each configured to communicate with each other, and the server and wireless beacon are each configured to communicate with each other via the electronic device.

A method for mapping a plurality of local wireless transceivers located in disparate locations is disclosed, the method comprising steps of: receiving, at a computer-implemented registry, identification data for identifying a local wireless transceiver; receiving, at the computer-implemented registry, location data indicative of a location of the local wireless transceiver; associating, at the computer-implemented registry, the identification data with the location data for the local wireless transceiver; and storing, at the computer-implemented registry, the associated identification and location data in a profile associated with the local wireless transceiver.

A method for mapping a plurality of local wireless transceivers located in disparate locations is disclosed, the method comprising a step of: sending, from an electronic device to a computer-implemented registry, identification data for identifying a local wireless transceiver, wherein the identification data enables the computer-implemented registry to verify whether a profile associated with the local wireless transceiver exists, wherein the profile comprises location data corresponding to a location of the local wireless transceiver.

The local wireless transceiver is separate from the electronic device. It may be located in the vicinity of the electronic device in a particular location, such as a room, home, shop, factory, or office. It may be portable or mobile. The local wireless transceiver may be a wireless beacon. The local wireless transceiver may be comprised in: a local wireless enabled device, such as an electronic appliance, e.g. a smoke alarms, a thermometer, a weather sensor, a vehicle, a refrigerator, a washing machine, an oven, a heating system, a television display, a video or audio system.

The mapping of local wireless transceivers with an electronic device in the way outlined above, ensures that manual updating of a registry of beacons can be avoided. Distributed electronic devices operated by multiple users can be used so that, as users roam around locations where beacons are located, the registry is automatically updated in real time as the beacons are located by the devices.

The location data which is indicative of a location of the local wireless transceiver may be determined by the electronic device based on a location service of the electronic device and sent to the computer-implemented registry for storing. The location of the local wireless transceiver can be determined as the identified location of the electronic device, and this identified location for the local wireless transceiver is stored in the computer-implemented registry. In this way, the location of the local wireless transceiver is inferred from the location of the electronic device.

A method for locating an electronic device is disclosed, the method comprising steps of: receiving, at a computer-implemented registry, an indication that an electronic device has received identification data of a local wireless transceiver; identifying, at the computer-implemented registry, based on location data corresponding to a location of the identified local wireless transceiver stored at the computer-implemented registry, a location of the electronic device.

The method may further comprise storing the identified location of the electronic device in the computer-implemented registry.

The location of the electronic device may be determined as the identified location of the local wireless transceiver, or as a relative location with respect to the local wireless transceiver based on a signal power of the local wireless transceiver received by the electronic device.

The step of identifying may comprise: comparing, at the computer-implemented registry, the identification data with identification data of local wireless transceivers in the registry; and determining, at the computer-implemented registry, based on the identification data, location data corresponding to a location of the local wireless transceiver.

A method for locating an electronic device is disclosed, the method comprising steps of: receiving, at an electronic device, identification data from a local wireless transceiver; sending, from the electronic device, the identification data to a computer-implemented registry; and based on the identification data, receiving, at the electronic device, from the computer-implemented registry, a location associated with the electronic device.

The method may further comprise tracking locations of the electronic device by storing, at the computer-implemented registry, a plurality of identified locations of local wireless transceivers over time.

The computer-implemented registry may comprise a plurality of profiles, each profile associated with a respective local wireless transceiver.

Each profile may comprise data indicative of each of the electronic devices which have received a wireless broadcast from the profile's corresponding local wireless transceiver.

Each profile may comprise at least one data entry from a plurality of data entries, the plurality of data entries comprising at least one of: an unique identifier associated with the beacon, unique identifier characteristics, a universally unique identifier (UUID), a major value, a minor value, an indication of a transmission power of the beacon, a local wireless transceiver transmission interval and a period of repetition, data pertaining to: an owner/proprietor of the beacon, a manufacturer of the beacon, a beacon's service history, firmware version, previous locations of the beacon, a history an indication of a transmission power of the beacon, a local wireless transceiver transmission interval and a period of repetition which detected this beacon, a data file associated with each electronic device in the history an indication of a transmission power of the beacon, a local wireless transceiver transmission interval and a period of repetition, a local wireless transceiver device profile, an RSSI value, local wireless transceiver internal data comprising a time, a date, a zone of detection, a geo-location, a battery voltage, an external data from a mobile application which detected the beacon, data pertaining to the device or user thereof on which the mobile application is run, a profile, timestamps, and statistical analysis, a service provider of the beacon, and data associated with a device to which the local wireless transceiver is connected.

The location data may comprise at least one of: GPS coordinates, a latitude and a longitude, an address, and a name of a location.

The method may further comprise: receiving, at the computer-implemented registry, an indication that a broadcast from a local wireless transceiver has been detected by an electronic device; comparing, at the computer-implemented registry, the broadcast with information in the computer-implemented registry to determine whether a profile associated with the local wireless transceiver exists; if it is determined that a profile does not exist, creating, at the computer-implemented registry, a new profile based on the broadcast and location information associated with the electronic device; and if it is determined that a profile does exist, updating or verifying, at the computer-implemented registry, an existing profile based on the broadcast and location information associated with the electronic device.

The location information associated with the electronic device may be received at the computer-implemented registry from the electronic device.

A communication interface of the electronic device may be configured to communicate with the computer-implemented registry via a long-range wireless protocol, such as one or more of: LTE, UMTS, 3G, EDGE, GPRS, GSM and Wi-Fi, or equivalent protocols. In this regard and for the purposes of all embodiments herein concerning a long-range wireless protocol, a long-range wireless protocol may be a protocol which is capable and designed for communication over 5, 10, 20, 30, 40, 50, or 100m. This is in contrast to short-range wireless protocol mentioned below. The long-range wireless protocol may communicate based utilizing higher power than the short-range wireless protocol. The range

(e.g. line of sight distance) between the long-range end nodes (electronic device and router or base station) for the long-range wireless protocol may be greater than the range (e.g. line of sight distance) between the short-range end nodes (e.g. electronic device and wireless beacon).

Each local wireless transceiver may be configured to communicate with the electronic device via a short-range wireless communications protocol.

The local wireless transceiver may comprise a wireless beacon, such as a Bluetooth or Bluetooth Low Energy, or Bluetooth Smart beacon.

The local transceiver may be configured to communicate with the electronic device via a short-range wireless communications protocol (as discussed above in contrast to the long-range protocol).

The short-range wireless protocol may be Bluetooth, or Bluetooth Low Energy, or Bluetooth Smart, and the local wir4eless transceiver may be configured to communicate with the electronic device according to such a protocol. In this regard and for the purposes of all embodiments herein concerning a short-range wireless protocol, the short-range wireless protocol may be a protocol which is capable and designed for communication over less than 1, 5, 10, 20, 30, 40, 50, or 100m.

A computer-readable medium is disclosed comprising computer executable instructions executable by processing circuitry, which, when executed, cause the processing circuitry to perform the steps of the preceding method.

An electronic device is disclosed comprising: a transmitter configured to send to a computer-implemented registry, identification data indicative of a local wireless transceiver, wherein the identification data enables the computer-implemented registry to verify whether a profile associated with the local wireless transceiver exists within the registry, wherein the profile comprises location data corresponding to a location of the local wireless transceiver.

An electronic device is disclosed comprising: a receiver configured to receive identification data from a local wireless transceiver identifying the local wireless transceiver; a transceiver configured to transmit the identification data to a computer-implemented registry and based on the identification data receive from the computer-implemented registry, a location associated with the electronic device.

The electronic device may further comprise processing circuitry in communication with the transmitter or receiver and transceiver which is configured to perform the steps of the preceding method.

A processing device is disclosed comprising: a receiver configured to receive identification data for identifying a local wireless transceiver and location data indicative of a location of the local wireless transceiver; and processing circuitry configured to associate the identification data with the location data for the local wireless transceiver and storing in memory the associated identification and location data in a profile associated with the local wireless transceiver.

A processing device is disclosed comprising: a receiver configured to receive an indication that an electronic device has received identification data of a local wireless transceiver; and processing circuitry configured to identify based on location data corresponding to a location of the identified local wireless transceiver stored at the computer-implemented registry, a location of the electronic device.

The processing circuitry of the processing device may be in communication with the receiver and may be configured to perform the steps of the preceding method.

The processing device may itself be the computer-implemented registry.

A system comprising: the preceding electronic device; the preceding processing device; and the local wireless transceiver.

A method for facilitating communication via a network based on a wireless protocol is disclosed, the method comprising: receiving, by an electronic device, an indication that communication via the wireless protocol is available; upon receipt of the indication, connecting the electronic device to the network via the wireless protocol; and enabling communication across the network by the electronic device automatically providing access information for accessing the network.

A method for facilitating communication via a network based on a wireless protocol is disclosed, the method comprising: determining, at a server, that communication via the wireless protocol is available to an electronic device; and sending, by the server, an indication that communication via the wireless protocol is available to the electronic device, the indication comprising access information to enable the electronic device to automatically connect to the network.

Often electronic devices are not able to communicate over a particular network, such as a WiFi or cellular network, for example, they may be out of range or the cellular network or the signal strength may be low. The provision of additional networks in public spaces, for example merchant locations, such as shops, is of course possible, but this involves manually connecting to the local wireless network and providing additional access or logon information. The aforementioned methods for facilitating communication avoid the need for manually having to configure electronic devices for connection to local networks.

The methods for facilitating communication may further comprise: identifying, by the electronic device, a machine-identifiable tag indicative of an electronic transaction; and initiating the transaction via the electronic device.

The method may further comprise, upon receipt of the indication, the electronic device enabling a disabled wireless radio associated therewith for communication via the wireless protocol.

The enabling of the disabled wireless radio may further comprise executing a program on the electronic device in communication with an underlying operating system on which the program runs, and requesting by the program that the operating system enables the wireless radio.

The indication may comprise parameters for connection to an access point associated with the wireless protocol.

Automatically providing access information for the network may comprise providing the parameters to the access point.

The parameters may comprise at least one of: an SSID, an IP Address, a Subnet Mask, a Default Gateway, a DNS, a WPA, a WEP, and login information for the access point.

The indication may be received from a server upon the electronic device detecting identification data broadcast from a wireless beacon, wherein the identification data identifies the wireless beacon.

The indication may also be received from a server upon the electronic device providing location information of a wireless beacon to the server. The location information provided to the server may be an inferred location of the wireless beacon based on the identified location of the electronic device.

The indication may be received from the server via an alternative wireless network.

The alternative network may employs a wireless protocol, such as: LTE, UMTS, 3G, EDGE, GPRS, or GSM,

The identification data may comprise a unique identifier, and the electronic device may send the unique identifier to the server.

The server may determines, based on the unique identifier, that the beacon is transmitting in an area in which the wireless protocol is available.

Upon the server determining that the beacon is transmitting in an area in which the wireless protocol is available, the server may send the indication to the electronic device.

The unique identifier may comprise at least one characteristic from a plurality of characteristics, the plurality of characteristics comprising: a universally unique identifier (UUID), a major value, a minor value, an indication of a transmission power of the beacon, a beacon transmission interval, and a period of transmission repetition.

The electronic device may receive the indication from a wireless beacon.

The beacon may comprise a Bluetooth or Bluetooth Low Energy, or Bluetooth Smart beacon.

The electronic device may determine its location using a location service of the electronic device and sends its location to the server.

The server may determine, based on the location of the electronic device, that the electronic device in an area in which the wireless protocol is available.

Upon the server determining that the electronic device is an area in which the wireless protocol is available, the server may send the indication to the electronic device.

The wireless network may comprise a Wi-Fi network.

A user confirmation may be required on the electronic device before automatically providing the access information for the network.

A server is disclosed comprising: processing circuitry configured to determine that communication via a network based on a wireless protocol over a network is available to an electronic device and configured to send an indication that communication via the wireless protocol is available to the electronic device, the indication comprising access information to enable the electronic device to automatically connect to the network.

The processing circuitry of the server may be further configured to perform the steps of the preceding method.

An electronic device comprising: a first transceiver configured to receive an indication that communication via a network based on a wireless protocol is available; and a second transceiver configured for communication based on the wireless protocol; processing circuitry in communication with the first and second transceivers and configured, upon receipt of the indication, to connect the electronic device to the network via the wireless protocol with the second transceiver, wherein the processing circuitry is further configured to enable communication across the network by the electronic device automatically providing access information for accessing the network.

The processing circuitry may be further configured to perform the steps of the preceding method.

A wireless beacon is disclosed comprising: a transmitter configured to broadcast identification data, wherein the identification data identifies the wireless beacon for providing access information for an electronic device that communication via a network based on a wireless protocol is available.

The wireless beacon may further comprise processing circuitry in communication with the transmitter and may be further configured to perform the steps of the preceding method.

A system for facilitating communication via a network is disclosed based on a wireless protocol comprising: the preceding electronic device; the preceding server; and the preceding wireless beacon.

A method for initiating an electronic transaction is disclosed, the method comprising steps of: identifying, by an electronic device, a machine-identifiable tag indicative of an electronic transaction; requesting, by the electronic device, a confirmation to initiate the electronic transaction when the electronic device identifies the machine-identifiable tag; and initiating the transaction when the electronic device receives the confirmation. The request may be displayed on the electronic device.

Providing the ability to confirm the initiation of a transaction based on the reading of a machine-identifiable tag ensures that the correct transaction will be initiated since it is possible that a machine-identifiable tag for an incorrect transaction may have been identified by the electronic device, for example when multiple machine-identifiable tags are located in the vicinity of each other corresponding to different transactions.

A method for initiating an electronic transaction is disclosed, the method comprising steps of: receiving, at a server, an indication that an electronic device has identified a machine-identifiable tag indicative of an electronic transaction; sending, by the server, to the electronic a device a request to confirm initiation of the electronic transaction; and initiating the transaction when the electronic device receives the confirmation.

The confirmation may comprise a request for an input to the electronic device. The input may comprise an input on a touch sensitive display. The input may comprise an input to a microphone associated with the electronic device. The input may be a biometric input associated with a user of the electronic device. The biometric input may be a fingerprint input.

Only if the input is or is equivalent to a pre-determined input indicative of the confirmation to proceed with the transaction, may then the transaction be initiated. The input may be processed by processing circuitry of the electronic device to determine whether the input is or is equivalent to the predetermined input, wherein the predetermined input is stored in the electronic device.

Alternatively, the input may be transmitted to a remote device and processed by processing circuitry of the remote device to determine whether the input is or is equivalent to the predetermined input, and a flag indicative of whether or not the input is or is equivalent to the predetermined input is sent to the electronic device or server, wherein the predetermined input is stored in the remote device. The remote device may be the server.

The machine-identifiable tag may comprise executable instructions for processing by processing circuitry in the electronic device, and which when identified and executed by the processing circuitry, cause the device to communicate with the server, and obtain further instructions concerning the transaction from the server. The further instructions may comprise at least one of: display data relevant to the transaction; and request the confirmation to initiate the transaction.

The machine-identifiable tag may comprise an off-line tag. An off-line tag may be a tag which is physically printed on material for reading by the electronic device.

The step of initiating may comprise sending, by the electronic device, an instruction to the server to proceed with the electronic transaction which is indicated by the machine-identifiable tag.

A computer-readable medium is disclosed comprising computer executable instructions executable by processing circuitry, which, when executed, cause the processing circuitry to perform the steps of the preceding method.

A server is disclosed comprising: processing circuitry configured to: receive an indication that an electronic device has identified a machine-identifiable tag indicative of an electronic transaction; send to the electronic a device a request to confirm initiation of the electronic transaction; and initiate the transaction when the electronic device receives the confirmation. The processing circuitry may be further configured to perform the steps of the preceding method.

A user operable electronic device is disclosed comprising: processing circuitry configured to: identify a machine-identifiable tag indicative of an electronic transaction; request a confirmation to initiate the electronic transaction when the machine-identifiable tag has been identified; and initiate the transaction when the electronic device receives the confirmation.

In other embodiments, the user may be a small business owner or administrator. A plurality of mobile devices may be purchased, identified, coded with a unique identifier and issued to employees or agents of the business. The devices may include smart phones, mobile phones, navigation devices, mobile personal digital assistants, laptops, palmtops, netbooks, pagers, electronic books readers, music players and the like. When purchases are made, the unique identifiers allow easy separation of purchase amounts per each employee or agent and the appropriate charges or bills may be made to the customer accounts or client accounts of the business.

One embodiment is a method. The method includes steps of preparing a transaction facilitating platform with a plurality of physical machines, the transaction facilitating platform comprising at least one broadcasting beacon, at least one server, and at least one computer program with program instructions for facilitating transactions, the program instructions stored in a non-transitory memory operably connected to at least one server. The method also includes step of registering a plurality of users with the transaction facilitating platform, each user registering through a mobile device suitable for communicating with the transaction facilitating platform; improving a capability of the mobile device of each user by placing on the mobile device of each user a computer program application useful for communicating with the transaction facilitating platform; storing information of a payment method of each user of the plurality of users in a memory operably connected to the at least one server; distributing information from the plurality of merchants, the information including tags or codes selected from the group consisting of on-line codes and tags and offline codes and tags, each codes or tag being associated with a product type, and the least one broadcasting beacon further comprising a tag; and identifying uniquely a user contacting the transaction facilitating platform. The method also includes steps of contacting the application of the user useful for communicating with the transaction facilitating platform and the mobile device of the user sensing the beacon at a physical location of a merchant; triggering an event in the application on the mobile device of the user, based on the sensing of the beacon; and communicating the tag to the transaction facilitating platform.

Another embodiment includes a step of accepting an input from the user for specifying a payment method for purchasing an item, wherein the payment method is specified by selection from one or more payment methods stored in the memory operably connected to at least one server. In another embodiment, the input from the user is in response to a code or a tag for a particular product from a merchant using the application on the mobile device of the user for communicating with the transaction facilitating platform. In another embodiment, the beacon comprises a wireless personal area network having a capability of transmitting to a plurality of users within a limited range of the physical location of the merchant. In another embodiment, there is a further step of broadcasting an ID from the beacon to users within range of the beacon. Another method further comprises identifying a nearby user through a mobile device of the user and the application useful for communicating with the transaction facilitating platform.

In another method, there is a further step of communicating a signal to the identified user via the beacon. In another embodiment, there is a step of identifying a nearby user through a mobile device of the user and communicating a personalized message to the identified user, based on stored information about the user and a present location of the user. In another embodiment, there is a further step of storing a shipping address for each user of the plurality of users in the memory operably connected to the at least one server. In embodiments, there is a further step of accepting an input from the user for specifying a delivery address for the item, wherein the delivery address is specified by selecting from one or more delivery addresses stored in the memory operably connected to the at least one server.

Another embodiment is a method. The method includes steps of registering a plurality of users with a transaction facilitating platform, each user registering through a mobile device suitable for communicating with the transaction facilitating platform and improving a capability of the mobile device of each user by placing on the mobile device of each user a computer program application useful for communicating with the transaction facilitating platform. The method includes steps of storing information of a payment method of each user of the plurality of users in a memory operably connected to the at least one server; distributing information from the plurality of merchants, the information including tags or codes selected from the group consisting of on-line codes and tags and offline codes and tags, each tag or code being associated with a type of product of at least one of the merchants; identifying uniquely a user contacting the transaction facilitating platform; contacting the application of the user useful for communicating with the transaction facilitating platform and the mobile device of the user using at least one beacon to determine a position of the user at a physical location of a merchant; and receiving information from the at least one beacon, an on-line code or an on-line tag for a product from a merchant using the application on a mobile device of the user for communicating with the transaction facilitating platform.

Other embodiments include additional steps of the above method. In one embodiment, the method includes preparing the transaction facilitating platform with a plurality of physical machines, the transaction facilitating platform comprising the at least one beacon, at least one computer server, and at least one computer program with program instructions for performing e-commerce transactions, the program instructions stored in a non-transitory memory operably connected to the at least one server. In another embodiment, the at least one beacon is able to contact the application of the user when the mobile device of the user is within a 0 cm to 200 m range of the beacon. Another embodiment includes a step of contacting the user within range of the beacon and communicating a message to the user via the mobile device of the user. In another embodiment, there is a further step of accepting a response from the user for purchasing at least one item offered in the message to the user. Another embodiment includes uploading digital media content from the merchant to the user after a response from the user to the message.

Another embodiment is also a method. The method includes steps of receiving by at least one computer an application for transaction enablement on a mobile device of a user; associating with the at least one computer the mobile device of the user and the application for transaction enablement with identification information of the user; and contacting the application for transaction enablement and the mobile device of the user with a beacon at a physical location of a merchant. The method includes additional steps of distributing information from the plurality of merchants, the information including tags or codes selected from the group consisting of on-line codes and tags and offline codes and tags, each code or tag being associated with a type of product of at least one of the plurality of merchants; identifying uniquely a user contacting a transaction facilitating platform; contacting the application of the user useful for communicating with the transaction facilitating platform and the mobile device of the user by sensing a beacon at a physical location of a merchant; and transmitting information concerning product availability to the mobile device of the user.

Other embodiments involve additional steps of the above method. In one embodiment, there is a step of alerting the application that the mobile device of the user is within range of the physical location. Another embodiment includes directly sensing the beacon by the mobile device of the user through a path that avoids a network intermediary. Another embodiment includes a step of providing an offer to the user through the mobile device of the user and the application for transaction enablement. Another embodiment includes a step of paying for a desired product of the merchant using the transaction enablement application and the mobile device of the user. In another embodiment, the method includes steps of directly storing tag information for a desired product at the physical location on the mobile device of the user without benefit of a network connection; and retrieving information concerning the desired product using the tag information when the network connection is available.

Yet another embodiment is a method. The method includes steps of preparing a transaction facilitating platform with a plurality of physical machines, the transaction facilitating platform comprising at least one server and at least one computer program with program instructions for performing transaction facilitating transactions stored in a non-transitory memory operably connected to the at least one server; registering a plurality of merchants with the transaction facilitating platform; and registering a plurality of users with the transaction facilitating platform. The method also includes steps of storing information of shipping addresses and payment methods of the plurality of users in a memory operably connected to the at least one server; identifying uniquely a user contacting the transaction facilitating platform; distributing information from the plurality of merchants, the information including tags or codes selected from the group consisting of on-line codes and tags and offline codes and tags, each tag or code being associated with a product type of at least one of the plurality of merchants; scanning an on-line code, an off-line code, an on-line tag or an off-line tag for a product from a merchant using an application on a mobile device of the user for communicating with the transaction facilitating platform; accepting a first input from the user for selecting an item for purchase from the transaction facilitating platform; and accepting a second input from the user specifying a payment method for purchasing the item, wherein the payment method is specified by selection from one or more payment methods stored in the memory operably connected to the at least one server.

Other embodiments comprise additional methods as described herein with additional steps. In one additional embodiment, the method includes a step of placing an application for the transaction facilitating platform on a mobile device of the user, the application useful for interfacing with the transaction facilitating platform. In another method, the on-line code or tag is selected from the group consisting of an audio sequence, a visual image, a bar code, a quick response code, and a signal received from a beacon. Another method includes a step of storing a shipping address for each user of the plurality of users in the memory operably connected to the at least one server. In another embodiment, the off-line code or off-line tag comprises a tag selected from the group consisting of a visual tag, an audio tag, an RFID tag, a near-field communication (NFC) tag and a signal received from a beacon. Another embodiment includes a step of providing an offer to the user through a mobile device of the user and the application for transaction enablement. In another embodiment, the method includes paying for a desired product of the merchant using the transaction enablement application and the mobile device of the user. In another embodiment, the method includes additional steps of directly storing tag information for a desired product at the physical location of the mobile device of the user without benefit of a network connection; and retrieving information concerning the desired product using the tag information when the network connection is available.

Another embodiment is a method. The method includes steps of preparing a transaction facilitating platform with a plurality of physical machines, the transaction facilitating platform comprising at least one server and at least one computer program with program instructions for performing transaction facilitating transactions, the program instructions stored in a non-transitory memory operably connected to the at least one server; registering a plurality of merchants with the transaction facilitating platform; and registering a plurality of users with the transaction facilitating platform, each user registering through a mobile device suitable for communicating with the transaction facilitating platform. The method also includes steps of improving a capability of the mobile device of each user by placing on the mobile device of each user a computer program application useful for communicating with the transaction facilitating platform; storing information of payment methods of the plurality of users in a memory operably connected to the at least one server; identifying uniquely a user contacting the transaction facilitating platform; distributing information from the plurality of merchants, the information including tags or codes selected from the group consisting of on-line codes and tags and offline codes and tags, each tag or code being associated with a type of product of at least one of the plurality of merchants; scanning an on-line code or an on-line tag for a product from a merchant using an application on a mobile device of the user for communicating with the transaction facilitating platform; and accepting an input from the user for specifying a payment method for purchasing an item, wherein the payment method is specified by selection from one or more payment methods stored in the memory operably connected to the at least one server.

There are additional embodiments of this method. The additional methods and embodiments may include additional steps. One embodiment includes communicating information from the plurality of users to the plurality of merchants through the transaction facilitating platform without accessing account balance information of the plurality of users with the plurality of merchants. Another embodiment further includes sending information concerning product available from the plurality of merchants to the plurality of users, each item of information tailored to a particular user based on past purchases of the particular user. In one method, the input from the user is in response to a communication from a merchant for a particular item offered to the user by the merchant. In one embodiment, the input from the user is in response to a code or a tag for a particular product from a merchant using the application on the mobile device of the user for communicating with the transaction facilitating platform. Another embodiment further includes a step of paying for a desired product of the merchant using the transaction enablement application and the mobile device of the user. In yet another embodiment, the method includes additional steps of directly storing tag information for a desired product at the physical location on the mobile device of the user without benefit of a network connection; and retrieving information concerning the desired product using the tag information when the network connection is available.

Another embodiment is a method. The method includes steps of registering a plurality of merchants with a transaction facilitating platform; accepting an input from a mobile device of a user to register with the transaction facilitating platform; selecting a secure channel for communicating with the transaction facilitating platform using the app; and providing an electronic address and passcode to create an account with the transaction facilitating platform via the secure channel. The method also includes steps of storing a card verification value (CVV) of the user on the mobile device of the user; providing a payment method for the user to the transaction facilitating platform via the secure channel; storing the electronic address and the payment method in a database of the transaction facilitating platform; distributing information from the plurality of merchants, the information including tags or codes selected from the group consisting of on-line codes and tags and offline codes and tags, each tag or code being associated with at least one product type of at least one of the plurality of merchants; and scanning an on-line code or an on-line tag for a product from a merchant using an application on a mobile device of the user for communicating with the transaction facilitating platform.

In another embodiment, the method further includes sending the mobile device of the user an app for communicating with the transaction facilitating platform. In another embodiment, the method includes preparing the transaction facilitating platform with a plurality of physical machines, the transaction facilitating platform comprising at least one server and at least one computer program with program instructions for performing transaction facilitating transactions stored in a non-transitory memory operably connected to the at least one server. In another embodiment, the method further includes placing at least one beacon comprising a transmitting beacon and a tag into a physical store of a merchant, wherein the beacon comprises a wireless personal area network having a capability of transmitting to a plurality of users within a limited range of the physical location of the merchant. In yet another embodiment, the method includes storing a shipping address for each user of the plurality of users in the memory operably connected to the at least one server.

In another embodiment, the method includes further steps of: identifying uniquely a user contacting the transaction facilitating platform; accepting a first input from the user for selecting an item for purchase from the transaction facilitating platform; and accepting a second input from the user specifying a payment method for purchasing the item and specifying a delivery address for the item, wherein each of the payment method and the delivery address are specified by selection from one or more payment methods and delivery addresses stored in a memory operably connected to the at least one server.

In another alternate embodiment, the method includes steps of identifying uniquely the user contacting the transaction facilitating platform; accepting a first input from the user for selecting an item for purchase from the transaction facilitating platform; and accepting a second input from the user specifying a payment method for purchasing the item and delivering a stored credit card number or debit card number from the mobile device of the user to the transaction facilitating platform to pay for the selected item

Another embodiment is a method. The method includes steps of registering a plurality of merchants with a transaction facilitating platform; accepting an input from a mobile device of a user to register with the transaction facilitating platform; and sending the mobile device of the user an app for communicating with the transaction facilitating platform. The method includes steps of selecting a secure channel for communicating with the transaction facilitating platform using the app; providing an electronic address and passcode to create an account with the transaction facilitating platform via the secure channel; providing a shipping address and a payment method for the user to the transaction facilitating platform via the secure channel; storing the electronic address and the payment method in a database of the transaction facilitating platform; storing information of at least financial account of the user in a file on the mobile device of the user; distributing information from the plurality of merchants, the information including tags or codes selected from the group consisting of on-line codes and tags and offline codes and tags, each tag or code being associated with a product type of at least one of the plurality of merchants; and scanning an on-line code or an on-line tag for a product from a merchant using an application on a mobile device of the user for communicating with the transaction facilitating platform.

In another embodiment, the method further includes storing a card verification value (CVV) of the user in the file on the mobile device of the user. In another embodiment, the method includes storing biometric data of the user on at least one of the mobile device of the user, the transaction facilitating platform and a remote server; and requesting the user to authenticate himself or herself via the biometric data when logging into the system or when making a purchase.

Another embodiment is a method for enabling e-commerce transactions, the method. The method includes the steps of accepting registration of a merchant with an e-commerce platform via at least one computer, the e-commerce platform configured to interact between a plurality of merchants registered with the e-commerce platform and configured to interact with a plurality of customers registered with the e-commerce platform; distributing information to the plurality of customers about at least one product from at least one of the plurality of merchants; receiving a response from a first customer at the e-commerce platform via the at least one computer concerning the at least one product, the at least one product available from a first merchant registered with the e-commerce platform; and forwarding the response to the first merchant, wherein the first customer is linked to the first merchant only through the e-commerce platform.

There are additional embodiments of this method. The additional methods and embodiments may include additional steps. One embodiment includes distributing the information to the plurality of customers registered with the e-commerce platform via the at least one computer. In another embodiment, the information distributed to the plurality of customers comprises a tag or a code to facilitate an exchange of information between the first customer and the e-commerce platform. In another embodiment, where the tag lacks a data connection, and when the first customer scans the tag to request information, the e-commerce platform stores a request for information from the first customer and makes the information available to the first customer when the data connection is provided. In another embodiment, the tag is an audio tag. In another embodiment, the information distributed to the plurality of customers is selected from the group consisting of a QR code and a bar code. In another embodiment, the response comprises an order from the first customer, the order sent by the customer to the e-commerce platform only. In another embodiment, the steps of accepting registration are accomplished by at least one server, wherein the at least one server also saves at least temporarily information concerning the at least one product from the step of receiving a response from the first customer. In another embodiment, the step of receiving a response is accomplished by receiving a response from a mobile device of the first customer. In another embodiment, the step of distributing information of at least one item is accomplished through an Internet, and wherein the step of receiving a response is accomplished by selection of the at least one item displayed to the first customer through a touch of a mobile device of the first customer. In another embodiment, the step of distributing information is accomplished through a beacon of the e-commerce platform in communication with a mobile device of the first customer.

Another embodiment is a method for enabling e-commerce transactions, The method includes the steps of accepting registration of a first merchant with an e-commerce platform via at least one computer, the e-commerce platform configured for interactions between a plurality of merchants registered with the e-commerce platform and a plurality of customers registered with the e-commerce platform; accepting registration of a first customer with the e-commerce platform; distributing information to the plurality of customers registered with the e-commerce platform about at least one product from each of the plurality of merchants; and receiving a response from the first customer at the e-commerce platform via the at least one computer concerning the at least one product, the at least one product available from the first merchant registered with the e-commerce platform, wherein the response from the first customer is linked to the first merchant only through the e-commerce platform.

There are additional embodiments of this method. The additional methods and embodiments may include additional steps. One embodiment includes forwarding the response to the first merchant registered with the e-commerce platform through the e-commerce platform. In another embodiment, the steps of accepting are accomplished with at least one of encryption and secure codes. In another embodiment, a unique identification key for each of the plurality of customers registered with the e-commerce platform is provided. In another embodiment, additional information to the first customer from the first merchant through the e-commerce platform is sent, the additional information in answer to the response from the first customer. In another embodiment, additional information is sent to a mobile device of the first customer after triggering an event, based on the sensing of a beacon of the e-commerce platform in communication by the mobile device of the first customer. In another embodiment, a path of the first customer is tracked while the first customer is within range of the beacon. In another embodiment, a response from the mobile device of the first customer is received via the at least one computer, the response comprising a selection for purchase of an item among the additional information. In another embodiment, payment from the first customer at the e-commerce platform for the at least one product from the first merchant.

Another embodiment is a method for enabling e-commerce transactions. The method includes the steps of distributing information to a plurality of customers about products available from a plurality of merchants; accepting registration of a first merchant with an e-commerce platform via at least one computer, the e-commerce platform configured for interactions between a plurality of merchants registered with the e-commerce platform and a plurality of customers registered with the e-commerce platform; accepting registration of a first customer with the e-commerce platform, the registration of the first customer responsive to the information distributed by the plurality of merchants; receiving a response from the first customer at the e-commerce platform via the at least one computer concerning the at least one product, the at least one product available from the first merchant registered with the e-commerce platform; and forwarding the response to the first merchant, wherein the first customer is linked to the first merchant only through the e-commerce platform.

There are additional embodiments of this method. The additional methods and embodiments may include additional steps. One embodiment includes the step of sending information to the first customer via the e-commerce platform, the information in answer to the response from the first customer. In another embodiment, the information distributed to the plurality of customers is in the form of a tag or a code, the information encouraging the plurality of customers to register with the e-commerce platform. In another embodiment, where the tag lacks a data connection, and when the first customer scans the tag to request information, the e-commerce platform stores a request for information from the first customer and makes the information available to the first customer when the data connection is provided. In another embodiment, a tag or a code is generated by the e-commerce platform, the tag or the code useful for exchanging information and enabling a transaction between the first customer and the first merchant. In another embodiment, the step of distributing information is accomplished by at least one of print ads, posters and billboard ads. In another embodiment, the step of distributing information is accomplished by distributing a tag or a code both in an online medium and an offline medium. In another embodiment, the first customer is recognized and contacted after triggering an event, based on the sensing of a beacon of the e-commerce platform in proximity to the first customer. In another embodiment, a beacon is within a physical store of the first merchant, and wherein recognition through the e-commerce platform enables identification of the first customer to at least one point-of-sale terminal of the first merchant.

Another embodiment is a method for enabling e-commerce transactions. The method includes the steps of accepting registration of a first merchant with an e-commerce platform via at least one computer, the e-commerce platform configured for interactions between at least one merchant registered with the e-commerce platform and a plurality customers registered with the e-commerce platform; accepting registration of a first customer with the e-commerce platform, wherein the first customer is linked to the first merchant through the e-commerce platform; distributing information to a mobile device of the first customer about at least one product from the first merchant by triggering an event, based on the sensing of a beacon, the information distributed to mobile devices of customers within range of the beacon; and receiving a response from the customer at the e-commerce platform in answer to the information distributed concerning the at least one product.

There are additional embodiments of this method. The additional methods and embodiments may include additional steps. One embodiment includes a response of completing a purchasing transaction of the first customer of the at least one product from the first merchant through the e-commerce platform only. In another embodiment, the beacon has a limited range for transmission. In another embodiment, the beacon is located at a physical location of the first merchant. In another embodiment, the information comprises an offer personalized to the first customer. In another embodiment, information is distributed to the plurality of customers about at least one product from at least one of the plurality of merchants via a tag or a code.

Another embodiment is an e-commerce platform for enabling e-commerce transactions. The e-commerce platform comprises at least one server for enabling e-commerce transactions, the at least one server configured to register a plurality of customers and to receive data from the plurality of customers registered with the e-commerce platform, the at least one server also configured to register a plurality of merchants and to receive data from the plurality of merchants registered with the e-commerce platform, the at least one server also configured to recognize and accept information from a plurality of mobile and non-mobile devices of customers of the e-commerce platform; and a computer software program stored as non-transitory instructions on a computer-readable medium accessible to the at least one server for facilitating an exchange of information between the plurality of customer and the plurality of merchants, wherein the information is exchanged through the e-commerce platform alone.

There are additional embodiments of the e-commerce platform. One embodiment includes configuring the e-commerce platform to use an Internet to distribute information about at least one product from a first merchant and accept a selection of the at least one product via a touching selection from a mobile device of a first customer. In another embodiment, information is distributed to a customer when the customer scans a tag or a code, and wherein the tag or code lacks a data connection, and wherein the e-commerce platform is configures so that when the customer scans the tag or the code to request information, the e-commerce platform stores a request for information from the customer and makes the information available to the customer when the data connection is provided. In another embodiment, the e-commerce platform further comprises a limited-range beacon configured to detect a mobile device of a customer within range of the beacon and is also configured to distribute information to the mobile device of the customer within range of the beacon. In another embodiment, the beacon of the e-commerce platform is located in proximity to a physical location of a first merchant and wherein detection of the customer is forwarded to at least one point-of-sale terminal of the first merchant.

### Brief Description of the Drawings

Fig. 1 depicts a block diagram of a system for performing transactions using a machine-identifiable tag.
Fig. 2 depicts a flow chart depicting a method of using a machine-identifiable tag to initiate a transaction utilizing the electronic commerce platform.
Fig. 3A depicts a representation of a machine-identifiable tag which may be used in the method of using a machine-identifiable tag to initiate a transaction according to Fig. 8.
Fig. 3B depicts a representation of a processing display output which may be used in the method of using a machine-identifiable tag to initiate a transaction according to Fig. 2.
Fig. 3C depicts a representation of a confirmation display output which may be used in the method of using a machine-identifiable tag to initiate a transaction according to Fig. 2.
Fig. 4 depicts an example of a tag output device according to Fig. 1 and of a machine-identifiable tag as depicted in Figures 3A, 3B, and 3C.
Fig. 5 depicts a diagram of components involved in initiating a transaction using verification data.
Fig. 6 depicts an audio waveform with an embedded digital watermark
Fig. 7 depicts a flow chart for a method of validating a transaction.
Fig. 8 depicts the output of a display at different steps of a method via the electronic commerce platform.
Fig. 9 depicts the output of a display of an electronic device at different steps of a method.
Fig. 10 depicts a system for outputting a machine-identifiable tag.
Fig. 11 depicts a block diagram of a system for performing transactions using a machine-identifiable tag.
Fig. 12 depicts a block diagram of an audio tag output device.
Fig. 13 depicts a block diagram of an odor tag output device.
Fig. 14 depicts a block diagram of components for a system for outputting tags.
Fig. 15 depicts a representation of an audio tag watermark in the time domain representation of an audio signal.
Fig. 16 depicts a block diagram of a system diagram for generating an odor tag.
Fig. 17 depicts is a block diagram of a tag processing system for providing a machine-identifiable tag in response to a request.
Fig. 18 depicts a flow chart depicting a method of providing a machine-identifiable tag in response to a request utilizing the system of Fig. 17.
Fig. 19 depicts a flow chart depicting a method of providing a machine-identifiable tag in response to a request.
Fig. 20 depicts a flow diagram of a method by which the system of Fig. 1 generates a tag which can be used to initiate a transaction, whilst not containing any sensitive data.
Fig. 21 depicts a flow chart depicting the secure authentication and registration process.
Fig. 22A is a representation of a machine-identifiable tag which can be used for authentication;
Fig. 22B is a representation of display output during secure device authentication and registration;
Fig. 22C is a representation of display output confirming secure device authentication and registration.
Fig. 23 depicts a block diagram of a system for performing transactions using a machine-identifiable tag.
Fig. 24 is a flow chart depicting a method of using a machine-identifiable tag to initiate out a transaction utilising the system of Fig. 23.
Fig. 25A is a representation of a machine-identifiable tag which may be used in the method of using a machine-identifiable tag to initiate a transaction according to Fig. 24;
Fig. 25B is a representation of a processing display output which may be used in the method of using a machine-identifiable tag to initiate a transaction according to Fig. 24;
Fig. 25C is a representation of a confirmation display output which may be used in the method of using a machine-identifiable tag to initiate a transaction according to Fig. 24;
Fig. 26 is a block diagram of a system for outputting a machine-identifiable tag;
Fig. 27 is a flow chart depicting a method of validating a transaction utilising the system of Fig. 24;
Fig. 28A is an example display output of an electronic device which may be displayed in the method according to Fig. 27; and
Fig. 28B is an example display output of an electronic device which may be displayed in the method according to Fig. 28;
Fig. 29 depicts a flow chart depicting a method for performing transactions using an electronic commerce platform and machine-identifiable tags.
Fig. 30 depicts a diagram of components involved in initiating a transaction using verification data;
Fig. 31 depicts a process of initiating a transaction using verification data;
Fig. 32 depicts a diagram of components involved in a computer-implemented registry of beacons;
Fig. 33 depicts a diagram of components involved in updating a wireless beacon;
Fig. 34 depicts a process of updating a wireless beacon;
Fig. 35 depicts diagram of components involved in connecting to a wireless network;
Fig. 36 depicts a process of connecting to a wireless network;
Fig. 37 depicts an electronic device in accordance with the electronic devices of this this disclosure;
Fig. 38 depicts a wireless beacon in accordance with the wireless beacons of this disclosure;
Fig. 39 depicts a server in accordance with the servers of this disclosure; and
Fig. 40 depicts an overview of a system in which devices, servers and other aspects of this disclosure can operate.

### Detailed Description

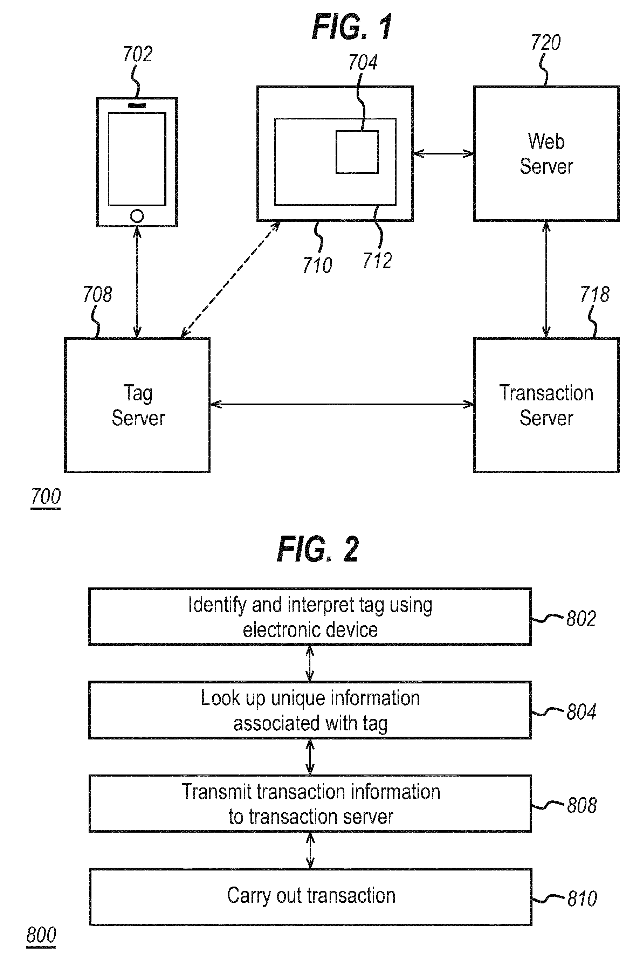

Fig. 1 depicts a system 100 for performing transactions using a machine-identifiable tag. An electronic device 702 is in communication, e.g. bidirectional communication, with tag server 708. The electronic device may be a mobile phone, such as a smart phone, a handheld computer, an MP3 player, a tablet computer or any other device suitable for identifying and interpreting a machine-identifiable tag. Reference is made herein to "identifiable". However, the terms "identifiable" and "readable" can be used herein interchangeably. The electronic device is registered with the tag server such that user information, e.g. name, address, credit card number and/or expiry date, is associated with the electronic device, and stored in memory associated with the tag server. Tag output device 710 is configured to display the machine-identifiable tag 704 on a display 712 or otherwise output the machine-identifiable tag. Tag output device may be an electronic processing device, such as a computer, with a display, which may be a built-in display or a separate display connected to the electronic processing device, a poster, a television or any other means for outputting a machine-identifiable tag. Tag server can (but not necessarily) be in bidirectional communication with the tag output device, e.g. for generation of the tag on request by a device on which the tag may be output. Tag server is in communication, e.g. bidirectional communication, with transaction server 718 which is configured to perform the transaction upon validation by the tag server of the transaction through satisfactory identification of the machine-identifiable tag by the electronic device.

A web server 720 may be used to provide a plurality of web pages, such as webpages for implementing an online shopping portal, to the tag output device. The web pages can be displayed on the display. The tag can be requested directly from the tag server by the tag output device when a tagged web page of the plurality of web pages, such as a product purchase page, a checkout page, shopping cart page etc. is accessed from the web server via the tag output device. The tag may be requested by the tag output device using a client-side processing component, such as client-side scripting, e.g. JavaScript or similar means. The client-side processing component is embedded in the tagged web page and is then received and processed by the tag output device so that the tag output device can generate and send requests for the tag directly from the tag output device to the tag server based on information associated with the tagged web page, e.g. product identification information. The tag output device can then receive the tag directly from the tag server and cause it to be displayed within the displayed tagged web page.

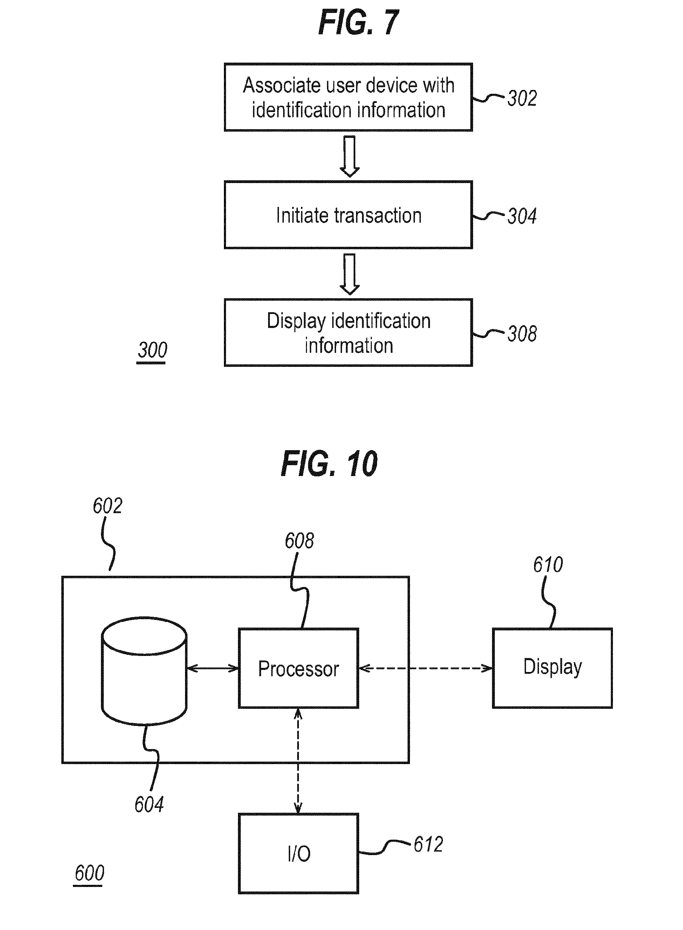

In the embodiment described above and depicted in Figs. 1 and 7 (see below), the tag output device is in direct communication, e.g. bidirectional communication, with the tag server and the tag server is not in communication at all with the web server. This embodiment reduces the processing burden on the web server, and provides enhanced security of tag generation and processing.

In an embodiment (not depicted), the web server is in direct communication, e.g. bidirectional communication, with the tag server for client-side requests, processing and rendering of the tag. This is an alternative to the tag output device requesting the tag from the tag server directly, in which case the web server may request the tag from the tag server when generating the tagged web page. This embodiment provides faster processing of tag requests, but security of the tag processing is decreased.

Communication between the device, tag and tag, transaction and web servers can be by any suitable means, such as: wired or wireless communication, e.g. over a network, such as a local area network (LAN), or wide area network (WAN), e.g. the Internet, connecting the devices/servers. The communication between any given pair or all of the devices may be secure, e.g. encrypted, for example through use of secure socket layer (SSL).

Fig. 2 is a flow chart 800 depicting a method of using a machine-identifiable tag to initiate a transaction. At step 802, the electronic device identifies and interprets a machine-identifiable tag, such as a QR code or other machine-readable code, such as a bar code which may be being displayed on the tagged web page. The electronic device can detect the machine-identifiable tag by any means appropriate to the tag, such as using a built-in camera to scan a QR code. The machine-identifiable tag may be displayed on the tagged web page in a web browser adjacent to or otherwise visually associated with a product which is for sale through the web page. Of course, the machine-identifiable tag may be displayed on any user interface which can be generated and displayed from tag output device, and thereby read by the electronic device.

At step 804, once the machine-identifiable tag has been interpreted, e.g. identified, by the electronic device, the electronic device communicates with the tag server to look up the unique information associated with the tag in a memory of the tag server. If the machine-identifiable tag is associated with a product for sale, the unique information may be a stock keeping unit (SKU) or other information uniquely identifying the product for sale.

At step 808, transaction information is transmitted from the tag server to the transaction server. The transaction information includes the unique information identified in step. The transaction server may be an e-commerce server of an online shopping website. Information about the user of the electronic device and/or information about the electronic device itself may also be stored on the tag server and transmitted to the transaction server in response to the identification of a machine-identifiable tag by the electronic device. Information about the user may include electronic purchase information, such as payment details, e.g. credit or debit card details.

At step 810, the transaction is carried out by the transaction server, the transaction information is sent to the transaction server from the tag server and, optionally, information about the user of the electronic device and/or information about the electronic device itself. Alternatively, the transaction information, information about the user of the electronic device and/or information about the electronic device itself may be transmitted from the tag server to the web server, e.g. via the tag output device or directly do the web server. The web server may then communicate with the transaction server to carry out the transaction.

At step 804, the tag server may also communicate with the tag output device to display information that the transaction is being processed. For example, if the machine-identifiable tag is a QR code displayed in a web browser, the browser may update its output to display some indication that the transaction is processing. The tag server may also communicate with the electronic device to cause electronic device to display a processing indication on a display of the electronic device.

At step 810, a confirmation message may be transmitted from the transaction server to the tag server. The tag server may communicate with the electronic device to enable the electronic device to display confirmation information on a display of the electronic device. The tag server may also be in communication with the tag output device so as to cause the device to display or otherwise output a confirmation message.

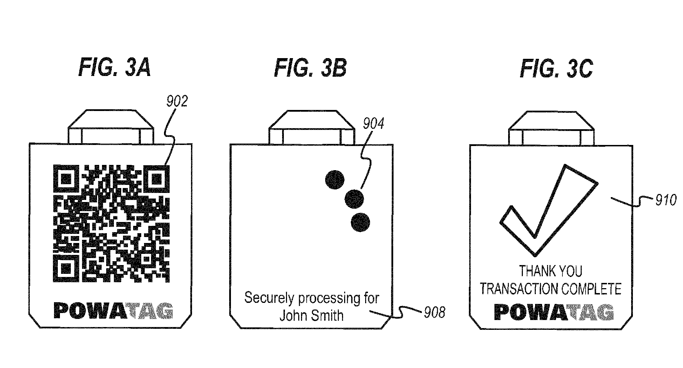

Fig. 3A depicts an example of the machine-identifiable tag which may be used in embodiments. The tag in one embodiment may be a QR code 902, which may be displayed by a tag output device such as a web browser, on a poster, an electronic image display device such as a tablet computer, a laptop computer, a mobile phone, an MP3 player or any other suitable medium. Once the QR code is scanned by the electronic device, the processing indication depicted in Fig. 3B may be displayed. A revolving animation 904 may be used to indicate that the transaction is processing. Any other suitable animation or indication that the transaction is processing may alternatively or additionally be used. Personalization/validation 908 information relating to or indicative of the user of the electronic device or specific to the electronic device itself may be displayed. Once the transaction server has completed the transaction, tag server may communicate a confirmation message to the tag output device which may result in a display output such as that depicted in Fig. 3C being displayed. The machine-identifiable tag can be implemented in various ways. For example, a transmission from a beacon, such as a broadcast from a Bluetooth or Bluetooth Low Energy, or Bluetooth Smart beacon can be used to trigger the same process which is triggered when the QR code 902 is detected. A beacon broadcast can be associated with unique information in a memory of the tag server. A device detecting such a beacon sends an indication to the transaction server that it has detected a beacon broadcast. The server then establishes that this beacon broadcast is associated with the unique information, and proceeds with steps 808 and 810 above. Alternatively, the machine-identifiable tag may be an RFID tag, or an NFC tag, or any tag from which unique information can be extracted.

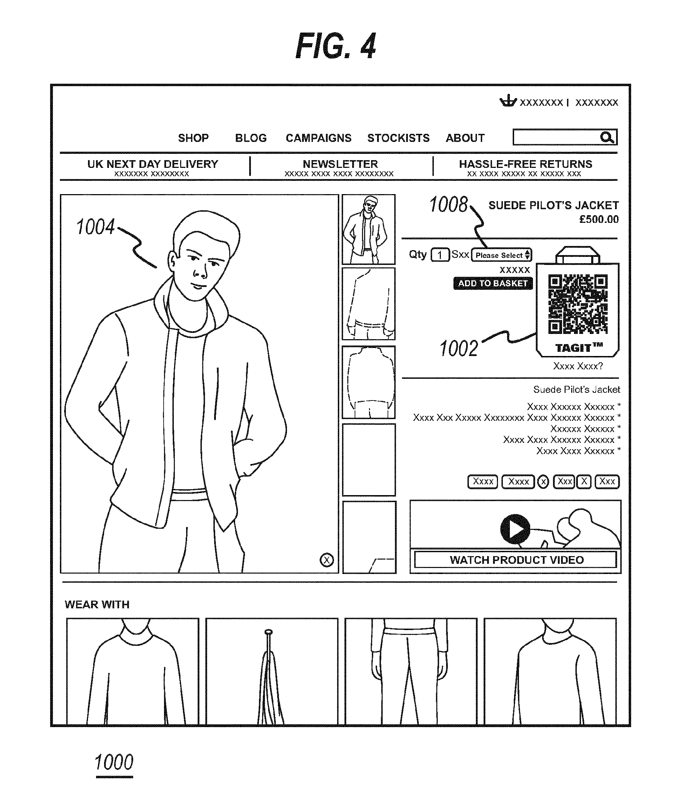

Fig. 4 shows an example output 1000 of the tag output device. An example output may be a tagged web page for an online shop which enables a user to purchase goods online. The tagged web page is requested from web server, shown in Fig. 1, and displayed on tag output device display. A particular product 1004which the user wishes to purchase is displayed within the tagged web page on display, along with quantity and sizing 1008 information and the machine-identifiable tag, also depicted in Fig. 3A which is a tag depicted in Fig. 1 as generated by tag server. The machine-identifiable tag may be specific to the quantity and size selected by a user in fields or may be specific only to the product. The electronic device identifies and interprets the machine-identifiable tag 1002 and its content, which accordingly causes the method according to Fig. 2 to be executed. The region of display output in which the machine-identifiable tag is displayed may also be updated in accordance with the example outputs depicted in Figures 3B and 3C.

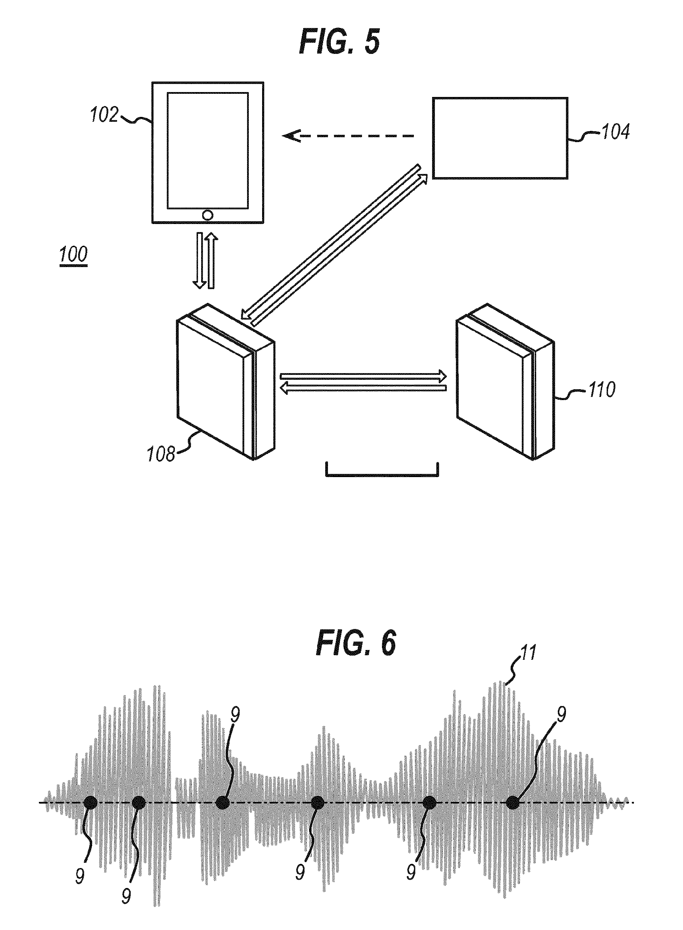

A similar system is shown in Fig. 5, which comprises an electronic device 102 that is in communication, e.g. bidirectional communication, with a validation server 108. Validation server can (but not necessarily) be in bidirectional communication with the machine-identifiable tag 104, e.g. for generation of the tag on request by the device on which the tag is output. Validation server is in communication, e.g. bidirectional communication, with transaction server 108, which is configured to perform the transaction upon validation in the validation server of the transaction through satisfactory identification of the machine-identifiable tag by the electronic device. The electronic device can detect the machine-identifiable tag by any means appropriate to the form of the tag as further described below. Communication between the device, tag (or device on which the tag is output) and validation and transaction servers can be by any suitable means, such as: wired or wireless communication, e.g. over a network, such as a local area network (LAN), or wide area network (WAN), e.g. the Internet, connecting the devices/servers. The communication between any pair or all of the devices may be secure, e.g. encrypted, for example through use of secure socket layer (SSL).

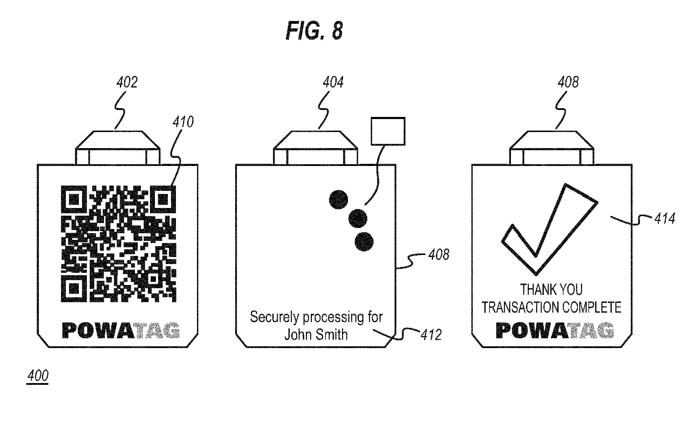

The electronic device may be configured to detect and identify the machine-identifiable tag. The tag can take the form of a visually-readable code, such as QR code in Fig. 8, or the audio watermark in Fig.6 or an odor. In all cases, the machine-identifiable tag is indicative of the transaction which can be performed upon validation. A validation server receives information related to the machine-identifiable tag to identify the particular transaction, and information from the electronic device 1 to identify the device itself and or the user of the device. The validation server then communicates transaction information, e.g. payment information, to the transaction server to perform the transaction.

In one embodiment, the machine-identifiable tag is in the form of a visually-readable tag, such as a bar code or QR code. The visually-readable tag may be generated by the validation server upon request by the device on which the tag is generated. This device may be a client computer comprising a display on which the tag is generated, for example within a webpage being accessed via the client computer. This webpage may be a webpage comprising information of a product which is to be purchased by completion of the transaction following validation of the tag.

In another embodiment, the machine-identifiable tag can take the form of an odor, i.e. the tag can be an odor tag or an olfactory tag. Reference is made herein to "odor". However, the terms "odor" and "olfactory" can be used herein interchangeably. An odor can be understood as a property or quality of a thing that affects, stimulates, or is perceived by the sense of smell.

A particular odor can be associated with a particular transaction. In this way, the particular odor can be implemented as an odor tag for the machine-identifiable tag. A machine with a so-called "electronic nose" can detect the particular odor, and thereby identify the underlying machine-identifiable tag, and carry out the associated transaction.

An "electronic nose" can take many forms such as those described in Rock, Frank; Barsan, Nicolae; Weimar, Udo (2008). "Electronic Nose: Current Status and Future Trends". Chemical Reviews 108 (2): 705-25.

The underlying principal of an "electronic nose" is the provision of a sensor which can transform chemical information (of a particular odor) into associated electrical information. Hence, the detection of associated electrical information from an "electronic nose" allows the machine to identify a machine-identifiable tag, which takes the form of a particular odor.

The electronic device can comprise an "electronic nose" configured to detect the odor being a machine-identifiable tag. Data for generating the odor tag may be generated by the validation server upon request by the device on which the odor tag is generated. This device may be a client computer comprising an odor generator, for example when a particular webpage is accessed via the client computer. This webpage may be a webpage comprising information of a product which is to be purchased upon completion of the transaction following validation of the tag.

Once the particular odor has been identified by the "electronic nose" of the electronic device, the associated transaction can be carried out upon validation, as herein described.

In another embodiment, the machine-identifiable tag can take the form of an audio tag within an audio sample. The audio tag could take the form of an audio watermark, which would be understood as an analogue or digital signal embedded within the underlying audio waveform, as shown in Fig. 6, and for example described in M. Davarynejad, S. Sedghi, M. Bahrepour, C.W. Ahn, M. Akbarzadeh, C. A. Coello Coello: "Detecting Hidden Information from Watermarked Signal using Granulation Based Fitness Approximation, Applications of Soft Computing: From Theory to Praxis", Springer, Series: Advances in Intelligent and Soft Computing, Volume 58/2009, ISBN 978-3-540-89618-0, pp. 463-472, 2009.

A "listening" machine, which can be integrated within electronic device, is capable of detecting digital signal within the audio waveform. It would also be understood that the watermark can be generated and added to the audio signal before or after its conversion to an audio waveform, using appropriate signal processing techniques.

The electronic device can thus comprise a microphone for detecting the audio waveform and for identifying the audio watermark as the machine-identifiable tag. Data for generating the audio tag may be generated by the validation server upon request by the device on which the audio tag is generated. This device may be a client computer comprising an audio generator, for example when a particular webpage is accessed via the client computer. This webpage may be a webpage comprising information of a product which is to be purchased upon completion of the transaction following validation of the tag.

Once the particular audio watermark has been identified by the microphone, and signal processing performed by the electronic device, the associated transaction can be carried out upon validation of the tag, as herein described.

Once the audio watermark has been identified by the listening machine using a suitable signal processing technique, the associated transaction can be carried out, as described above.

Fig. 7 depicts a flow chart 300 which illustrates a method of validating a transaction. At step 302, identification information is associated with the electronic device. Identification information may be personal information, such as a user's name, an image of the user, a memorable name or phrase or any other information related to a user of the electronic device. Alternatively, or additionally, the identification information may be related to the electronic device itself such as a mobile telephone number, an international mobile station equipment identity (IMEI) or any other information related to the electronic device. The step of associating the electronic device with the identification information may be part of a registration process for a service, an initial configuration of the electronic device, or any suitable method of storing identification information related to the user or electronic device. The association may take place in a memory of tag server, such that when electronic device transmits a message to tag server indicating that a machine-identifiable tag has been identified and interpreted, tag server access the identification information associated with electronic device. The identification information may be requested by the transacting entity from the server once the transaction has been initiated.

At step 304 the transaction may be initiated with between the user of the electronic device and a transacting entity, using information provided by the transacting entity. In embodiments, the transaction is initiated by interpreting with the electronic device the machine-identifiable tag, such as a QR code displayed in a website, as depicted in Fig. 4 provided by the transacting entity on a display of a device associated with the transacting entity (e.g. a client computer). The machine-identifiable tag may be any suitable tag for encoding information, such as those described above or any kind of visually identifiable tag, such as a barcode or QR code. Alternatively, the transaction may be initiated by any other suitable means of data transfer, for example, reading an alphanumeric code from the display and inputting the alphanumeric code into the electronic device.

At step 308 the identification information may be displayed on a display associated with the transacting entity for validation of the transaction, an example of which is shown in Fig. 8. The display may be associated with the transacting entity by displaying a website provided by the transacting entity on the client computer, or the display may be operated by and on the premises of the transacting entity, for example. By displaying the identification information associated with the electronic device on the display associated with the transacting entity, the user of the electronic device can be certain that the transaction which will be, or is being performed is correct.

Once the identification information has been displayed on the display associated with the transacting entity, the transaction may be performed by communication of transaction information between the validation server and transaction server. Upon completion of the transaction, a confirmation message 910 may be displayed on the display associated with the transacting entity, an example of which is shown in fig. 8.

The identification information which is displayed on the display associated with the transacting entity once the transaction has been initiated may also be displayed on the display of the electronic device. This provides the user with an additional validation of the transaction, since the identification information can be compared between the display of the electronic device and the display associated with the transacting entity.

Additionally, the identification information associated with the electronic device may be stored on a server after the identification information has been associated with the electronic device. The identification information may be requested by the transacting entity from the server once the transaction has been initiated.

Fig. 8 depicts the output of the display associated with the transacting entity at different steps of the method according to various embodiments of the disclosure. The output depicted by 402 is a QR code 410 which is displayed on the display associated with validation server the transacting entity, e.g. server. In this example, the QR code is displayed on a website provided by the transacting entity. The QR code is scanned by the electronic device which results in the output of the display changing to that depicted at 404. The identification information 412 is displayed on the output of the display associated with the transaction entity, e.g. with transaction server via a client terminal, so as to validate the transaction which will be, or is being performed upon validation. In this embodiment, a spinning animation 408 indicates that validation of the transaction is being performed. Once validation of the transaction has been performed and/or the transaction is complete, a confirmation message 414 is displayed according to output 406.

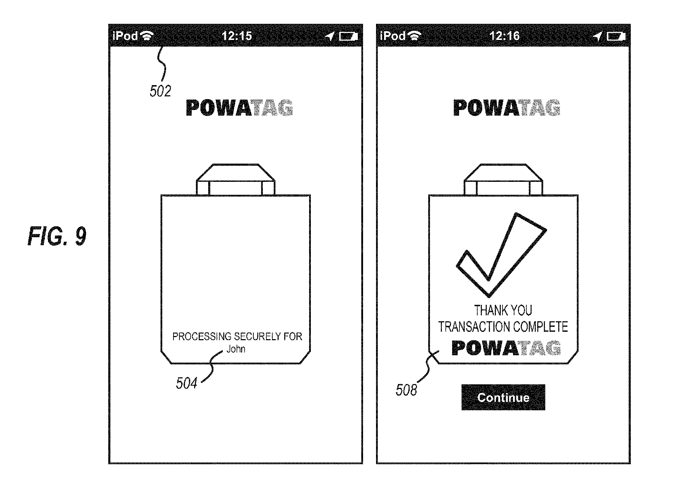

The identification information which is displayed on the display associated with the transacting entity once the transaction has been initiated may also be displayed on the display of the electronic device. Fig. 9 depicts the output of the display of the electronic device at different steps of the method according to embodiments of the disclosure. Electronic device display output 502 shows the identification information 504 which is displayed on the display of the electronic device, once the transaction has been initiated, for example by initiating a reading of machine-identifiable tag. Display output 508 shows a confirmation message which is displayed on the display of the electronic device once the transaction is complete. This provides the user with an additional validation of the transaction, since the identification information can be compared between the display of the electronic device and the display associated with the transacting entity,

Fig. 10 depicts the components of a device 600 which may be used to display or otherwise output the machine-identifiable tag. This device is associated with (e.g. connected to) the transaction server. The device comprises a computer 602 which comprises a memory 604 and a processing circuitry 608. The computer may be communicatively coupled to a display 610 on which a visual machine-identifiable tag, such as a barcode or QR code, is output. Additionally, or alternatively, the computer maybe communicatively coupled with another input/output 612 means for outputting other forms of machine-identifiable tags, as herein disclosed, such as a loudspeaker for generating audio tags, or an odor generator for generating odor tags. The device is also suitable for providing the electronic device itself, and in a general form is suitable for providing the validation and transaction servers. The processing circuitry in conjunction with computer executable code stored in memory is thereby configured to perform steps of the methods as herein disclosed.

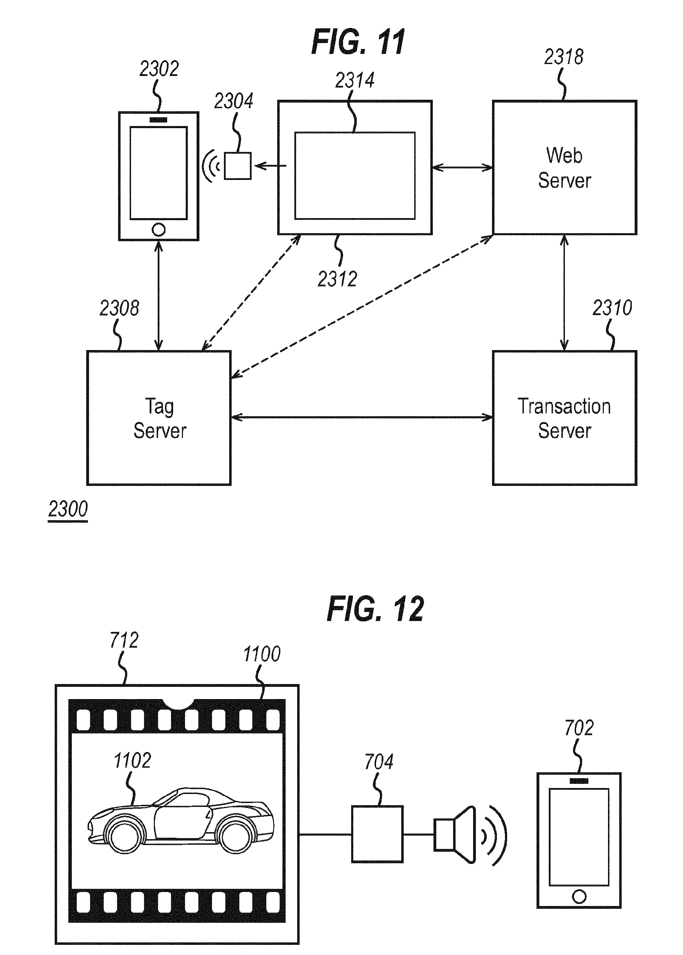

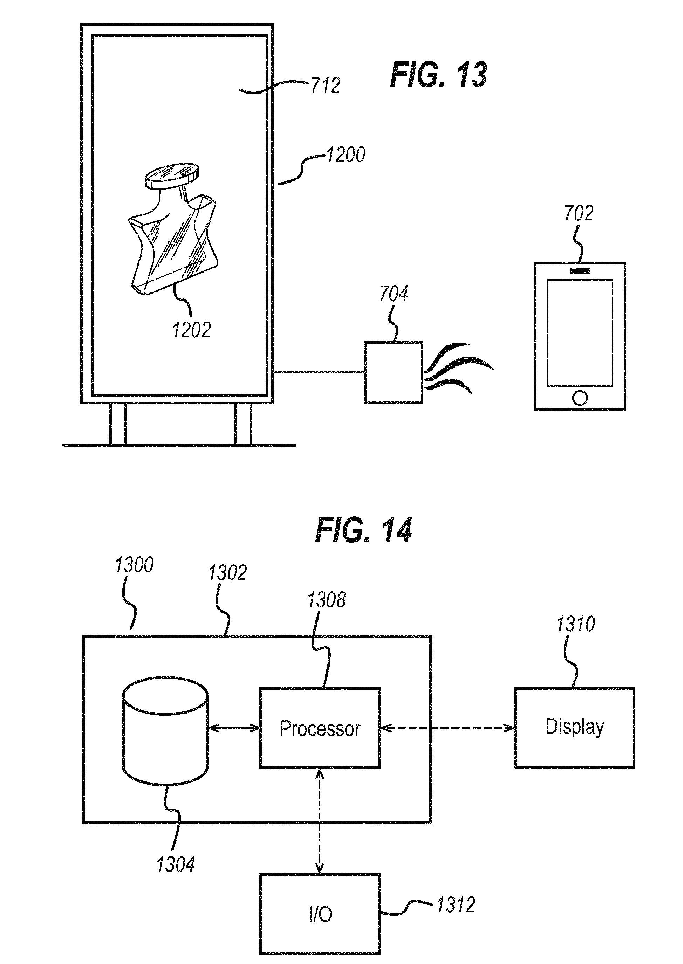

Fig. 11 depicts a system 2300 (similar to the systems illustrated in figures 1 and 5) for performing transactions using a machine-identifiable tag. An electronic device 2302 is in communication, e.g. bidirectional communication, with tag server 2308. The electronic device may be a mobile phone, such as a smart phone, a handheld computer, an MP3 player, a tablet computer or any other device suitable for identifying and interpreting a machine-identifiable tag. The electronic device is registered with the tag server such that user information, e.g. name, address, credit card number and/or expiry date, is associated with the electronic device, and stored in memory associated with the tag server. Tag output device 2312 is configured to output the machine-identifiable tag 2304 via a tag output component (see Figs. 12 and 13 below). Tag output device may be an electronic processing device, such as a computer (see below), with a display 2314, which may be a built-in display or a separate display connected to the electronic processing device, a poster, a television and other means for outputting a machine-identifiable tag. Tag server can (but not necessarily) be in bidirectional communication with the tag output device, e.g. for generation of the tag on request by a device on which the tag may be output. Tag server is in communication, e.g. bidirectional communication, with transaction server 2310 which is configured to perform the transaction upon validation by the tag server of the transaction through satisfactory identification of the machine-identifiable tag by the electronic device.

The machine-identifiable tag can take different forms according to the present disclosure. In general, according to the embodiments presented below, the machine-identifiable tag may not be a tag which is identifiable visually or via radio-frequency detection. A tag according to the present disclosure may be a non-visual and/or a non-radio-frequency machine-identifiable tag, such as an audio tag and/or an odor tag.

A web server 2318 may be used to provide a plurality of web pages, such as webpages for implementing an online shopping portal, to the tag output device. The web pages can be displayed on the display. The tag can be requested directly from the tag server by the tag output device when a tagged web page of the plurality of web pages, such as a product purchase page, a checkout page, shopping cart page etc. is accessed from the web server via the tag output device. The tag may be requested by the tag output device using a client-side processing component, such as client-side scripting, e.g. JavaScript or similar means. The client-side processing component is embedded in the tagged web page and is then received and processed by the tag output device so that the tag output device can generate and send requests for the tag directly from the tag output device to the tag server based on information associated with the tagged web page, e.g. product identification information. The tag output device can then receive the tag directly from the tag server and cause it to be output alongside the displayed tagged web page.

Fig. 12 shows an example output from the tag output device when the tag is an audio tag 704. Example output is a video output 1100 displayed on display, e.g. a movie, advertisement, television broadcast, internet video stream etc. The video output may be a video stream supplied to the tag output device by the web server of Fig. 11 or other server-based device, or received via a broadcast. A particular product 1104 which the user may wish to purchase is displayed within the video output on display 712. The audio tag may be specific to the product and output only whilst the product 1102 is being displayed within the video output and change dependent on the product being displayed. The audio tag may be contained within the video stream itself, or alternatively the audio tag may be generated separately, e.g. by tag output device itself, and output alongside the video output. Whilst a user is viewing the video output, the electronic device 702 can be used to identify and interpret the audio tag and its content, which accordingly causes the method according to Figs. 2 and 7 to be performed.

Fig. 13 shows an example output from the tag output device when the tag 704 is an odor tag. Example output is an image output 1200 displayed on display 712 which may be a static display, such as an electronic billboard in which the image output is an advertisement. The image output may be supplied to the tag output device as an image stream containing a plurality of image outputs which are to be displayed. The image output or stream may be transmitted by the web server of Fig. 11 or other server-based device, or received via a broadcast. A particular product 1202 which the user may wish to purchase is displayed within the image output on display. The odor tag may be specific to the product and output only whilst the product is being displayed within the video output, and change dependent on the product being displayed, e.g. as advertisements cycle round on the display within the image stream. Data for generating the odor tag may be transmitted to the tag output device alongside the image stream itself, or alternatively data for generating the odor tag may be generated separately, e.g. by tag output device itself, and output alongside the image output. When a user views the image output, the electronic device 702 can be used to identify and interpret the odor tag and its content, which accordingly causes the method according to Figs. 2 and 7 to be performed.

Fig. 14 depicts the components of an embodiment 1300 for outputting tags which may be used to display or otherwise output the machine-identifiable tag. Tag output device, depicted in Fig. 11, may comprise one or more or all of the components of the system 1300 for outputting tags. This system is in communication, e.g. bidirectional communication, with transaction server. The communication between the system and transaction server may be carried out via web server. The device may be in communication, e.g. bidirectional communication, with tag server. The device comprises a computer 1302 which comprises a memory 1304 and a processing circuitry 1308. The computer may be communicatively coupled to a display 1310 which may display information associated with the tag, e.g. product information. In addition, the computer is communicatively coupled with a tag output component 1312 for outputting forms of machine-identifiable tag, in particular non-visual and non-radio-frequency machine-identifiable tags, such as: (i) an audio tag, in which case the tag output component may be a speaker; or (ii) an odor tag, in which case the output component is an odor generator (see below). The device is also suitable for providing the electronic device itself, and in a general form the computer is suitable for providing the tag and transaction servers. The processing circuitry in conjunction with computer executable code stored in memory is thereby configured to cause the tag output component to generate non-visual and non-radio-frequency machine-identifiable tags, such as: audio or odor tags, for example alongside product information which might be displayed on display.

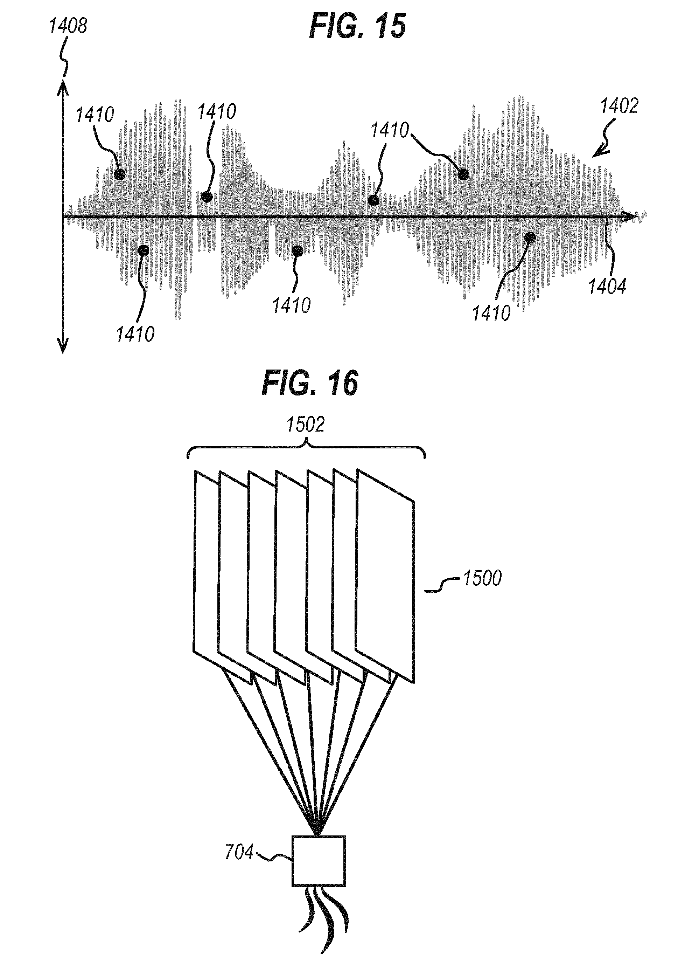

Referring to Fig. 15, the audio tag can take the form of an audio watermark, which can be understood as an analogue or digital signal embedded within the underlying audio signal. As will be known in the art an audio signal can be represented as a time varying amplitude, or put another way represented in the time domain 1402. Fig. 15 is a representation of an audio sample output by the tag output device in the time domain. The horizontal axis 1404 represents time whereas the vertical axis 1408 represents amplitude.

The tag server is configured to generate an audio tag 1410 which can be embedded in the time domain representation of an underlying audio signal, such as the audio signal transmitted within a pre-existing audio and/or video stream, or a broadcast audio signal, e.g. of a radio or internet audio stream. In this example, the audio tag is represented by a series of points in the time domain representation of the underlying audio signal. It will be appreciated that a greater or a fewer number of points can be used to implement the audio tag. It will also be appreciated that the points may be spaced periodically or non-periodically. Alternatively, the audio tag may be repeated periodically. The individual points may vary in duration. Although the points are shown as discrete, some of the points may be continuous. The points may be slight variations in the amplitude of the underlying audio signal at particular times which can be detected by an audio detector, such as a microphone, on electronic device, and which together represent a given audio tag. The arrangement, location and/or type of point used within the underlying audio signal provides the opportunity to generate a very large number of distinct audio tags, each of which can be associated with a different product. The points are inserted onto the underlying audio signal in such a way that they cannot individually or in combination be detected or perceived by the human ear, but can be detected by the audio detector on electronic device.

It will also be appreciated that the audio tag can be implemented in the frequency domain. For example, a series of discrete frequencies having either an associated amplitude and/or phase can be used to implement the audio tag. This signal can be embedded in the frequency domain representation of the audio sample on the output device.

In embodiments, the tag server may receive the underlying audio signal, e.g. from web server, for example the audio signal within the video stream (discussed above), and then multiplex the audio tag onto the underlying audio signal before passing the entire combined audio signal, for example within an integrated video stream, to the tag output device for output of the audio tag and its corresponding underlying audio (and video stream if present). The underlying audio signal received by the tag server may be audio and/or video streams associated with particular products, such as particular audio or video advertisements, movies, radio broadcasts etc.

In another embodiment, the tag server may generate an audio tag data which comprises data indicative of the audio tag itself and corresponding synchronization data for associating and/or synchronizing the data indicative of the audio tag with an underlying audio signal received separately at the tag output device. In this regard, the tag server stores data indicative of the audio tag itself and corresponding synchronization data for particular underlying audio and/or video streams, for example audio or video streams associated with particular products, such as particular audio or video advertisements, movies, radio broadcasts etc. The audio tag data is transmitted to tag output device which then generates the audio tag on an underlying audio signal received separately e.g. from web server, for example the audio signal within the video stream (discussed above), based on the data indicative of the audio tag itself and corresponding synchronization data. Thus, in this embodiment, the tag output device multiplexes the audio tag onto the underlying audio signal before outputting the multiplexed signal, for example alongside video output.

In principle, any means of embedding an audio tag can be adopted, such as that described in M. Davarynejad, S. Sedghi, M. Bahrepour, C.W. Ahn, M. Akbarzadeh, C. A. Coello Coello: "Detecting Hidden Information from Watermarked Signal using Granulation Based Fitness Approximation, Applications of Soft Computing: From Theory to Praxis", Springer, Series: Advances in Intelligent and Soft Computing, Volume 58/2009, ISBN 978-3-540-89618-0, pp. 463-472, 2009 which is incorporated herein by reference.

It will be appreciated that the audio tag is implemented in a way that it does not vary how the underlying audio sample would "sound" to the user. In other words, the presence of the audio tag is not evident to the human ear. Irrespective of how the audio tag is implemented, it will be appreciated that the purpose of the audio tag is to create a watermark which can be identified for processing a transaction.

A listening machine, which can be integrated within electronic device, is capable of detecting audio tag within the time domain representation of the underlying audio sample. The listening machine can "look" for particular amplitudes and/or frequencies at different times during processing of the received audio signal. A detection of a predefined series of amplitudes and/or frequencies in a particular order and/or at particular times can be indicative of the underlying audio tag.

The electronic device can thus comprise an audio detector, such as a microphone, for detecting the time domain representation of the underlying audio sample and thus for identifying the audio tag as the machine-identifiable tag.

Once the particular audio watermark has been identified by the microphone, and signal processing performed by the electronic device, the associated transaction can for the identified product is carried out as described above.

Referring to Fig. 16, the tag can also be implemented by way of an odor, i.e. the tag can be an odor tag or an olfactory tag. Reference is made herein to "odor". However, the terms "odor" and "olfactory" can be used herein interchangeably. An odor can be understood as a property or quality of a thing that affects, stimulates, or is perceived by the sense of smell.

A particular odor can be associated with a particular transaction. In this way, the particular odor can be implemented as an odor tag for the machine-identifiable tag. A machine with a so-called electronic nose can detect the particular odor, and thereby identify the underlying machine-identifiable tag, and carry out the associated transaction for the product indicated by the tag. The electronic device can comprise an electronic nose configured to detect the odor being a machine-identifiable tag. Data for generating the odor tag may be generated by the tag server upon request by the device on which the odor tag is generated.

Fig. 16 depicts an odor generation device 1500 which can used to generate odor tags. The device may be the tag output component. The odor generation device comprises a plurality of odors 1502. Each of the plurality of odors is a fluid or gas of known chemical composition providing a particular odor. Each of the plurality of odors is isolated from one another by any suitable means such as a cartridge, a cell, or a capsule by being contained within such means. These means may each be removabley or replaceabley located within the odor generation device 600. Each of the plurality of odors comprises a distinct odor, in the sense that the odors are capable of being distinguished from one another by an electronic nose. Hence, the odor generation device can be configured to release one or a combination of any of the odors (in varying amounts of each odor) when requested to generate a tag having a defined odor (e.g. formed from one or a combination of odors) by the tag server. It will be understood that only a portion of the odor may be released, thereby allowing the odor generation device to be reused. Of course, each odor can be replenished at any stage, by using for example a new cartridge, a cell, or a capsule containing the odor.

Thus, in embodiments, each of the plurality of odors may correspond to an odor tag. Each odor tag is capable of detection by the electronic nose. In respect of Fig 13 above, one of the plurality of odors can be released upon receiving a request from the tag server and thus provide a first odor tag. Thus, an electronic nose in the electronic device can detect the relevant odor, and initiate the transaction as described above to purchase the displayed product. A different odor can therefore be used to generate a second odor tag, which as explained above can correspond to the change of displayed product. Therefore, an electronic nose in the electronic device can detect the relevant odor, and initiate the transaction as described above to purchase the next displayed product.

However, it will be appreciated that more than one of the plurality of odors can be combined to create a new odor tag. In this way, the number of odor tags that can be generated from a limited number of odors is significantly increased. Thus, the odor generation device can select more than one of the pluralities of odors in a particular quantity for release simultaneously to generate an odor tag. In this implementation, the plurality of odors can be viewed as base odors which act in combination to produce a distinct odor. It will also be appreciated that the quantity of each released odor can be varied for each odor of the released odors. Similarly, the time for which each odor is released can be varied for each odor of the released odors. Hence, the tag server can provide a digital or analogue signal to odor generation device which is capable of producing a corresponding distinct odor, and thus odor tag, by selecting more than one of the pluralities of odors for release in particular quantities. Thus, the number of distinct odor tags which may be generated by the odor generation device is significant.

The electronic nose of the electronic device is capable of detecting the distinct odor tag, and can thereby initiate the corresponding transaction.

The underlying principal of an electronic nose is the provision of a sensor which can transform chemical information (of a particular odor) into associated electrical information. Hence, the detection of associated electrical information from an electronic nose allows the machine to identify a machine-identifiable tag, which takes the form of a particular odor.

This device may be a client computer comprising an odor generator, for example when a particular webpage is accessed via the client computer. This webpage may be a webpage comprising information of a product which is to be purchased upon completion of the transaction following validation of the tag. Once the particular odor has been identified by the electronic nose of the electronic device, the associated transaction can be carried out upon validation, as described above.

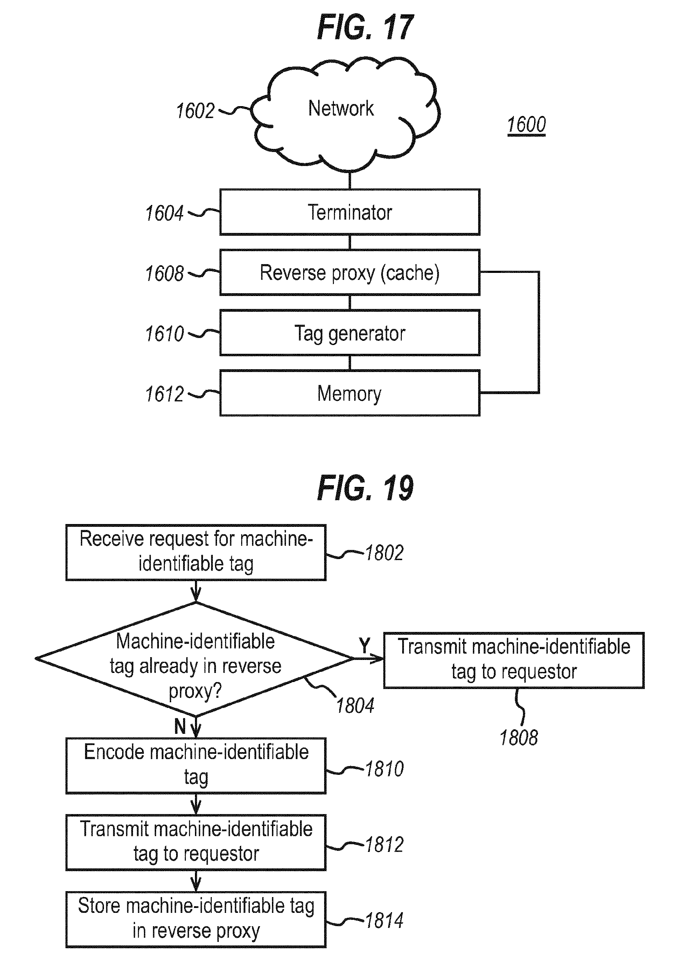

Fig. 17 is a block diagram of a tag processing system 1600 for providing a machine-identifiable tag (similar to that used by the systems illustrated in figures 1 and 5) in response to a request according to embodiments of the disclosure. Tag server, depicted in Fig. 17, may comprise one or more or all of the components of the system. The system consists of a secure connection terminator 1604 which is in communication, e.g. bidirectional communication, with network 1602. The network 1602 may be wholly or partially implemented within the system, or not at all. Communication between external devices, e.g. a tag output device, and the system 1600 may take place using a secure data transfer protocol, such secure socket layer (SSL) or transport layer security (TLS). The Secure connection terminator (such as an SSL terminator or TLS terminator) may be in communication, e.g. bidirectional communication, with a reverse proxy. Terminator terminates the secure data connection from the network, enabling the reverse proxy 1608 to interact with the network traffic received via the network. The reverse proxy is in communication, e.g. bidirectional communication, with tag generator 1610, which may be implemented as a web container, and is in communication, e.g. bidirectional communication, with a memory 1612. The tag generator is in communication, e.g. bidirectional communication, with memory. The components to of system may be implemented in hardware or software and may exist on the same device or multiple separate devices.

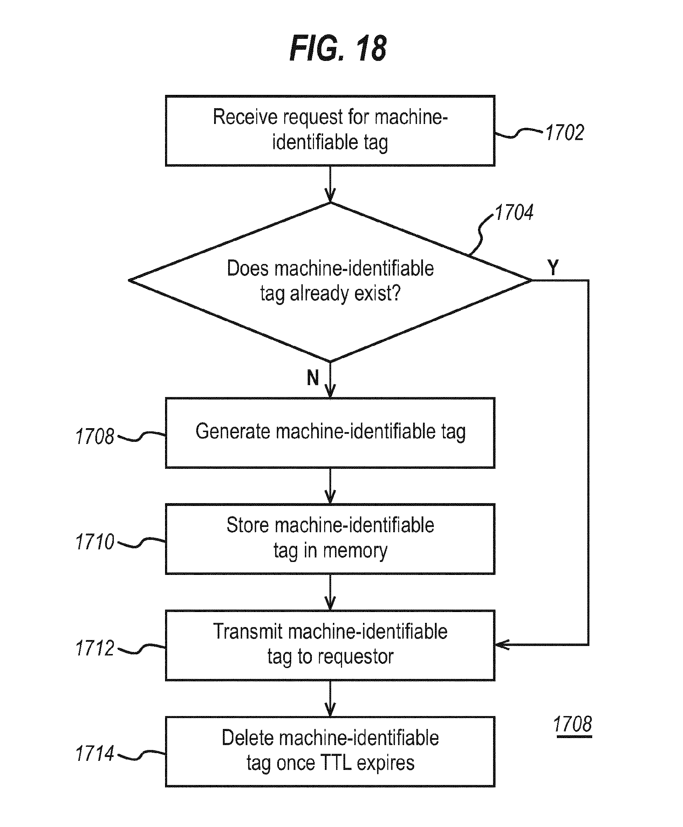

Fig. 18 is a flow chart depicting a method 1700 of generating a machine-identifiable tag (similar to that used by the systems illustrated in figures 1 and 5). At step 1702, a request for a machine-identifiable tag is received from a requestor. The tag processing system 1600, which receives the request for a machine-identifiable tag, may be the tag server, as shown in Fig. 7. The request for a machine-identifiable tag may originate from the tag output device, via a communication link with the tag server, or from the web server, via a communication link with the tag server. The requestor may be the tag output device, for example, a web browser running on tag output device in which the machine-identifiable tag is displayed, or the web server which provides the machine-identifiable tag to a client web browser to be displayed. In embodiments, the request for a machine-identifiable tag is requested by a client-side script, e.g. JavaScript, provided on the web page displayed in the web browser on tag output device. Requests for a machine-identifiable tag from the requestor may be generated, transmitted from the requestor or received by the tag processing system periodically, e.g. on the order of one request per millisecond or less, one request per ten milliseconds or less, one request per hundred milliseconds or less, one request per second or less, or one request per five seconds or less. By requesting the machine-identifiable tag within the aforementioned ranges, the time during which an expired tag is utilized or displayed by tag output device is minimized. The responsiveness of updates to displayed machine-identifiable tag to indicate changes in transaction progress is also improved.

At step 1704 if the machine-identifiable tag already exists in the memory, the method moves on to step 1712. If the machine-identifiable tag does not already exist, the method moves on to step 1708.

At step 1708, a machine-identifiable tag may be generated by tag generator. The machine-identifiable tag is generated with a defined time to live (TTL), at or after which the tag is deleted from the memory such that a new tag must be generated by tag generator in response to a future request for a machine-identifiable tag.

At step 1710 the machine-identifiable tag generated in step 1708 is stored in the memory. The machine-identifiable tag may be associated in memory with one or more items of unique information, e.g. a product code, stock keeping unit (SKU), a date, a time and a location. This information may be used to determine a product to be purchased in a transaction which is initiated by scanning the machine-identifiable tag.

At step 1712 the machine-identifiable tag is transmitted from the tag processing server to the requestor. Upon receiving the machine-identifiable tag, the requestor may display on display or otherwise output the machine-identifiable tag on the tag output device. In the preferred embodiment, the machine-identifiable tag is a scanable code, e.g. a QR code, and is presented on a web page. The web page on which the machine-identifiable tag is presented may be displayed on display in communication with the requestor. The web page on which the machine-identifiable tag is displayed may be an online shopping web page through which the purchase of goods may be carried out.

At step 1714, once the machine-identifiable tag's TTL has expired, the machine-identifiable tag is deleted from the memory in which it is stored. The deletion of tags from the memory may be handled by the memory itself. Alternatively, the management of the memory may be carried out by tag generator. By assigning a TTL to the machine-identifiable tag and deleting the tag from memory once the TTL expires, the number of unique machine-identifiable tags which must be stored in memory is vastly reduced. Machine-identifiable tags which are no longer in use are removed from the memory without any special handling and where a machine-identifiable tag is still required after the TTL of the current machine-identifiable tag expires, a new machine-identifiable tag is generated when a request is received from the requestor.

Fig. 19 is a flow chart depicting a method 1800 of providing a machine-identifiable tag in response to a request (similar to that used by the systems illustrated in figures 1 and 5). At step 1802, a request for a machine-identifiable tag is received from a requestor. The request for a machine-identifiable tag may be received by the tag server, as depicted in Fig. 13. The requestor may be the requestor as described in relation to Fig. 7: a web browser in which the machine-identifiable tag is displayed or a web server which provides the machine-identifiable tag to a client web browser to be displayed. In embodiments, the request for a machine-identifiable tag is requested by a client-side script, e.g. JavaScript, provided on a web page displayed in the web browser. Requests for a machine-identifiable tag from the requestor may be received periodically, e.g. on the order of one per millisecond, one per ten milliseconds, one per hundred milliseconds or one per second.

At step 1804, it may be determined whether the machine-identifiable tag requested in step 1802 exists in the reverse proxy. If so, the machine-identifiable tag is transmitted from the reverse proxy to the requestor in step 1808. If the machine-identifiable tag does not exist in the reverse proxy the method proceeds to step 1810.

At step 1810, the machine-identifiable tag requested in step 1802 is generated at tag generator and encoded as inline data, e.g. text. Inline data, such as text, is highly cacheable; thus, encoding the machine-identifiably tag as inline data allows the machine-identifiable tag to be more easily cached in the reverse proxy.

At step 1812, the machine-identifiable tag is transmitted to the requestor and the machine-identifiable tag is stored in the reverse proxy. By providing the machine-identifiable tag to the requestor from the reverse proxy when the machine-identifiable tag is available in the reverse proxy, the tag is transmitted to the requestor without the method of generating a machine-identifiable tag described in relation to Fig. 17 being carried out and without the request traversing the entire tag processing system. This results in the received requests for machine-identifiable tags being handled much faster and more efficiently and decreases network traffic within the tag processing system.

In embodiments, after step 1808 or 1812, upon receiving the machine-identifiable tag, the requestor may display on display or otherwise output the machine-identifiable tag on the tag output device. In the embodiments, the machine-identifiable tag is a scanable code, e.g. a QR code, and is presented on a web page. The web page on which the machine-identifiable tag is displayed may be an online shopping web page through which the purchase of goods may be carried out.

The method may further include a generating step, between steps 1804 and 1810, in which a machine-identifiable tag is generated according to the method described in relation to Fig. 17.

The machine-identifiable tag may be associated with one of more items of unique information, such as a product code, stock keeping unit (SKU), a date a time and/or a location. This unique information may be used to identify the machine-identifiable tag within the reverse proxy, or may be used in the process of initiating a transaction when the machine-identifiable tag is identified and interpreted by the electronic device.

If communication between the requestor and tag processing system, via network, is carried out in a secure manner, e.g. using SSL or TLS, transmitting steps and may further include transmitting the machine-identifiable tag from the tag generator or reverse proxy via the secure connection terminator. The outgoing network traffic from the tag processing system is then re-encrypted for transmission via network to the requestor.

Step 1810 may further include storing the machine-identifiable tag generated by tag generator in the memory of tag processing system. The machine-identifiable tag generated may also have a defined TTL, after which the machine-identifiable tag is removed from the reverse proxy and memory, if the machine-identifiable tag is stored in memory. The deletion of the machine-identifiable tag from the reverse proxy and memory may be handled by the memory, reverse proxy or tag generator, which deletes the machine-identifiable tag from both the memory and reverse proxy when the TTL of the machine-identifiable tag expires. Alternatively, the deletion of the machine-identifiable tag from the reverse proxy and memory may be handled independently by the respective devices. In embodiments the association may take place in a memory of tag server, such that when electronic device transmits a message to tag server indicating that a machine-identifiable tag has been identified and interpreted, tag server access the identification information associated with electronic device. The identification information may be requested by the transacting entity from the server once the transaction has been initiated

In embodiments, the platform may comprise a machine-identifiable tag, such as QR code. The machine-identifiable tag comprises data which permits the relevant transaction to be identified whilst omitting any data which is sensitive from a security perspective.

As explained above, the tag server is configured to generate, on request, the machine-identifiable tag. The tag output device will display or output an instance of the requested tag. The tag server thus associates the instance of the tag with the request for the tag. Hence, the tag server can process the transaction by identifying the association between the tag and the tag request.

The manner in which the instance is associated can be used to prevent exchange of secure information. In particular, the tag server can generate a tag which comprises data with a unique identifier associated with the instance of the tag. This unique identifier serves the purpose of identifying the instance of the tag, and thus the association between the tag and the tag request. Upon determining this association, the transaction can be processed as described above.

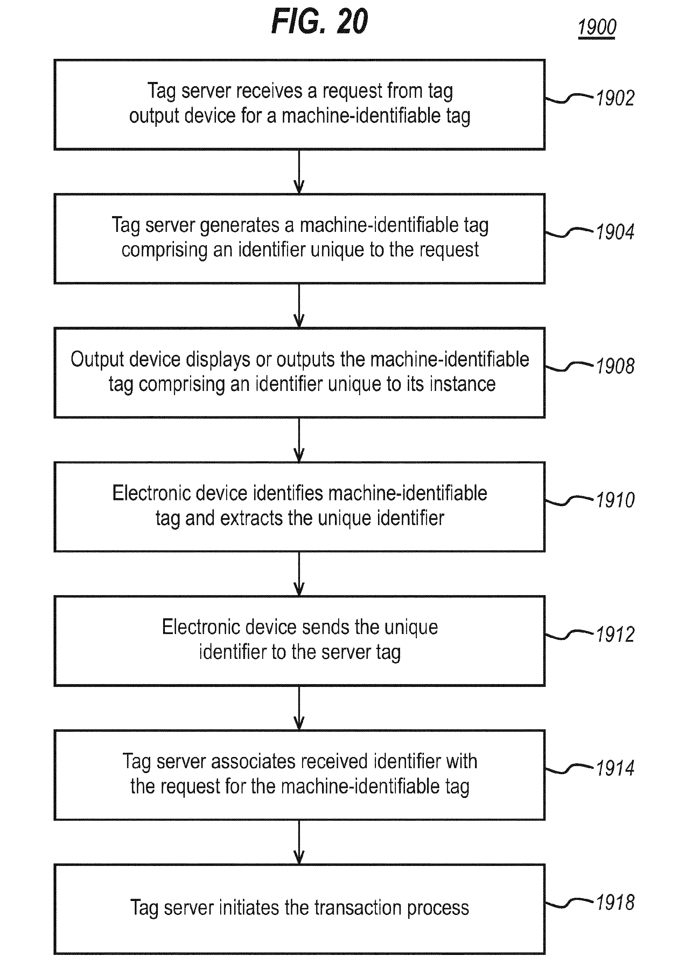

Reference is now made to Fig. 20 which shows how the system of Figs. 1 and 5 can process 1900 a machine-identifiable tag which does not comprise secure information.

At step 1902 the tag server receives a request from tag output device (or web server) for the machine-identifiable tag for display or output on the tag output device, either directly from a request sent by tag output device, or indirectly via a request sent from the webserver for a web page which is then output via tag output device.

At step 1904, the tag server fulfills the request and provides a tag comprising an identifier which is unique to the instance of the tag. In other words, the tag is unique in its instance, and no other identical tags will exist concurrently, for example have been output by the tag server.

It will be appreciated that an identifier unique to the instance of the tag can be generated in many ways. For example, the identifier can be contained within a textual representation of the machine-identifiable code implemented by way of a QR code. The identifier contained within the tag, and thus the machine-identifiable tag itself does not comprise one or more or all of the following data such as: product information, a product identifier, a product quantity, a URL on which the machine-identifiable tag is located, and user information including billing and payment information. This information can be said to be relating to the specific transaction being performed or initiated. As a result, system operates to generate and communicate a machine-identifiable tag which can be used to process a transaction, but which at the same time prevents exchange of any data which could be prejudicial to security and/or privacy of the transaction.

At step 1908 the tag output device displays or outputs the tag, which comprises the unique identifier. At step 1910, the electronic device identifies the machine-identifiable tag and in particular the unique identifier embedded therein.

At step 1912 the electronic device sends the unique identifier to tag server. It will be appreciated that the electronic device can identify the tag server to which the identifier is sent on the basis of a URL also embedded within the machine-identifiable tag. In this embodiment, the URL can also comprise the unique identifier. Alternatively, the electronic device will already know the URL of the tag-server to which it should send the unique identifier. In this way, the electronic device is only required to extract the unique identifier from the machine-identifiable tag.

On receipt of the unique identifier at step 1914, the tag server associates the unique identifier with an instance of the machine-identifiable tag, and thus the request for the current instance of the machine-identifiable tag. On determining this association, at step 1918, the tag server can initiate the transaction as described above by sending data to the transaction server such as the URL on which the instance of the machine-identifiable tag occurs (and to which the identifier relates) and data relevant to the user of the electronic device. In this way, the data which is transmitted is secure data transmitted between the tag server and transaction server. The data embedded within the machine-identifiable tag itself does not comprise any data which needs to be secured. Thus, the user of electronic device can use the electronic device to identify the machine-identifiable tag in the knowledge that the process of identifying the tag does not compromise the user's security.

Although the above example is described with respect to a OR code, it will be appreciated that other machine-identifiable tags can be generated so as to only contain an identifier unique to its instance, such as audio or olfactory (odor) tags.

Prior to the electronic device identifying tag to initiate a transaction, it may be required to first be securely authenticated and registered.

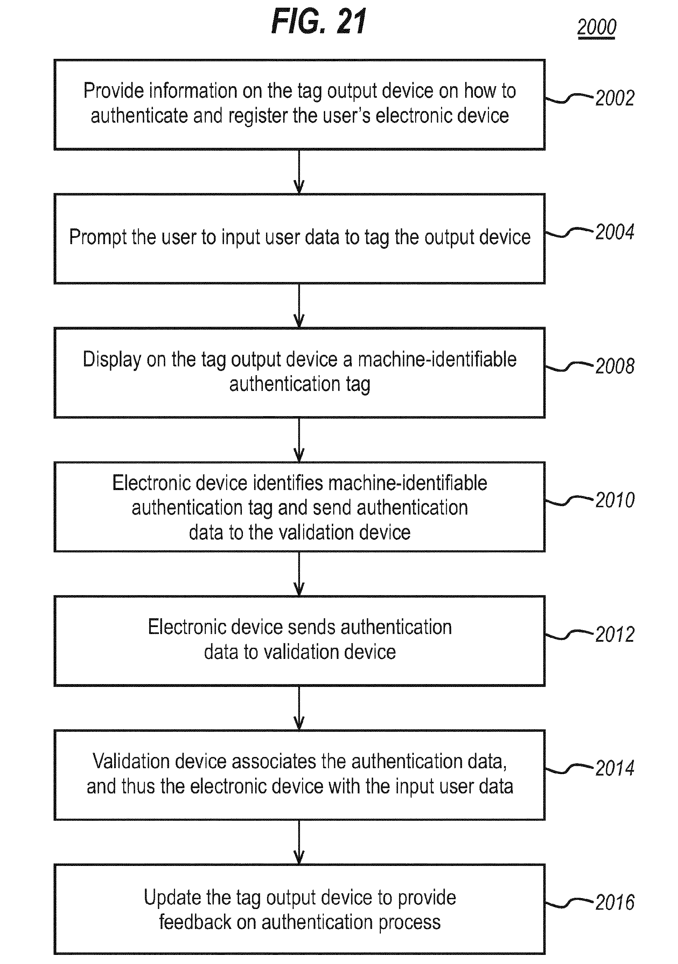

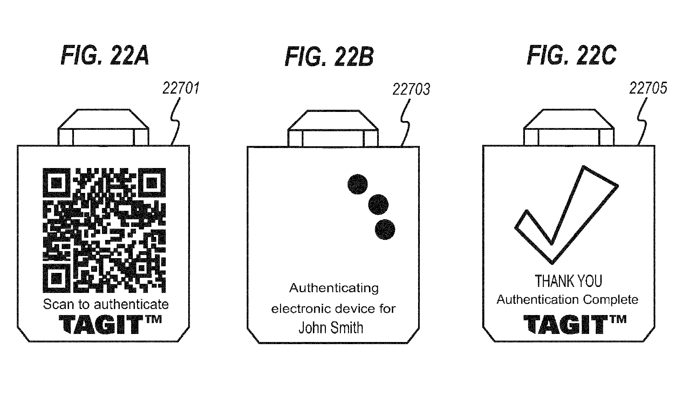

The process for secure authentication and registration of the electronic device is shown in Fig 21 in conjunction with particular display components shown in Figs. 22A, 22B, and 22C which are displayable on display of the tag output device during the authentication process.

At step 2002, in embodiments, the tag output device presents a user with more information concerning the use of the machine-identifiable tag by selecting the object overlaid, for example by displaying the text "What's this?" on display. The user is presented with information by the tag output device on how they can use their electronic device to initiate a transaction, as described above. However, it is also explained that the user must first authenticate and register their unregistered electronic device that they wish to use for this purpose. Display output will be updated to provide a user selectable object to authenticate and register the user's electronic device.

At step 2004, upon selection of a user selectable object to authenticate the user's electronic device via the tag output device, the display output is updated by the tag output device so that it prompts the user to enter user data into the tag output device identifying the user, for example data comprising at least one or more of: the user's name, postal address, email address, phone number, and payment information, such as credit or debit card details. This data is transmitted from the tag output device to a validation device, such as the tag server.

At step 2008, upon completion of the user entering the requested data, a machine-identifiable authentication tag 22701 is presented in display. The machine-identifiable authentication tag 22701 comprises data indicative of a validation device, such as the tag server, to which the electronic device can send authentication data when it has detected and/or identified the machine-identifiable authentication tag.

It will be appreciated that this machine-identifiable authentication tag may be displayed concurrently to the display prompting the user to input user data. It is also explained to the user via output that the electronic device to be authenticated and registered should identify the machine-identifiable authentication tag. The electronic device may use dedicated software for this purpose, such as software obtained by a downloadable app, and for subsequently performing transactions via the electronic device once it has been authenticated. An indication of where this software may be obtained by the electronic device can also be provided by the machine-identifiable authentication tag, such as a Uniform Resource Locator of the dedicated software. The machine-identifiable authentication tag may also comprise data that, when identified by the electronic device using any suitable nondedicated software, initiates a download of the dedicated software.

The machine-identifiable authentication tag comprises data indicative of a validation device, such as tag server, to which the electronic device can send authentication data. Authentication data comprises any data unique to the electronic device which allows it be identified uniquely amongst a plurality of electronic devices accessing and authenticating themselves with the validation device. For example the authentication data may comprise one or more of: device serial number, IMEI number, MAC address of transceiver components on the device, SIM number, device model number, device manufacturer etc. It will be appreciated that a combination of one or more of the aforementioned device characteristics may be used together to uniquely identify a particular device.

At step 2010, upon the electronic device identifying the machine-identifiable authentication tag, the electronic device sends the authentication data to the validation device.

Upon receipt of this process, at step 2012, the machine-identifiable authentication tag can be updated to present feedback 22703 that the authentication process is underway.

The validation device, such as tag server, at step 2014 associates the user data, received at step 2004, with the authentication data unique to the electronic device, for example by storing the authentication data of the electronic device with alongside the user data in a storage medium of the validation device, such as in a database associating the user data with the authentication data for lookup during subsequent transaction processing. The electronic device can now be recognized by the validation device and/or tag server as an electronic device which is authenticated and registered to initiate a transaction, as explained above. Thus, when the electronic device is used to subsequently identify a machine-identifiable tag when processing a transaction, the tag server recognizes the electronic device and can thus determine and/or obtain details of the user with which the device is associated.

Conversely, if an unregistered (i.e. an electronic device which has not participated in the above described authentication and registration process) electronic device attempts to identify the machine-identifiable tag, even if it does so using dedicated software, it will not be able to initiate a transaction since the validation device will have no user data with which to associate it. The validation device may even be configured not to communicate at all with any device that is not recognized, prior to checking whether the electronic device has associated user data.

The user can optionally be provided with confirmation 22705, at step 2016, that authentication and registration process is complete.

It will be appreciated that the validation device and tag server may be completely separate devices, in which case they are in communication with each other so that they can exchange user details during the processing of a transaction as explained above.

Hence, it will be appreciated from the above described process of Fig. 21 that only devices which are expressly tethered to user data, and have sent authentication data, which is unique to that device, to a validation device, can initiate subsequent transactions.

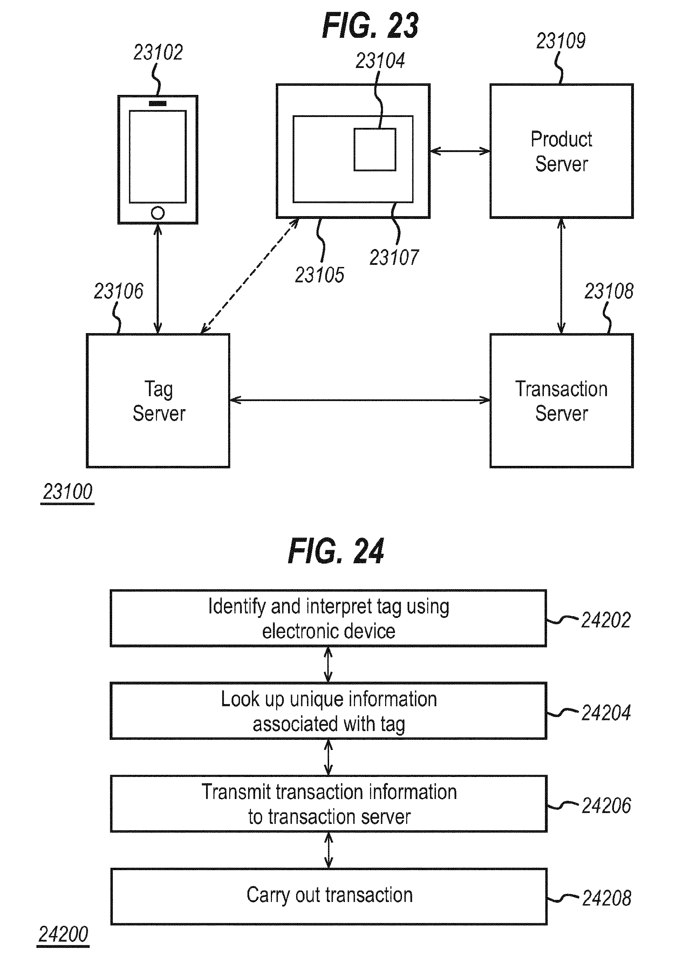

Fig. 23, depicts a system 2100 (similar to the systems of figs. 1 and 5) for performing transactions. An electronic device 23102 may be in communication, e.g. bidirectional communication, with a machine-identifiable tag server 23108. The electronic device may be a mobile phone, such as a smart phone, a handheld computer, an MP3 player, a tablet computer or any other device suitable for identifying and interpreting a machine-identifiable tag. The electronic device is registered with the tag server such that user information, e.g. name, address, and payment processing information, e.g. bank account, debit card, credit card number, name, security code, billing address, and/or expiry date(s), is associated with the electronic device, and stored in memory associated with the tag server (tag validation device). Output device 23112 (tag output device) is configured to display information relating to one or more associated products on a display 23114, e.g. price, and/or stock availability etc. The output device may be located near or adjacent products or articles in a shop to display one or more corresponding prices for the products or article. In addition, the output device is configured to request a machine-identifiable tag 23104 from the tag server for display on the display 23107 or otherwise output the machine-identifiable tag. Output device may be an electronic processing device, with a display, which may be a built-in display or a separate display connected to the electronic processing device. Tag server can (but not necessarily) be in bidirectional communication with the output device, e.g. for generation of the tag on request by a device on which the tag may be output. Tag server is in communication, e.g. bidirectional communication, with transaction server 2110 which is configured to perform the transaction upon validation by the tag server of the transaction through satisfactory identification of the machine-identifiable tag by the electronic device.

A product server 23118 may be used to provide a current price for a particular product or article to the output device for display on the display. The tag can be requested directly from the tag server by the output device on a regular or routine basis (e.g. hourly, daily or weekly), or when the output device is instructed by the product server to request such a tag, for example immediately following receipt of an instruction from the product server. The tag may be requested by the output device using a client-side processing component, such as client-side scripting, e.g. JavaScript or similar means. The client-side processing component is embedded software which executes on the output device and processed by the output device so that the output device can generate and send requests for the tag directly from the output device to the tag server based on information associated with its corresponding product. The output device can then receive the tag directly from the tag server and cause it to be displayed on its display.

The product server stores information (e.g. price and/or stock information etc.) about products for a particular location A (e.g. shop, other venue) and is able to transmit such information for display by a given one of a plurality of output devices at location A as determined based on a user instruction sent to the product server. The location A may include a plurality of such output devices, each of which is located adjacent a group of products providing information about the products.

Each output device at the location may be in direct communication, e.g. bidirectional communication, with the product server and controllable thereby to receive product information.

In the embodiment described above and depicted in Fig. 23, the output device may also be in direct communication, e.g. bidirectional communication, with the tag server and the tag server is not in communication at all with the product server. This embodiment reduces the processing burden on the product server, and provides enhanced security of tag generation and processing. However, it is contemplated in one alternative embodiment that the product server and tag server might also be in direct communication, with the product server passing on requests for tags, as received from each output device, to the tag server, and sending back each requested tag received from the tag server to the appropriate output device. This embodiment provides faster processing of tag requests, but security of the tag processing from a user perspective is decreased. In yet another alternative embodiment, it is contemplated that the product server and tag server may be integrated with each other into a single server device. This embodiment provides a good compromise between security of tags and processing burden. Communication between the device, tag, transaction and product servers can be by any suitable means, such as: wired or wireless communication, e.g. over a network, such as a local area network (LAN), or wide area network (WAN), e.g. the Internet, connecting the devices/servers. The communication between any given pair or all of the devices may be secure, e.g. encrypted, for example through use of secure socket layer (SSL).

Fig. 24 is a flow chart depicting a method 24200 of using a machine-identifiable tag to initiate a transaction. At step 24202, a user uses an electronic device 23102 to identify and interpret a machine-identifiable tag, such as a machine-readable code, e.g. a Quick Response (QR) code or a bar code which may be being displayed on the display 23107. The tag 104 may have been previously requested by the output device 24105, e.g. upon request, such as following the detection of user interaction with the output device 23105 (for example by the user interacting with the output device 23105 via a touch display or switch on the device 23105) or automatically sent to it from the tag server 23106. The electronic device 23102 can detect the machine-identifiable tag 23104 then displayed on the display 107 by any means appropriate to the tag 23104, such as using a built-in camera within the device 23102 to scan the tag 23104. The machine-identifiable tag 23104 may be displayed on any user interface which can be generated and displayed from output device 23105, and thereby read by the electronic device 23102.

At step 24204, once the machine-identifiable tag 23104 has been interpreted, e.g. identified, by the electronic device 23102, the electronic device 23102 communicates with the tag server 23106 (tag validation device) to look up the unique information associated with the tag in a memory of the tag server 23106. If the machine-identifiable tag 104 is associated with a particular type of good or product for sale, the unique information may be information which is uniquely indicative of the particular good or product which is for sale, e.g. a stock keeping unit (SKU) or other information uniquely identifying the good or product or type of good or product for sale.

At step 24206, transaction information is transmitted from the tag server 106 to the transaction server 23108. The transaction information includes the unique information identified in step 24204. The transaction server 23108 may be an e-commerce server of an online shopping website. Information about the user of the electronic device 23102 and/or information about the electronic device 23102 itself may also be stored on the tag server 23106 and transmitted to the transaction server 23106 in response to the identification of a machine-identifiable tag 23104 by the electronic device 23102. Information about the user may include electronic purchase information, such as payment details, e.g. credit or debit card details.

At step 24208, the transaction is carried out by the transaction server 23108, the transaction information is sent to the transaction server 23108 from the tag server 23106 and, optionally, information about the user of the electronic device 102 and/or information about the electronic device 23102 itself. Alternatively, the transaction information, information about the user of the electronic device 23102 and/or information about the electronic device itself may be transmitted from the tag server 23106 to the product server 109, e.g. via the output device 105 or directly do the product server 23109. The product server 109 may then communicate with the transaction server 23108 to carry out the transaction.

At step 24204, the tag server 23106 may also communicate with the output device 23105 to display information that the transaction is being processed, for example by sending a transaction processing message to the output device 23105. Upon receipt, for example, the machine-identifiable tag 23104 may update its output to display some indication that the transaction is processing. The tag server 23106 may also communicate with the electronic device 23102 to cause electronic device 23102 to display a processing indication on a display of the electronic device.

After step 24208, a confirmation message may be transmitted from the transaction server 23108 to the tag server 23106. The tag server 23106 may communicate with the electronic device 23102 to enable the electronic device 23102 to display additional transaction information, such as confirmation or failure information on a display of the electronic device. The tag server 23106 may also be in communication with the output device 23105 so as to cause the device to display or otherwise output a confirmation message. This confirmation may be inserted into a store of confirmations on the electronic device or product server 23109 at location A which can then act as confirmation of product purchase for local pick-up of the product from location A, or for delivery to another location, such as the user's home or workplace. The additional transaction information may be generated in response to a transaction completion message or transaction failure message.

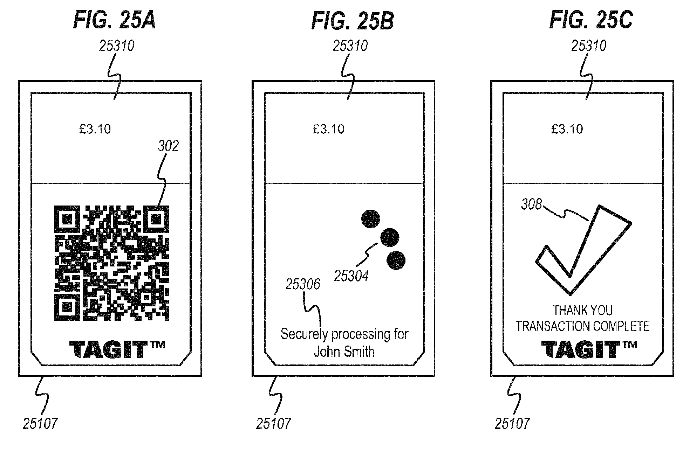

Fig. 25A depicts an example of the output of display 23107 showing product information 25310 and machine-identifiable tag 23104 which may be used in the present invention. The tag 23104 in one embodiment is QR code 25302, which may be displayed by the output device 23105. Once the QR code is scanned by the electronic device 23102, the processing indication depicted in Fig. 25B may be displayed by the output device 23105. A revolving animation 25304 is used to indicate that the transaction is processing. Any other suitable animation or indication that the transaction is processing may alternatively or additionally be used. Personalisation/validation information 25306 relating to or indicative of the user of the electronic device 23102 or specific to the electronic device 23102 itself may be displayed. This information has been transmitted to the output device 23105 by the tag server 23106. Once the transaction server 23108 has completed the transaction, tag server 23106 may communicate a confirmation message to the output device 23105 which may result in a display output such as that depicted in Fig. 25C being displayed.

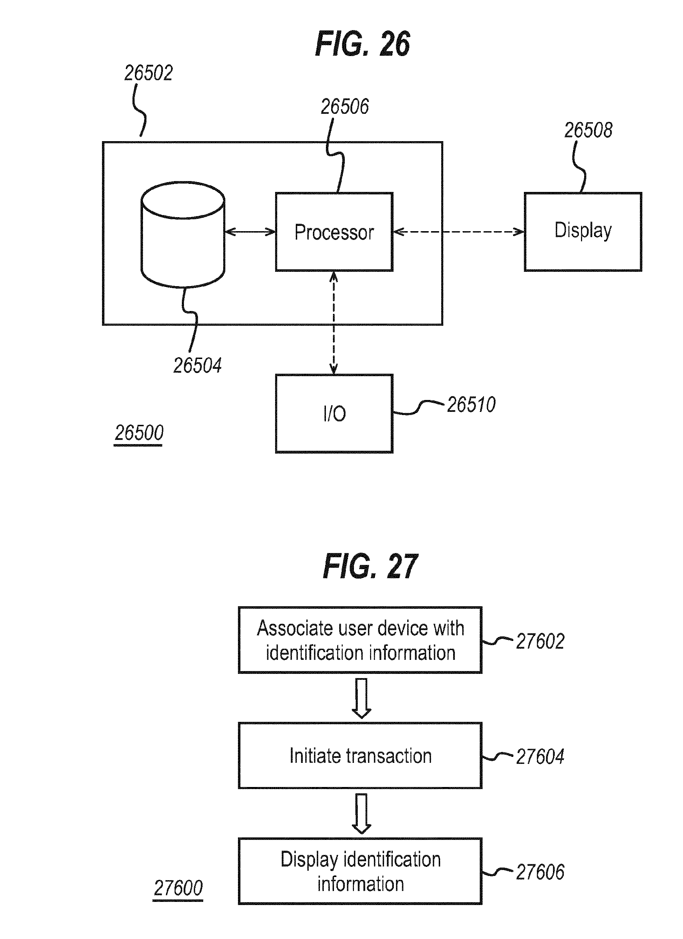

Fig. 26 depicts the components of a output device 26500 which may be used to display or otherwise output the machine-identifiable tag. Output device 23105, depicted in Fig. 23, may comprise one or more or all of the components of the device 26500. This device 26500 is associated with (e.g. connected to) transaction server 23108 via tag server 23106. The device 26500 comprises a computer 26502 which comprises a memory 26504 and a processing circuitry 26506. The computer 26502 may be communicatively coupled to a display 26508 (which for the output device 23105 is display 23107) on which a visual machine-identifiable tag 23104, such as a barcode or QR code, is output. Additionally, or alternatively, the computer 26502 may be communicatively coupled with another input/output means 26510 for outputting other forms of machine-identifiable tags. The device 26500 is also suitable for providing the electronic device 23102 itself, and in a general form is suitable for providing the tag and transaction servers 23106, 23108. The processing circuitry 26506 in conjunction with computer executable code stored in memory 26504 is thereby configured to perform steps of the methods as herein disclosed.

Fig. 27 is a flow chart depicting a method 27600 of validating a transaction. At step 27602, identification information (which may be some or all of the identification information mentioned above in connection with Fig. 25) is associated with the electronic device 23102. Identification information may be personal information, such as a user's name, an image of the user, a memorable name or phrase or any other information related to a user of the electronic device 23102. Alternatively, or additionally, the identification information may be related to the electronic device 23102 itself, such as a mobile telephone number, an international mobile station equipment identity (IMEI) or any other information related to the electronic device 23102. The step of associating the electronic device 23102 with the identification information may be part of a registration process for a service, an initial configuration of the electronic device 23102, or any suitable method of storing identification information related to the user or electronic device 23102. The association may take place in a memory of tag server 23106, such that when electronic device 23102 transmits a message to tag server 23106 indicating that a machine-identifiable tag 23104 has been identified and interpreted, tag server 23106 access the identification information associated with electronic device 23102. The identification information may be requested by the transacting entity from the server once the transaction has been initiated.

At step 27604, a transaction is initiated with between the user of the electronic device 23102 and a transacting entity, using information provided by the transacting entity. In a preferred embodiment, the transaction is initiated by interpreting with the electronic device 23102 the machine-identifiable tag 23104, such as a QR code 25302 displayed on display 23107, as depicted in Fig. 25A, provided by the transacting entity on a display 26508 of a device associated with the transacting entity 26500 (e.g. a client computer). The machine-identifiable tag 23104 may be any suitable tag for encoding information, such as those described above or any kind of visually identifiable tag, such as a barcode or QR code. Alternatively, the transaction may be initiated by any other suitable means of data transfer, for example, reading an alphanumeric code from the display and inputting the alphanumeric code into the electronic device 23102.

At step 27606, the identification information 25306 is displayed on the display 23107 of the output device 26500 associated with the transacting entity for validation of the transaction, an example of which is shown in Fig. 25B. By displaying the identification information 306 associated with the electronic device 23102 on the display 23107, the user of the electronic device 23102 can be certain that the transaction which will be, or is being performed, is correct.

Once the identification information 25306 has been displayed on the display 23107, the transaction may be performed by communication of transaction information between the tag server 23106 and transaction server 23108. Upon completion of the transaction, a confirmation message 25308 may be displayed on the display 23107, an example of which is shown in Fig. 25C.

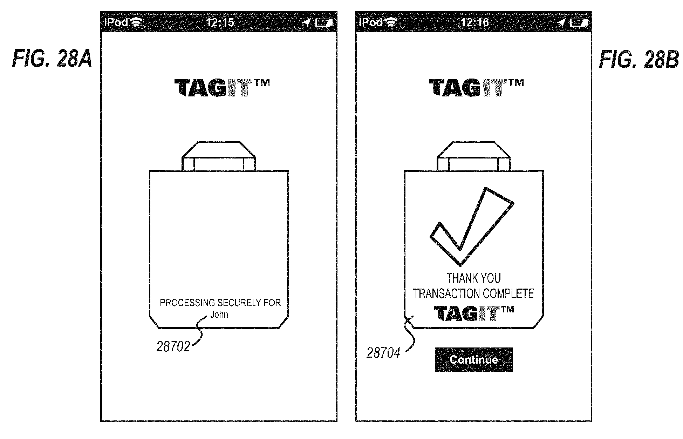

The identification information 25306 which is displayed on the display 23107 once the transaction has been initiated may also be displayed on the display of the electronic device 23102. Figs. 28A and 28B depict the output of the display of the electronic device 23102 at different steps of the method according to a preferred embodiment of the invention. Fig. 28A shows the identification information 28702 which is displayed on the display of the electronic device 23102 once the transaction has been initiated, for example after initiating a reading of machine-identifiable tag 23104 and commencement of transaction processing, and following receipt of the transaction processing message. Fig. 28B shows a confirmation message 28704 which is displayed on the display of the electronic device 12302 once the transaction is complete upon receipt of the transaction completion message. This provides the user with an additional validation of the transaction, since the identification information can be compared between the display of the electronic device 23102 and the display associated with the transacting entity.

Also disclosed herein are systems and methods that provide a transaction enablement platform. The disclosure may refer to the transaction enablement platform as a transaction facilitating platform, an e-commerce platform or electronic commerce platform. In embodiments, the transaction enablement platform may allow customers to quickly and securely make a purchase online or offline using their mobile phones or other mobile devices. In embodiments, the platform may differ from "e-wallet" technologies currently known to the art, as the transaction enablement platform may enable a transaction without requiring the capability (and the accompanying security mechanisms) that are needed to store an account balance on the mobile device. Instead, the platform may send a customer order directly to a merchant that has registered with the platform. In embodiments, the aim of the platform is to optimize the mobile transaction process, thus improving online sales conversions. The merchant may then address the order just as if the customer order and payment details had been sent through the merchant's own payment gateway, the merchant's electronic commerce website, or the like. In embodiments, the customer may then receive an order confirmation notification from the merchant, and the order may then be dispatched in accordance to delivery options selected by the customer. In one preferred embodiment, a customer may undertake a single action, such as a click or touch, in an application that displays, enabled by the camera of the mobile phone, a view of an object, and the single action initiates delivery of a completed order for the object, the order satisfying all of the necessary requirements for ordering the object, or a product that is described or represented by the object, from a merchant that offers the object.

The terms "electronic commerce platform," "transaction facilitating platform," or "transaction enablement platform" and similar terms should be understood to encompass a one or more of a range of physical machines, devices and other structures, including servers, browsers, applications (including browser-based applications and mobile applications), services (including web services and services delivered in a software-as-a-service (SaaS) model), application programming interfaces, software code modules, software libraries, data structures, databases, and other structures that are involved in enabling the capability to execute a transaction relating to goods (physical or digital) or services in an electronic environment or in a physical environment with assistance by any of the foregoing. The term should further be understood to encompass the various structures described throughout this disclosure except where context indicates otherwise.

The term "mobile device application" should be understood to encompass one or more of a range of physical machines, device and other structures, including servers, browsers, applications (including browser-based applications and mobile applications), services (including web services and services delivered in a software-as-a-service (SaaS) model), application programming interfaces, software code modules, software libraries, data structures, databases, and other structures that are involved in enabling the capability to execute functionality that is attributed in this disclosure to a mobile device application. The term should further be understood to encompass the various structures described throughout this disclosure except where context indicates otherwise.

Such a platform may offer several advantages to merchants, advertisers, and consumers alike. The platform may significantly reduce purchase abandonment on e-commerce websites and help to immediately capture impulse purchases. Merchants and advertisers may also obtain valuable geographic and demographic data about customers, turning browsers into customers and capturing future repeat customers. The platform may also facilitate turning advertisements into sales channels, enabling consumers to buy direct from print, poster, billboard and real world ads as well as other product placements. Customers using the platform may benefit from fast purchases after registration, with single-click functionality. Customers may not have to register with every single e-commerce website they browse and may not have to enter shipping or payment details in multiple retailer websites. In addition to solving a number of problems for the convenience of consumers, the platform provides many advantages to marketing channels, such as brands, agencies and developers. For example, in addition to many other technical capabilities disclosed throughout this disclosure, the platform may provide clients and advertisers with other benefits, such as increased sales opportunities and "accountable" revenue-generating advertising while adding a compelling revenue generating feature to mobile applications.

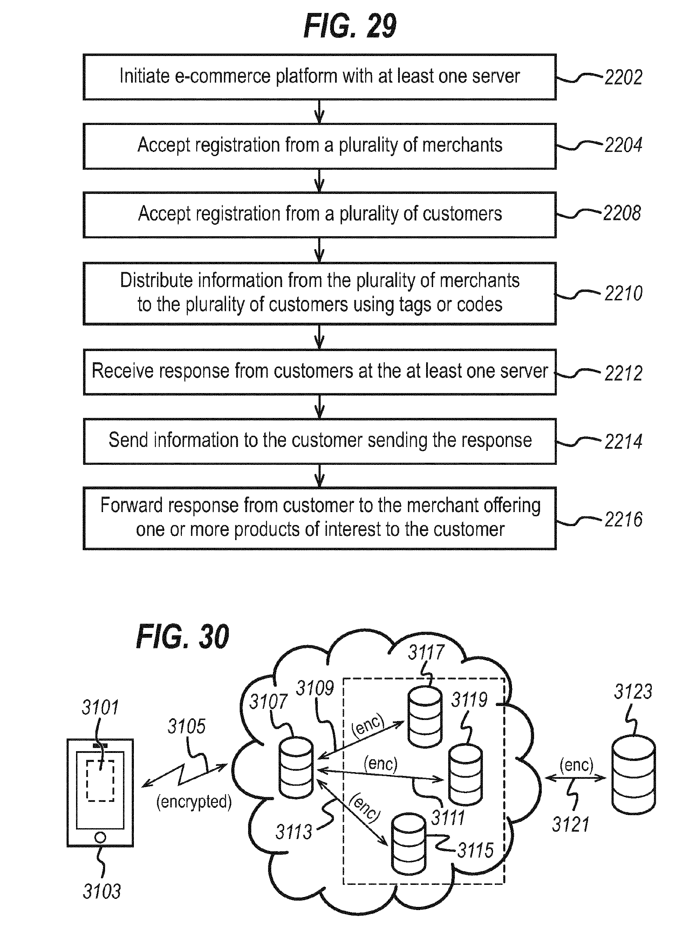

In embodiments and in Fig. 29, the platform may comprise a method for transaction enablement. First, the e-commerce platform may be initiated with at least one server 2202.

Registration from a plurality of merchants and a plurality of customers may then be accepted 2204, 2208. Additionally, the method may comprise distributing information from the plurality of merchants to the plurality of customers using machine-readable tags 2210. At step 2212, the platform may receive responses from customers at the at least one server. Additionally, the method may comprise sending information to the customer sending the response 2214. The method may comprise then forwarding the response from the customer to the merchant offering one or more products of interest to the customer 2218.

In embodiments, the platform may utilize machine-readable tags in order to facilitate each platform transaction. Such tags may be embodied in various forms known to the art, such as, but not limited to, QR codes and bar codes. In embodiments, the machine-identifiable tags may be characterized as either an "online" or "offline" transaction tag. The characterization of online and offline tags does not mean that the customer or user of the code or tag is not connected to the internet, rather the characterization is based on the medium from which the user or customer acquires or scans the machine-identifiable tags. In embodiments, online tags may be, but are not limited to, tags scanned via websites, desktop computer locations, or mobile device locations. Offline tags may be scanned through media such as, but not limited to, TV advertisements or print advertisements. Additionally, machine-identifiable tags may be scanned or acquired via audio, such as when embedded in an audio stream such as a video or radio broadcast. Machine-identifiable tags may comprise information regarding a specific product, such as the product's size, color, manufacturer, and the like. Machine-identifiable tags may comprise information regarding a plurality of products. For example, a single machine-identifiable tag may represent several products of a merchant that appear on a display or poster that bears the tag. An application may resolve the tag and associate it with presentation information for the user interface of an application of a mobile device, such as allowing the user to select which product(s) the user wishes to purchase in the interface. Similarly, a tag may resolve to a single product, but allow variations of size, color, or the like.

Placement of tags and acquisition/scanning of such tags may differ depending on the medium in which the machine-identifiable tag is placed. For example, in embodiments, mobile device tags may have a "Touch to Buy" designation, whereas printed materials such as an advertisement in a magazine may require a user to use a barcode scanner, or similar device, in order to utilize the machine-identifiable tag embedded within the advertisement. An application on the user's mobile device may recognize the "Touch to Buy" information embedded in the tag and present an interface element (e.g., a "Buy" button icon on the touch screen of the mobile phone) that allows an order for the item represented by the tag to be initiated by the user's touch. Audio tags may require a customer to activate a devoted transaction enablement platform mobile device application in order to acquire tags, while also enabling the mobile device's microphone to pick up the audio tags. Mobile device applications may have "Speak to Buy" designation, where, via the microphone of the mobile device, a user's command (e.g., "Buy this Product") is delivered to a speech processing facility of an application on the mobile device, initiating an order that otherwise is handled in a manner similar to the other embodiments disclosed herein. In such embodiments, once a customer has navigated to the "Touch to Buy" or "Speak to Buy" designation, the mobile device application may load product information embedded within the machine-identifiable tag and being the transaction process according to the various processes and embodiments disclosed herein.

In embodiments, the transaction enablement platform architecture may comprise a mobile device application for customer use. The platform architecture may also comprise a dedicated platform server or set of dedicated platform servers, as well as a business dashboard and a consumer dashboard. Merchant users may be provided with a unique API key with which they can ensure seamless integration with the platform server environment and their own e-commerce environment.

In embodiments, the transaction enablement platform may comprise several key components. In embodiments, the transaction enablement platform may comprise a customer's mobile device and a client/merchant data point. Such a data point may be the single point of entry and exit for data through the platform network's DMZ or firewall. In embodiments, the transaction enablement platform may comprise machine-identifiable tag data caching. Such caching may occur within multiple layers of the transaction enablement platform depending on the type of data. In embodiments, each user's initial session may only last a certain time period from when the user scans a machine-identifiable tag. Such data caching may occur inside the server, database, or firewall layers of the transaction enablement platform architecture.

All embodiments herein can require biometric authorization before carrying out various processes described herein. The device 702, 710, 102, 104, 602, 1300, 2302, 2312, 23102, 23105, 26500, or server 720, 708, 718, 108, 110, 602, 2318, 2308, 2310, 23106, 23108, 23109 or transaction enablement platform may comprise biometric authentication, such as "fingerprint" authentication components to control or restrict the various processes associated therewith. In particular, access to each user account on the device and/or server may be restricted so that access is gained only when a valid determination of biometric (e.g. fingerprint) authentication corresponding to the user, device or account has been detected by the device. The devices can have electronic components for performing such a biometric determination as explained further below.

Such authentication determination may comprise determining valid authentication for a user account or electronic device having corresponding payment information (e.g. payment instrument security code, such as CSC; see below), such that the electronic device only provides the payment instrument security code to the corresponding server in the transaction enablement platform when a valid authentication determination has been detected by the device.

Moreover, such authentication may also involve and identify merchants requesting machine-identifiable tag, as well as customer/other user and device identifiers requesting information from the transaction enablement platform. Such functionality may be achieved through using secure keys and unique machine generated IDs for devices and users of the platform, among others. Another key component of the transaction enablement platform may comprise the creation and delivery of machine-identifiable tag, referred to as generation of a machine-identifiable tag below. In embodiments, such tags may be delivered to a requesting device, a merchant's platform, or to an offline source. Such offline tags may trigger a request to pull data directly from a merchant. Such requests may be performed within a Java layer that is replicated to a standby version of the live transaction enablement platform system, while also having a third redundant layer to ensure that the service is available at all times to each offline source. In embodiments, the transaction enablement platform may comprise a payments transfer system. In embodiments, when a user selects the "Pay Now" option on the mobile device app interface, the transaction enablement platform may then pull the request into the Java layer, blending the user's delivery and payment card data with the order data, and send such information to the merchant. The transaction enablement platform may also comprise encrypted storage components. In embodiments, user and order data may be split into areas that are either visible or encrypted. Sensitive data such as payment card data, user password or passcode (authentication) data may be encrypted at all times. In embodiments, the transaction enablement platform may comprise a merchant dashboard. The merchant dashboard may comprise an online dashboard where merchants can review metrics related to aggregated user information, as well as specific information on how their customers are using the transaction enablement platform, among metrics.

In embodiments, the transaction enablement platform may comprise the generation of machine-identifiable tags, referred to as machine-identifiable tags, audio tags, and/or odor tags in the disclosure found below. Such tags may be deployed in the form of, but are not limited to, a QR (quick response) code, the implementation of which is generally known to the art. In embodiments, the machine-identifiable tag can take different forms according to the present disclosure. In general, according to the embodiments presented below, the machine-identifiable tag may not necessarily be a tag which is identifiable visually or via radio-frequency detection. A tag according to the present disclosure may be a non-visual and/or a non-radio-frequency machine-identifiable tag, such as an audio tag and/or an odor tag. The machine-identifiable tag may have visual elements that are both machine-readable and understandable by a human observer, such as visual effects, branding elements (e.g., design marks or logos), meaningful text content, or the like. The machine-identifiable tag may contain information such as a product SKU (stock keeping unit). The product SKU may be deployed within the transaction tag in merchant-enabled JavaScript form, or may be "static" if the machine-identifiable tag is deployed in an offline medium. The machine-identifiable tag may also contain the merchant/shop API (application programming interface) key to enable to platform to recognize and authenticate a merchant's e-commerce platform when the merchant requests creation or display of a machine-identifiable tag. Similarly, in embodiments, the machine-identifiable tag may be deployed in an audio format. In embodiments, the audio tag may comprise a 16 bit message or watermark in sound waves from the upper and lower ends of the frequency. Such a message may correspond to a database entry within the transaction enablement platform for a SKU. Machine-identifiable tags may be deployed or embedded by one or more tag output devices of various suitable types, as referred to and more particularly described below and as known to those of ordinary skill in the art, such as QR code generation tools, audio tag generation tools, or odor generation technology. As described earlier, machine-identifiable tags may be characterized as "offline" or "online." Offline tags, such as those placed within printed ads or audio tags, are static and unchanging for a contracted time. Such tags are persistent within the database so long as a merchant is actively involved with the transaction enablement platform. A user or customer scanning an offline or audio tag may use the machine-identifiable tag to complete the purchase at any time. In embodiments, online tags may be dynamic. Such tags may be generated from a merchant's e-commerce platform and are valid only for a specified period of time. After this time period, a user or customer may need to refresh the online page and scan the tag again in order to complete a purchase. In embodiments, when requesting a machine-identifiable tag, the platform may generate a unique API Key for each client/merchant. The client/merchant site may then modify its CSS (cascading style sheets) files to include space for the machine-identifiable tag on their product display pages. The client/merchant site may then insert the platform Javascript code, which has space for the SKU request when a customer places an order.

In embodiments, the transaction enablement platform may be used to facilitate a platform enabled transaction process, referred to as machine-identifiable tag process below. The transaction process may comprise the deployment of a mobile device application associated with the transaction enablement platform. Such an application may comprise a welcome screen from where users can register their details or login directly to the application if the user has already registered. Each device that a user adds to the transaction enablement platform app may be given a unique ID, which is added to the user's account information. The application may be used to facilitate a transaction upon the scanning of a machine-identifiable tag. Once the tag is scanned, the corresponding product information and any other details or variables may be displayed to the user. The default delivery address and payment method may also be displayed to a user of the app. The user may then choose to submit the order with payment to the merchant responsible for providing the product. While the purchase submission is relayed from the transaction enablement platform to the merchant's platform for processing, a screen may be displayed indicating that the order is pending. Once the order and payment are successful, a "purchase complete" screen may be displayed, and the purchase order information may be available from the application menu navigation screen.

In embodiments, the transaction enablement platform may comprise a user registration process. The mobile device application may be used to facilitate the user registration process. Upon accessing the transaction enablement platform, a user may be prompted to register his or her information with the transaction enablement platform. The user interface of the mobile device application may be deployed to help guide users through the registration process. The app may provide text instructions to help the user as well as using progress indicators such as changing user interface background colors or icons. Users may be prompted to allow access to the camera, microphone, and location settings of their device. In embodiments, a customer may register over HTTPS. Such registration may comprise first providing an e-mail address and a password for account creation. Additionally, the customer may be required to choose a passcode, as well as payment details and other identifying information such as date of birth, gender, and the like. The platform may then be used to create a secure method of identification for the device and the user. In embodiments, the secured identification may be generated using the transaction enablement platform's secure platform layer. Such a secure platform may comprise a customer and client data entry/exit point, as well as data caching, fingerprint checking and creation, as well as encrypted storage systems. The customer's registration details may be stored on a secure transaction enablement platform devoted server, as the payment details may not be stored on the user's device. In embodiments, the mobile device application may store the customer's passcode and/or CVV (credit verification value); however, in other embodiments the customer's financial data may be stored remotely, such as on a host server, then merged at the appropriate point for delivery of the order to the merchant's order system. Thus, sensitive personal information, such as credit card number and CVV information, can be segregated and stored separately, with, for example, some information stored on the mobile phone and other information stored on a host server. This aspect of the disclosure is now explained in greater detail below.

In a general sense, a payment instrument verification data, such as a card security code (CSC), is typically associated with a payment instrument such as a payment card for transactions. References are made below to CSC, but this should not be construed as limiting on the disclosure, for which the concept of a payment instrument security code is also applicable. The CSC may include: card verification data (CVD), card verification number (CVN), card verification value (CVV or CVV2), card verification value code (CVVC), card verification code (CVC or CVC2), verification code (V-code or V code), card code verification (CCV), or signature panel code (SPC). References are also made to payment card data, but this should also not be construed as limiting on the disclosure, for which payment instrument data is also applicable.

The payment instrument data (e.g. payment card data) is unique data which is required for effecting an electronic payment by the instrument in a particular transaction which identifies the payment source, such as user account, name and/or other data, such as instrument expiry date. The payment instrument verification data (e.g. CSC) comprises one or more separate data items, such as a numerical and/or alphanumeric code, which is associated to the payment instrument data, and can be required in certain circumstances, for example in a so-called "card not present" (CNP) transaction. In a general sense, the disclosure below provides for separate transfer and/or storage of payment instrument verification data and payment instrument data within the electronic device and between the device and server. The transfer and/or storage may be secure, and different security mechanisms may be employed for the storage and transfer. Thus, security of the platform is enhanced.

The CSC can be required so that a transaction involving a so-called "card not present" (CNP) transaction can be performed. In essence, the CSC provides an additional piece of verification data which indicates that the owner of an underlying payment card is likely to have the card in their possession. Some merchants will only accept payments when the CSC is provided in addition to at least one, some or all of the following card data: a payment card number, at least one date associated with the payment card, at least one address associated with the payment card, and at least one name associated with the payment card. Where a CSC is deemed necessary for a transaction to ensue, it is normally not permissible or possible to store the CSC along with the payment card details outlined above, and in particular to store all of this information in a single remote location (e.g. on a server). Doing so can be disadvantageous from a security perspective, since a breach of a server in which all of this information is store could lead to an influx of fraudulent CNP transactions. Instead, the user is required to manually enter the CSC each time a transaction is to be performed.

In embodiments, with reference to Fig. 30, the mobile application described herein, which is executable on the electronic device 702, 710, 102, 104, 602, 1300, 2302, 2312, 23102, 23105, 26500 as explained above, can offer as an additional function that of storing the CSC 3101 separately from the payment card data outlined above, some or all of which are stored in a remote server 3107, which can be the servers 720, 708, 718, 108, 110, 602, 2318, 2308, 2310, 23106, 23108, 23109 or the transaction enablement platform above which are used to initiate a transaction, or shared across multiple servers 3115, 3117, 3119. The CSC is stored separately from the payment card data, for example on the mobile device 3103, e.g. in a secure memory location. This way, there is no single location in which all the payment information (i.e. the CSC and the payment card data) is stored to perform a CNP transaction. In particular, there is no single location where all payment information (CSC and payment card data) for one or more, or all users of the platform is assembled, i.e. it is distributed across multiple nodes (multiple electronic devices and one or more servers) in the system which greatly reduces the security risk associated with any breach of one part of the system.

When it is necessary to carry out the transaction, the mobile application obtains the CSC data from memory, and sends 3105 the CSC data to a server 3107, where it is combined with the remaining payment card data and sent 3121 to a merchant server 3123 to authorize the transaction. Alternatively, all of the relevant payment information (i.e. the CSC and the payment card data) can be collated by the mobile application at the electronic device by obtaining the CSC from memory, and requesting and receiving the payment card data from the server 3107 or multiple servers 3115, 3117, 3119. The collated data can then be sent directly to the merchant server 3123 for authorization. Alternatively, the server at which the data is collated can also be the merchant server 3123. To further enhance the security of such a system, the CSC data can be encrypted within the mobile application and stored in encrypted form on the mobile device in the secure memory location. The mobile application is executable to encrypt on entry of payment card information, and decrypt the CSC for a particular payment card as required for sending to the transaction enablement platform when a payment transaction is being performed. Multiple encryption/decryption steps can be used by the mobile application to further increase the security. The CSC stored in a secure location on a mobile device can be encrypted/decrypted according to a first encryption algorithm known only to the mobile device/application 3103. Hence, when the process for sending the CSC to the server 3107 is initiated, the CSC is decrypted according to the first encryption algorithm. However, before this CSC is sent 3105 to the server, it is re-encrypted according to a second encryption algorithm known to both the mobile device/application, 3103 and server 3107. This re-encrypted CSC is then sent 3105 to the server 3107 (such as asymmetric encryption which uses a public key, and a private key), where it is decrypted according to the second encryption algorithm. The two encryption/decryption process means that the a security breach in respect of intercepting the transmission 3105 and knowledge of the first encryption algorithm, would still require the knowledge of the second encryption algorithm to obtain the underlying CSC. As an alternative, the second encryption algorithm may directly encrypt the verification data that has already been encrypted by the first encryption algorithm.

As mentioned above, the remaining payment card data can be dispersed among multiple servers 3107, 3115, 3117, 3119. The more servers across which the necessary data is dispersed, the greater the security. Of course, the data transmitted to and obtained from the servers can be encrypted 3109, 3111, 3113, to further enhance the security. The encryption algorithm used can vary from server to server, or it can vary according to the particular piece of data being encrypted. Further security enhancements can arise by dispersing a particular individual piece of data (e.g. payment card number) across multiple servers. Of course, the data sent across link 3121 to the merchant server can also be encrypted.

In addition, the above described system can impose a further security measure. The server at which the above data is combined so that it can be sent to a merchant server, or the merchant server itself, can also look for an unique identifier within the received data which is specific to a given user, which can be sent either by the mobile application or from a further server with which the mobile application is in communication. This allows the merchant server to verify that the transaction is non-fraudulent, since it can be said with greater confidence that the data which has been received or which was assimilated from various sources, i.e. the mobile application's encrypted CSC, encrypted payment card details across multiple servers, and a verifying unique identifier. It would otherwise be difficult for an unscrupulous individual to obtain all of the required information. Alternatively, the unique identifier can be used by the server 3107 to obtain the payment card details themselves. In this case, the unique identifier can be tethered to a particular set of payment data or even URLs from which all of the desired payment data can be obtained. The mobile application can also be used to store multiple CSCs, all of which are associated with a respective payment card and/or user.

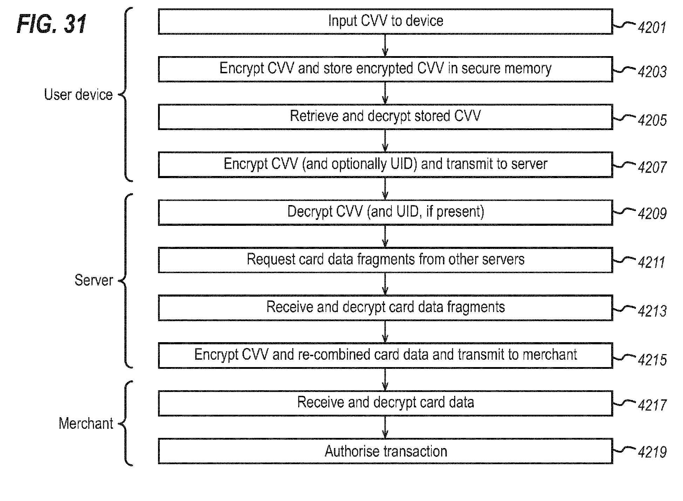

As can be appreciated, from the perspective of the user, the transaction has proceeded with minimal intervention. An example transaction process is depicted in Fig. 31. At any stage prior to initiating a transaction using the mobile application, the user inputs 4201 a CSC to a mobile device/application 3103. At this stage, the CSC is encrypted and stored 203in a secure memory. As mentioned above, this encryption may be by way of a first encryption/decryption algorithm. When it is desired to initiate a transaction, the mobile application retrieves and decrypts the stored CSC 4207. As mentioned above, the CSC is then re-encrypted 4209 by the mobile device/application 4203 using a second encryption/decryption algorithm and sent to the server 3107. The unique identifier (if present) may undergo this decryption, re-encryption process. The server 3107 then decrypts the CSC, and unique identifier if present 3211. The server 3107 then requests 4213 the remaining payment data (or fragments thereof) from the other servers 3115, 3117, 3119. These fragments are then decrypted at the server 107. The encryption/decryption algorithms used may be unique for each server including the merchant server, or each transaction process to enhance security, similar to that described above in respect of the mobile application and server 3107. Clearly, such a process can be employed in respect of the communication between the merchant server 3123 and server 3107. The server 3107 then combines the CSC and data fragments, and re-encrypts 4215 the combined data for transmission to a merchant server 3123. The merchant server can decrypt 4217 the received data and authorize the transaction 4219.

In embodiments, the machine-identifiable tag and mobile device application may be used to link several e-commerce accounts with a single user. In a non-limiting example, a user may store a plurality of payment methods, billing addresses, delivery addresses, loyalty account information, and the like in a single mobile device application profile associated with the user. In such an example, the user may go to several different client/merchant locations and be recognized while using the same mobile device application. Such embodiments may also include storing other identifying information such as passport details, insurance information, and the like, as well.

In embodiments, the mobile device application may comprise navigation components in order to facilitate a customer's use of the transaction enablement platform. Such functionality may comprise a scanning option, which navigates the user to the machine-identifiable tag scanning screen. The mobile device application may store previous orders that may be reviewed according to creation date, among others. The stored orders and purchase history may display information such as location of the sale, payment method, the merchant, and purchase price, among others. The mobile device application may allow a customer to add new customer information or edit customer information, such as delivery addresses. Changes to such information may require the customer to enter a passcode, verifying the customer's identity and confirming the change. Likewise, the mobile device application may comprise functionality where customers may add or edit payment details such as credit card information. Changes to such information may require the customer to enter a passcode as well. The mobile device application may comprise a settings function, where the user can access information about the application itself, including version, build, date information, and links to the platform support site, among others. The mobile device application may also comprise a feedback option, allowing for users to compose a message to platform developers for feedback.

In embodiments, the transaction enablement platform process may comprise scanning machine-identifiable tags, referred to as interpreting the machine-identifiable tag in the disclosure found below. In online embodiments, scanning a machine-identifiable tag may be accomplished with "touch to buy" options, "click to buy," or "speak to buy" options, among others. In offline embodiments, scanning the tag may comprise using a mobile device to capture an image or read the tag using dedicated software. In audio embodiments, the machine-identifiable tag may be scanned by a consumer's mobile device's microphone, among others. Once a customer scans a product's corresponding transaction tag, the platform server may send a "get product" request for the product's details from the client/merchant's e-commerce platform. The Client/merchant's e-commerce platform may send the transaction enablement platform the product details, which may then be displayed via the mobile device application interface.

In embodiments, once registration is complete, the customer may be able to authorize payments for products and merchants that use the transaction enablement platform. Much of the work within the payment and purchase process may be completed by the merchant's own e-commerce platform, or the platform of a third party, such as a bank or fulfillment company. In certain embodiments, the transaction enablement platform is not be used to process payments, but only to facilitate providing initiating payment information and delivering order confirmations and/or receipts. In embodiments, a client/merchant site may generate a machine-identifiable tag on their site. A customer may scan the product's machine-identifiable tag using the platform mobile device application. The platform may then send a request for the item's details to the merchant's e-commerce platform. The merchant may then send product details back to the platform, which may then be displayed to the user via the platform mobile app. Product information may include, but is not limited to, product size, color, and other like details, specifying the item the customer is considering purchasing.

In embodiments, the transaction enablement platform and mobile device application may be used to facilitate payment for a transaction. In embodiments, a customer may scan a machine-identifiable tag, thus requesting the client/merchant platform to send the corresponding product information, such as product sizes or colors. The customer may then select a product, specify size, color and the like, and select a delivery address and payment method, such as a credit card or the like. The customer may then authorize payment by selecting a corresponding authentication option within the mobile device application user interface. The application may then send the order to the merchant's e-commerce site and the merchant's site then authorizes the payment. During the authorization period, a spinner or other indicator may be displayed on the user interface. The merchant e-commerce platform may approve or decline the order. If an order is authorized, the merchant site and transaction enablement platform application may display or send an order confirmation and receipt. Additionally, the mobile device application may store the confirmation and receipt in a purchase history.

In embodiments, the transaction enablement platform may comprise a secure purchasing process in order to facilitate payment. The secure purchasing process may comprise a client site requesting a machine-identifiable tag containing SKU and API key information over HTTPS. The platform may use this information to generate a machine-identifiable tag, which the customer scans to purchase a desired product. The platform may then send the request for the product's SKU from the client/merchant's e-commerce server through the integrated API. The client/merchant platform may then send the product information to the platform. The customer may select a delivery address as well as payment method and then authorize payment to the client/merchant. The platform mobile application may then send the message to insert the order with payment to the client/merchant's e-commerce site to authorize the transaction. The client/merchant e-commerce server may then send an approved/declined response. Both the client/merchant site and application may display an order confirmation and receipt and the order data is added to the customer's purchase history. In embodiments, the transaction enablement platform may comprise a merchant dashboard. Merchants using the platform may be able to login to a user interface dashboard in order to review metrics related to aggregated user information, such as specific information on how their customers in particular are using the platform and the mobile device application. Information such as total revenue for the merchant via the platform, application type and the type of tag scanned (offline or online) may be displayed graphically, among other metrics such as, but not limited to, customer name, customer age, customer email, delivery address, and the like. Merchants may be able to export their order information in various formats, such as, but not limited to, CSV files (comma or character-separated value files), in order to review their orders outside the dashboard or within another application, such as Excel, among others. The merchant dashboard may also enable merchants who wish to use offline tags to name a campaign and download a corresponding offline machine-identifiable tag for use. Such campaigns may be implemented for online and audio tags as well, so that businesses can track their metrics in real time.

In embodiments, the transaction enablement platform may comprise a consumer dashboard. In embodiments, the consumer dashboard may comprise a secure portal or website for consumers and customers to login and manage their platform profiles via a web interface. A user's platform profile may comprise information regarding their payment details, transaction history, and other personal identification or metrics associated with the platform. The consumer dashboard may allow users to manage multiple devices, such as a user with both a laptop and a smartphone which accesses the platform. The consumer dashboard may allow users to implement parental controls, as well as spending limits and other controls. The consumer dashboard may allow users to change their password and passcode. The consumer dashboard may allow a user to download personal profile information, such as personalized offers provided to a user from a specific retailer. The consumer dashboard may comprise the ability for the user to lock or remove devices from the platform if the device is lost or stolen, or if their account details have been compromised. The consumer dashboard may be accessed via different devices, such as a laptop, or via the mobile device application. In embodiments, the transaction enablement platform may comprise a beacon or technique known as 'geo-fencing' to facilitate a transaction.

The electronic devices 702, 710, 102, 104, 602 2302, 2312, 2102, 2112 as disclosed herein may be used in conjunction with beacon devices, such as wireless beacons, and be configured to communicate with such beacons. Reference is made below to "wireless beacon". However, it will be appreciated that the disclosure is applicable to local wireless transceivers in general. In particular, a non-limiting example of a beacon is a wireless personal area network, such as Bluetooth LE ®, also known as Bluetooth Low Energy or Bluetooth Smart®. In a general sense, the wireless communication provided by a beacon may be short-range wireless communication, e.g. Bluetooth Low Energy or Bluetooth Smart®. The beacon may adhere to the basic IEEE 802.15 standard. Short-range wireless communication protocols are different to long-range wireless communication protocols (which may also be provided by the electronic device), for example: LTE, UMTS, 3G, EDGE, GPRS, GSM and Wi-Fi. Devices according to such short-range wireless communication protocols may be compatible with one or more operating systems, such as Apple iOS7, Windows Phone 8, Android 4.3 and BlackBerry 10, as well as more recent versions of each. Other area network technologies may be used as beacons, which may have a communication range up to 100 m, without limitation. A brick-and-mortar retail establishment may limit its beacon range through limits on a received signal strength indicator, received channel source power indication or other suitable method. In embodiments, the beacon may be used to identify the physical location of a user's mobile device by communicating with the transaction enablement platform's mobile device application.

A beacon advertises its presence by way of identifying information which characterizes the beacon from a group of beacons. This identifying information can be contained in a broadcast message. The broadcast message can contain data which is indicative of the power with which the broadcast message was transmitted (a beacon can also be configured to send the broadcast message at different power levels to effect a change in the range at which the broadcast message can be received) . The mobile application (which can be run on the electronic device 702, 102, 2302, 23102) can be configured to measure the power at which the broadcast message was received. The difference between the received power and the transmission power (as indicated by data in the broadcast) can be attributed to path loss, which can be approximately correlated to distance from the beacon. This provides a relative measurement with respect to the beacon.

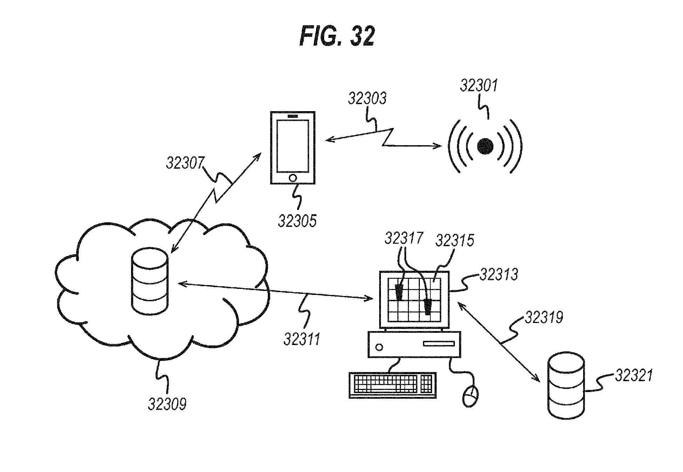

By way of the above, and with reference to Figure 32, it can be appreciated that, advantageously, an absolute measurement of the physical location of a user's mobile device can be ascertained. This may be in addition to or instead of establishing the relative location. If the physical location of beacon is known, an electronic device which detects this beacon can be said to be in same location as the beacon. The mobile application (which can be run on the electronic device (32305 702, 102, 2302, 23102) can detect the beacon 32301 and communicate 32307 that it has detected the beacon to a server 32309 (which can be the servers 720, 708, 718, 108, 110, 602, 2318, 2308, 2310, 23106, 23108, 23109 or the transaction enablement platform above which are used to initiate a transaction). The server 32301 can query 32311 a computer-implemented registry 32313 of beacons (or alternatively, the electronic device 32305 can directly query the computer-implemented registry of beacons 32313) to see if it contains a profile for the beacon which has been detected. If so, the profile of the detected beacon can be checked to see if it contains location data for the beacon. The location data can take many forms including, GPS coordinates, latitude and longitude, an altitude (e.g. height above sea level), an address, or a name etc. This way, the server, and/or mobile device application can verify the physical location of the user's mobile device. In effect, the registry of beacons can be said to facilitate the mapping of beacons which are in disparate locations. Hence, in one example implementation, this can consist of a graphical map 32315, with icons 32317 thereon, which are indicative of a respective beacon's location. This can prove particularly useful in scenarios where conventional location services, such as GPS, A-GPS, cellular triangulation etc. are not available, perhaps due to poor signal reception.

As mentioned, the on the computer-implemented registry of beacons 32313 can contain a profile of each beacon. In addition to location data, the profile can also indicate an unique identifier associated with the beacon. The unique identifier aids in establishing detection of a particular beacon. The unique identifier can have associated characteristics in the profile. For example, the characteristics of a known beacon can include a universally unique identifier (UUID), a major value, a minor value, and an indication of a transmission power of the beacon. The beacon can transmit over a certain interval, and with a period of repetition, both of which can also be indicated in the profile. Other information which can be included in the profile include data pertaining to: the owner/proprietor of the beacon, the manufacturer of the beacon, the beacon's service history, firmware version, previous locations of the beacon, a history of mobile devices which detected this beacon, with each mobile device having an associated data file stored. For example, this associated data file may be indicative of the user of the mobile device, the type of mobile device, and list the device's previous locations. Further information in the profile may include the beacon device profile, RSSI value, beacon internal data including time, date, zone of detection, geo-location, battery voltage, external data from a mobile application which detected the beacon, such as data about the device or user thereof on which the mobile application is run, profile timestamps, such as dates of creation, updating, number of time the beacon has been detected, and statistical analysis of these detections, a service provider of the beacon, data associated with a device to which the beacon is connected such as a beacon which monitors its environment.

The profiles in the on the computer-implemented registry of beacons 32313 may be created in a number of ways. A simple user interface connection to the server which contains profiles allows a beacon and an associated profile to be registered. The user interface could be implemented intuitively, by way of mapping software 32315 which allows icons 32317 indicative of respective beacons to be pinned or placed on a map. The mapping software 32315 can provide varying levels of granularity or map zoom which includes city, to street level, to individual buildings, to precise locations within a building, including floor number. Typically existing location technology is poor in determining elevation within an acceptable tolerance. Alternatively, the information may come 32319 from a variety of databases 32321. The information in the registry can of course be accessed, read, updated or edited by a number of parties. Parties may be refrained from gaining access, making entries if their prior or existing entries are not of a required standard. The registry may also employ authentication/authorization details before access is permitted. The information in the registry may also be encrypted unless access has been granted.

Advantageously, the mobile application, when run on electronic device 32305 can be used to create an entry in the on the computer-implemented registry of beacons 32313. In the scenario where the mobile application can determine its location within an acceptable tolerance level, for example using GPS, A-GPS, or cellular triangulation, it can send 32307 this location data along to the server 32309 indicating that it has detected a beacon with this location data (or alternatively, the electronic device 32305 can directly communicate with the computer-implemented registry of beacons 32313). The server can verify if a profile corresponding to this beacon exists on the computer-implemented registry of beacons 32313, which can be based on an unique identifier of the beacon which has been detected. If not, a profile is created for this beacon on the computer-implemented registry of beacons 32313, which initially contains all the data provided by the detected beacon, such as an universally unique identifier (UUID), a major value, a minor value, an indication of a transmission power of the beacon (information on the different power levels at which the beacon can transmit can also be made available), the beacon transmission interval and period of repetition. Alternatively, an existing profile can be updated, or supplemented with this information. If the updated information significantly differs from that already associated with the profile, there may be an additional "threshold" requirement before the profile is updated. For example, if the registry receives a number of instances of the same updated information from a respective number of mobile applications, and this exceeds a threshold, this is indicative that the current profile should be updated. This threshold requirement helps ensure that the data for each profile is as accurate as possible. This ensures that subtle changes such as the major value, or minor value are updated. Then the newly created, updated or existing profile is supplemented with the location data obtained by the mobile application. Further sets of location data provided by subsequent submissions can be used to verify or enhance the existing profile.

It can be appreciated that the (or alternatively, the electronic device 32305 can directly query the computer-implemented registry of beacons 32313) provides a greatly improved means of locating or tracking the user of the mobile application, in areas where existing location technology cannot operate within acceptable tolerances, such as use within buildings. As mentioned above, establishing elevation is particularly problematic. If a number of beacons are deployed throughout a building and their respective locations have been accurately determined and added to their respective profiles on the register, the precise location and movement of a device running the mobile application can be determined. Each beacon in such a building has a unique identifier. Hence the order in which they are detected corresponds to a path in which a device running the mobile application has moved along. This can be further enhanced with temporal data to show at which locations along the path the user spent a corresponding amount of time.

The beacon may be in communication with a client/merchant server. In embodiments, a user may be able to walk into a merchant's store and the beacon may then be in communication with the user's transaction enablement platform mobile device application. The customer may then select a product that interests the customer and pay for the product without checking out at a traditional POS terminal. In embodiments the beacon is a transmitter that transmits a unique identifier/identifying information to a consumer's mobile device, serving as a signal that kicks off activity of a mobile application to execute an event associated with that beacon when the mobile device comes into proximity of the beacon. In embodiments, the mobile application communicates with the server to perform an action, the action being influenced by the awareness that the mobile application has been in proximity to the beacon that sent the unique identifier.

A unique identifier can have certain characteristics. For example, the characteristics of a known beacon can include a universally unique identifier (UUID), a major value, a minor value, and an indication of a transmission power of the beacon. It can therefore be appreciated that changing some or all of these characteristics, and by extension the unique identifier that is transmitted by the beacon, can be used to effect a change in the event executed by a corresponding mobile application.

Typically, a beacon is supplied to an end-user with a predetermined set of characteristics. Each beacon can be used for a corresponding event execution. For example, each beacon may be deployed in different sections of a retail premises, and each beacon triggers an event in the mobile application corresponding to the section in which it was detected. This is achieved by associating the unique identifier of a beacon with a respective action on the server with which the mobile application communicates when it detects a beacon. Thus, each beacon can be used to trigger an event by changing an association on the server with which the mobile application communicates when it detects a beacon.

It may be desirable to reconfigure the characteristics of the beacon itself. This requires a direct connection to be made between the beacon and beacon reconfiguration hardware. The connection may occur via any suitable wireless communication such as Bluetooth, WIFI etc., or even a wired connection such as Ethernet, USB etc. However, when the number of beacons is large, this can be a time consuming process since each beacon requires an individual connection to be made to it prior to reconfiguration.

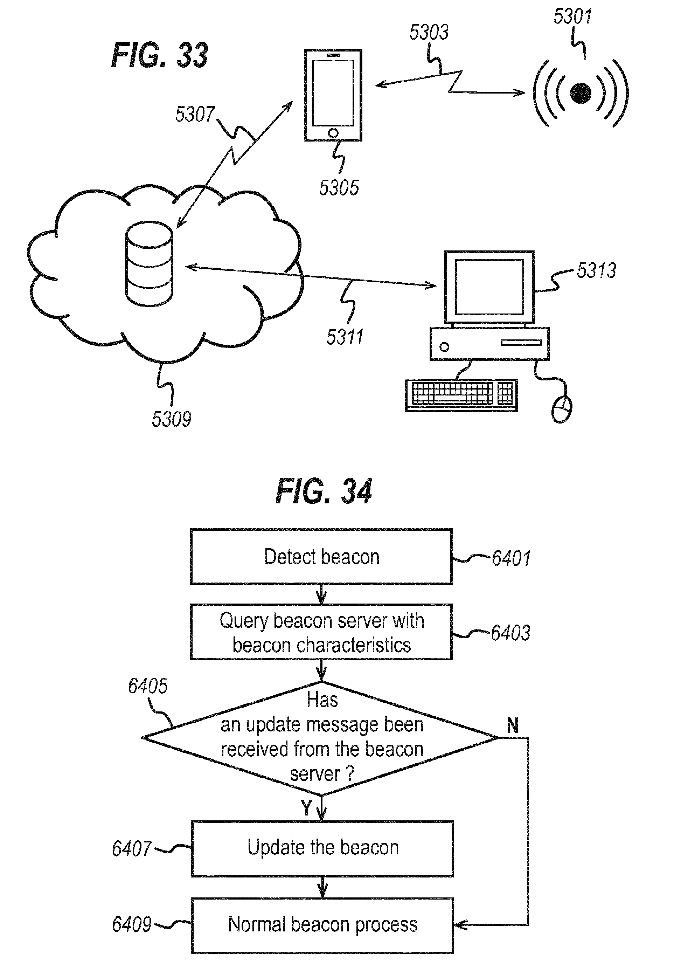

With reference to Figures 33 and 34, the mobile application described in this application, which can be run on the electronic device 32305, 702, 102, 2302, 23102, can offer as an alternative or as an additional function that of facilitating reconfiguration of beacon hardware. As mentioned above, a beacon 5301 is said to advertise its presence by way of a broadcast message 5303. The broadcast occurs over an interval, and may be repeated. Both the interval and the period of repetition may be varied. The broadcast contains the unique identifier, from which can be extracted at least one of the universally unique identifier (UUID), the major value, the minor value, and an indication of a transmission power of the beacon. In the known process above, detection 6401 of at least one of these values triggers a corresponding event in the mobile application 5305. This event is initiated by the mobile application sending 5307, 6403 an indication to a server 6309 (which can be the servers 720, 708, 718, 108, 110, 602, 2318, 2308, 2310, 23106, 23108, 23109 or the transaction enablement platform above which are used to initiate a transaction) with which it is connected that it has detected a beacon with a unique identifier.

Advantageously, the server 5309 may also communicate to the mobile application that the beacon is awaiting reconfiguration, and that there are new beacon configuration characteristics awaiting download 6405. The server may receive these new characteristics by way of a database 5313 to which it is connected 5311. Alternatively, a user interface with which the server is associated can be used to select beacons for reconfiguration, and a new configuration for any selected beacons. The new configuration can be scheduled for deployment. This way, the server only permits the mobile application to obtain the new configuration parameters if the time of broadcast detection coincides with the deployment schedule. Upon the server recognizing that a reconfiguration for the detected beacon is desired, it sends 6405 the new configuration to the mobile application. This new configuration may be encrypted. The mobile application then opens a communications channel to the beacon so that the new configuration may be deployed. The channel 5303 may be the same one on which the broadcast was sent. Alternatively, the channel may different from the one on which the broadcast was sent. Data sent on this channel may be encrypted. Additionally, there may be an authentication process before a communications channel is opened to prevent unauthorized tampering with the beacon. This may be implemented by the server sending authorization data when the server sends the new configuration to the mobile application. Upon receipt of the new configuration, the beacon 5301 is updated 6407 to have a new unique identifier. This can be achieved by altering at least one of the universally unique identifier (UUID), the major value, the minor value, the transmission power (it may previously have been incorrect or recently changed), the broadcast interval, and period of repetition. Changing the transmission power can effect a change in the range at which a broadcast message can be received. Thus, the mobile application has been used to reconfigure the beacon simply by being in proximity of a beacon, for which reconfiguration is necessary 6409. It will be appreciated that the disclosure is applicable to local wireless transceivers in general, which can be reconfigured using the same process.

It will be appreciated that the above process used to reconfigure the beacon (or local wireless transceivers in general) can be adapted for other applications. For example, in addition to or as an alternative to reconfiguring the beacon, the mobile application may simply open the communication channels to the beacon for the purposes of exchanging data. The channel may have different modes such as unidirectional or bidirectional. A second or unidirectional mode enables the electronic device to only send data or receive data from the beacon. A second or bidirectional mode enables the electronic device to both send data and receive data from the beacon. This is useful if the beacon is connected to a device which desires internet connectivity, but can only achieve this when tethered to via the mobile application to an electronic device with internet connectivity. Such connectivity may be desired for the purposes of sending/receiving a firmware update, status updates, a log, or any other data relevant to the beacon, or a device to which the beacon is connected. For example, nature or environment research instruments (coupled to a beacon) which constantly gather data from the environment in which they are located could use the above process to send data to a server. A mobile application with access to a cellular connection may detect a broadcast from the beacon connected to the research instruments and send this to a server with which it is connected. The server may have received a request that detection of this beacon should trigger a tethering operation between the beacon and the mobile application. The user of the mobile application may have to give permission for the desired tethering to ensue, upon which data from the instruments is sent to a desired location, such as that indicated by a URL. The mobile application can thus be used as an intermediate device for facilitating data transfer. It will thus be appreciated that the mobile application can use certain technologies of an electronic device on which the mobile application is run to gather data on environments in which it is located. For example, the mobile application can have access to a device's NFC, Wi-Fi, Bluetooth, GPS, A-GPS or cellular triangulation capabilities. Such access can be used to collect data such as device location, RFID tags that the device has detected, other devices with which the device has interacted etc..

In other embodiments, location data, based on proximity to a beacon, GPS location, cellular triangulation, or other location information about the consumer's mobile device could be used to facilitate location-based offers, such as presenting particular variations of a product that is captured by the mobile phone camera based on location, presenting prices that are location-based, or presenting other location based content (including advertisements). Various methods and systems for location-based offers are known to those of skill in the art and are intended to be encompassed herein.

In embodiments, the beacon may alert customers that certain items are available for download in a particular location and then facilitate the download of such items. In a non-limiting example, a museum may place beacons to notify a platform mobile device application user that other software relating to the museum generally or particular exhibits are available for download. Such software may include information applications that the museum visitors can use to enrich the visitor's experience in the museum e.g. an audio tour or other interactive software. The user can delete the software when he or she leaves the museum while also using the platform application to make purchases in the museum gift store. In embodiments, the software may include location-specific transaction functionality, such as, but not limited to, directing the mobile device application user to a museum-specific check-out website while inside the museum.

In embodiments, the platform may comprise providing offline data packages to users. In such embodiments, the beacon and mobile device application may be employed to provide informational downloads which may be made available to a user when the user in range of a specific beacon. In a non-limiting example, a museum may provide a beacon near the entrance which distributes fire and emergency information to a user's mobile device application. In the event of a fire, if the user is in range of such an informational beacon, the beacon may provide directions to the nearest exit to the mobile device application without the need to connect to the internet. Such embodiments may provide value especially in environments with poor or non-existent network (e.g. internet) connectivity.

In embodiments, the beacon may be used to provide personalized offers according to purchase habits at a retail/merchant location. In a non-limiting example, a customer may walk into a retail store and enter into range of the beacon. The beacon may then provide a personalized offer for the mobile device application user within range and may cause the phone to alert to user to such an offer. The coupon may be linked to the user's loyalty or rewards account and may be tailored to the user's shopping habits, e.g. a customer that spends $500 a month at the store may receive a gift or an additional $20 off of a favorite category of item. Additionally, the beacon may provide a coupon which shows a machine-identifiable tag to scan or acquire upon presentation of a loyalty card at physical checkout. Such embodiments may also be employed to attract users into stores. When a customer enters within range of the beacon outside of the store entrance, their mobile device application may alert the customer showing an offer or personalized welcome message to attract a user to enter the retail/merchant location. In embodiments, the beacon may be used to facilitate tracking a user's back within a retail/merchant location once the user is inside.

In embodiments, the beacon may be used to provide loyalty or rewards program identification without product a corresponding card or other type of verification. The mobile device application user may add their loyalty or rewards program ID as a portion of their identification for their mobile device application. The user may then walk into a retail/merchant location and use their mobile device application, which contains the loyalty or rewards ID to checkout their purchase. Upon entry to the checkout location, the user may be identified by the POS system, which may then register all purchases made by the loyalty or rewards program member. In embodiments, the beacon may be used to facilitate users signing up for a loyalty or rewards program by matching information to a loyalty database, such as email, phone, address or other identifiers.

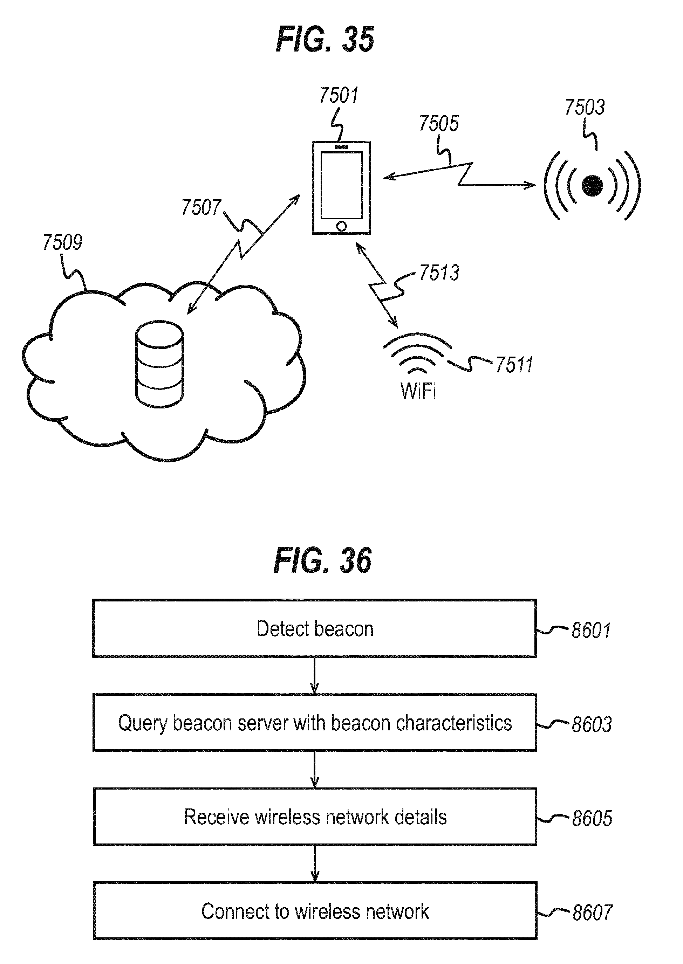

In embodiments, the beacon and the mobile device application may be used to act on behalf of the user. The beacon and mobile device application may be used to auto-connect to a specific Wi-Fi connection. With reference to Figures 35 and 36, the mobile application (which can be run on the electronic device 5305, 32305, 702, 102, 2302, 23102, can provide this advantageous functionality either in addition to or independent to the other functions which are provided by the mobile application, as described herein. With a vast array of wireless communication technologies available to the device running the mobile application, including but not limited to LTE, UMTS, EDGE, NFC, GPRS, GSM, Bluetooth, and Wi-Fi, there exists an expectation on behalf of the user that the device can always have a connection for the purpose of data receipt/transmission. However, this is not always the case since poor reception from a base station can rule out cellular based means of data transfer. Further, Wi-Fi does not provide the same "on demand" functionally of a cellular connection. In other words, when there is a cellular connection available, the user can seamlessly transfer data without having to consider possible connection settings. This is on contrast to a Wi-Fi connection which requires a user to usually first enable the associated radio on their device running the mobile application, select the desired network, and possibly go through an authentication process to gain access. This of course pre-supposes that the user is aware of the existence of a Wi-Fi access point to begin. Further, it may not even be intuitive for a user to look for a Wi-Fi access point if they have cellular connectivity, and the user is unaware that the bandwidth which the cellular connection provides is insufficient. A further consideration may be that the user is conscience of exceeding pre-paid data allowances and avoids using data-transfer at all. Hence, there is a need to provide a user with connectivity with minimal user interaction, for the purposes of data transfer.

As mentioned above, the mobile application 7501 can detect 8601 a beacon 7503 by presence of a beacon broadcast 7505 and subsequently execute an event after informing 7507 a server 7509 (which can be the servers 720, 708, 718, 108, 110, 602, 2318, 2308, 2310, 23106, 23108, 23109 or the transaction enablement platform above which are used to initiate a transaction) to which the mobile application has been detected that the beacon has been detected. It will be appreciated that the payload of a beacon which is detected is significantly small that even a low bandwidth cellular connection will suffice to relay this information to the server. In response to the server being informed that the mobile application has detected the beacon, for example through a unique identifier transmitted by the beacon, the server is queried 8603, and sends an indication 7507 to the mobile application 7501 that an access point for Wi-Fi 7511 is available. The querying can be achieved by the server having knowledge of Wi-Fi network(s) that are in the same location as the beacon, which has been identified by its unique id. The indication can provide log-in details, such as a username and password, which are normally entered manually in a front end process, such as a webpage requesting login details to restrict access to the Wi-Fi network. Hence, the indication itself obviates the need for a front-end step of entering the login details since a device which has received this indication can provide the required login details as part of a back end process. This indication 8605 can also comprise the SSID, IP Address, Subnet Mask, Default Gateway, DNS, WPA, or WEP etc., all of which are parameters associated with the access point. This is particularly useful in scenarios where a Wi-Fi network does not broadcast its SSID (i.e. a "hidden" network), and a device wishing to connect would have no way of obtaining these parameters. It can also be useful if there are multiple Wi-Fi networks available, and the server and/or Wi-Fi provider wishes to balance the number of devices connected to each of the multiple Wi-Fi networks. By default, the DNS typically corresponds to the Default Gateway, which triggers the access point hardware to send a request to the ISP's default DNS. However, it may be advantageous to indicate a third-party DNS, which could be faster the ISP's default DNS. Changing DNS settings is not something with which a typical user is familiar, and it therefore can be appreciated that the indication provides a way by which such a change can be easily effected. The mobile application then interacts with the underlying operating system, for example via an API, to automatically configure the wireless radio to connect 7513, 8607 to the Wi-Fi network using some or all of the information (i.e. login details and/or some or all of the access point parameters) in the indication sent by the server. This way, the mobile application, via the device on which it runs has been seamlessly and automatically connected to an access point of a Wi-Fi network, and thus across the Wi-Fi network, or a network associated therewith, simply by coming into proximity to a beacon. Data transfer with sufficient and stable bandwidth can thus ensue.

As an alternative or additional implementation, for use in scenarios, where there is no or extremely low bandwidth cellular connectivity, the beacon itself can provide the indication, the login details, or the SSID, IP Address, Subnet Mask, Default Gateway, DNS, WPA, or WEP etc., associated with the access point. This way, the user is not hampered from gaining Wi-Fi connectivity owing to lack of cellular connectivity, since the range of a Bluetooth beacon could be similar to that provided by the Wi-Fi access point. In other words, since the mobile application is within range of the beacon, it is also in range of the Wi-Fi access point, and should automatically connect to the access point of the Wi-Fi network, and thus across the Wi-Fi network. In all of the implementations of automatically connecting the electronic device to the access point, the electronic device may first require a user confirmation, such as an input on a touch screen device.

As a further or additional implementation, for use in scenarios where the Wi-Fi radio of the device on which the mobile application runs is disabled, the indication can also instruct the mobile application to interact with the underlying operating system, for example via an API, to enable the Wi-Fi radio, and subsequently configure it to connect to the access point.

In embodiments, the beacon and mobile device application may be used to visit a website, open a different application, receive or reply to messages, check-in/register to locations, add products to a virtual cart or add products to a virtual wish list/registry, among others. In embodiments, the mobile device application may be deployed to provide recommendations for best selling or highest rated products for each area that a user visits. In embodiments, the mobile device application may be deployed to save machine-identifiable tag information even where there is no data connection. When a machine-identifiable tag is scanned, the mobile device application may save the tag until a data connection is available, and then add the product information to a user's check-out basket details.

In embodiments, the beacon may be deployed in conjunction with the mobile device application and a POS to allow for digital wallet capabilities and data interchange. In such embodiments, the beacon may be used to provide loyalty program, member, or customer information transfer. The beacon may also be deployed for quick register, loyalty signup, product warranty registration, rebate submission, and the like, by using personal consumer information acquired by the beacon. Additionally, the beacon may be used for payment, e.g. coming within range of a beacon to pay for a certain item and using a personal identifier to authorize or verify the payment.

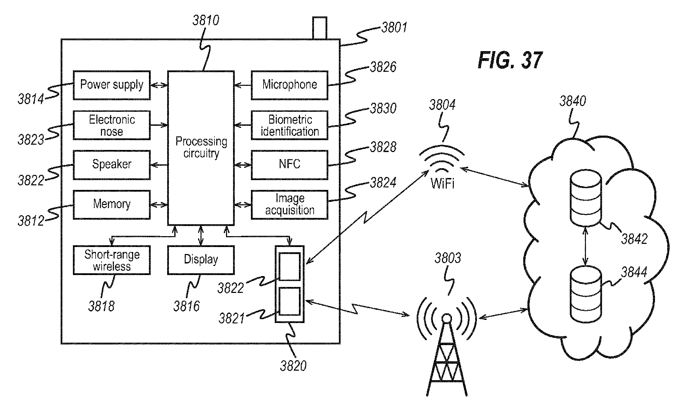

Fig. 37 shows an exemplary electronic device 3801 according to any of the electronic devices of this disclosure (such as electronic device 702, 710, 102, 104, 602 2302, 2312, 2102, or 2112). The electronic device comprises processing circuitry 3810 (such as a microprocessor) and a memory 3812. Electronic device 3801 may also comprise one or more of the following subsystems: a power supply 3814; a display 3816; a short-range wireless transceiver 3818; a long-range wireless transceiver 3820; a speaker 3822; an image acquisition subsystem 3824; a microphone 3826; a near-field communication (NFC) subsystem 3828; a biometric identification subsystem 3830; and an electronic nose 3832.

Processing circuitry 3810 may control the operation of the electronic device 3801 and the subsystems 3812-3832. Processor 3810 is communicatively coupled with subsystems 3812-3832. Memory 3812 may comprise one or more of random access memory (RAM), read only memory (ROM), non-volatile random access memory (NVRAM), flash memory, other volatile memory, and other non-volatile memory.

Display 3816 may be communicatively coupled with the processing circuitry 3810, which may be configured to cause display 3816 to output images. Display 3816 may comprise a touch sensitive interface, such as a touch screen display. Display 3816 may be used to interact with software that runs on the processor 3810 of the electronic device 3801, such as to provide confirmation of a transaction and/or to initiate scanning of a machine-identifiable tag. The touch sensitive interface permits a user to provide input to the processing circuitry 3810 via a discreet touch, touches, or one or more gestures for controlling the operation of the processing circuitry and the functions described herein. It will be appreciated that other forms of input interface may additionally or alternatively be employed for the same purpose.

Short-range wireless transceiver 3818 may be a short-range radio that is configured to operate according to a short-range wireless protocol. Short-range wireless transceiver 3818 may be configured to communicate via a short-range wireless protocol. The short-range wireless protocol may be Bluetooth, or Bluetooth Low Energy, or Bluetooth Smart, and the short-range wireless transceiver may be configured to communicate with other devices, such as a wireless beacon, according to such a protocol. In this regard and for the purposes of all embodiments herein concerning a short-range wireless protocol, the short-range wireless protocol may be a protocol which is capable and designed for communication over less than 1, 5, 10, 20, 30, 40, 50, or 100m.

Long-range wireless transceiver 3820 may be one or more long-range RF transceivers that are configured to operate according to communication standard such as LTE, UMTS, 3G, EDGE, GPRS, GSM, and Wi-Fi. For example, electronic device 3801 may comprise a first long-range wireless transceiver 3821, such as a cellular transceiver, that is configured to communicate with a cell tower 3803 via to a cellular data protocol such as LTE, UMTS, 3G, EDGE, GPRS, or GSM, and a second long-range wireless transceiver 3822, such as a Wi-Fi transceiver, that is configured to communicate with a wireless access point 3804 via to a Wi-Fi standard such as 802.11 ac/n/g/b/a. In this regard and for the purposes of all embodiments herein concerning a long-range wireless protocol, a long-range wireless protocol may be a protocol which is capable and designed for communication over 5, 10, 20, 30, 40, 50, or 100m. This is in contrast to short-range wireless protocol mentioned above. The long-range wireless protocol may communicate utilizing higher power than the short-range wireless protocol. The range (e.g. line of sight distance) between the long-range end nodes (electronic device and router or base station) for the long-range wireless protocol may be greater than the range (e.g. line of sight distance) between the short-range end nodes (e.g. electronic device and wireless beacon).

Input subsystems 3824 to 3832 may be used to capture one or more of machine-identifiable tags, biometric data for use in any of the methods hereinbefore described. For example, image acquisition subsystem 3822, such as a camera, may be configured to detect light in the visible range of the electromagnetic spectrum, and is capable of acquiring one or more images of machine-identifiable tags, such as QR codes and/or of capturing images of particular goods or products. The processing circuitry 3801 is configured to process such images and identify the data contained therein, for example the data indicative of a transaction in a machine-identifiable transaction tag. Microphone 3826 may be configured to detect one or more of machine-identifiable tags, such as an audio watermark, or user input such, such as speech in the "Speak to Buy" designation. NFC subsystem 3828 may be configured to detect NFC machine-identifiable tags. Biometric identification subsystem 3830 may comprise a fingerprint reader, which may be configured to be used to authenticate a user of the electronic device 3801 for one or more of the various functions outlined above. Electronic nose subsystem 3832 may comprise one or more devices capable of detecting and/or identifying an odor, as outlined above.

Electronic device 3801 may be configured to communicate via the long-range wireless transceiver 3820 with a network 3840. Network 3840 may be a wide area network, such as the Internet, or a local area network. Electronic device 3801 may be further configured to communicate via long-range wireless transceiver 3820 and network 3840 with one or more servers 3842, 3844. Servers 3842, 3844 may be servers such as previously-mentioned web server 720, 2318, tag server 708, 2308, or validation server 108 and directly or indirectly via another server 3842, 3844 with transaction server 108, 718, 2310, and servers 110, 7509, 5309, 3107, 3117, 3119, and 3115.

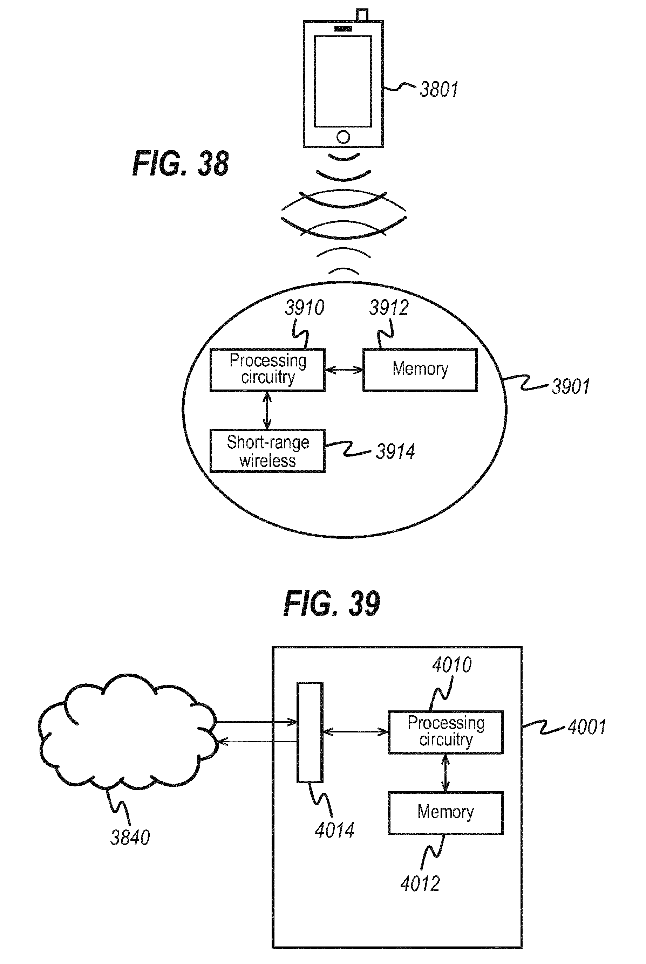

Fig. 38 shows an exemplary wireless beacon 3901 according to any of the wireless beacons of this disclosure (such as wireless beacons 5301 and 7503). Wireless beacon 3901 may be configured to communicate with electronic device 3801. Wireless beacon may comprise processing circuitry 3910 that is communicatively coupled with a memory 3912 and a short-range wireless transceiver 3914. Processing circuitry 3910 may control the operation of the wireless beacon 3901 and the memory 3912 and short-range wireless transceiver 3914 to perform the beacon functions outlined above. Memory 3912 may comprise one or more of random access memory (RAM), read only memory (ROM), non-volatile random access memory (NVRAM), flash memory, other volatile memory, and other non-volatile memory. As described above, the short-range wireless protocol may be Bluetooth, or Bluetooth Low Energy, or Bluetooth Smart, and the short-range wireless transceiver 3914 may be configured to communicate with the electronic device 3801 according to such a protocol. In this regard and for the purposes of all embodiments herein concerning a short-range wireless protocol, the short-range wireless protocol may be a protocol which is capable and designed for communication with the electronic device 3801 over less than 1, 5, 10, 20, 30, 40, 50, or 100m.

Figure 39 shows an exemplary server 1 according to any of the servers of this disclosure (such as servers 3842, 3844, web server 720, 2318, tag server 708, 2308, validation server 108, transaction server 23108, 718, 2310, and servers 110, 7509, 5309, 3107, 3117, 3119, and 3115). Server 1 comprises processing circuitry 4010 communicatively coupled with a memory 4012 and a network interface 4014. Processing circuitry 4010 may control the operation of the server 1 and the memory 4012 and network interface 4014. Memory 4012 may comprise one or more of random access memory (RAM), read only memory (ROM), non-volatile random access memory (NVRAM), flash memory, other volatile memory, and other non-volatile memory. Server 1 is connected via network interface 4014 with the network 3840, such as the Internet. Server 1 may be connected via network interface 4014 and network 3840 with the electronic device 3801 and/or with other servers 1.

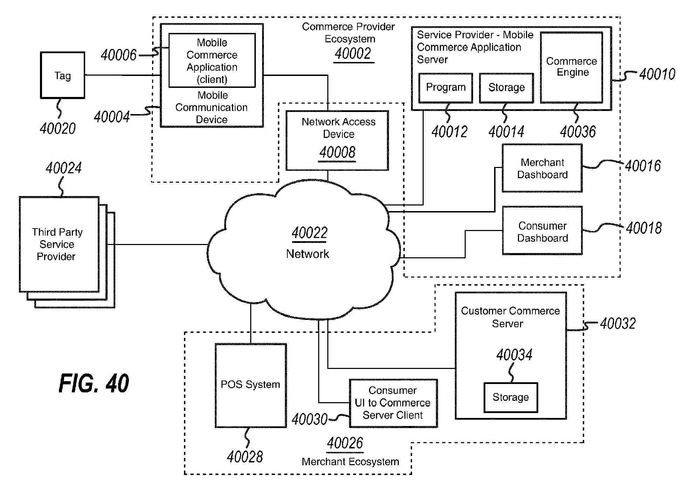

Figure 40 illustrates a system 40001 according to embodiments of the current invention. System 40001 may include a provider ecosystem 40002, merchant ecosystem 40026, tag 40020, third party service provider 40024, and the like. Provider ecosystem 40002 may include a mobile communication device 40004, service provider mobile application server 40010 (which may be the tag server 708, 2308 or the validation server 108, or a combination of the two), merchant dashboard 40016, consumer dashboard 40018, and the like. Mobile communication device 40004 may be the aforementioned electronic device such as electronic device 3801 or any other electronic device of this disclosure (such as electronic device 702, 710, 102, 104, 602 2302, 2312, 23102, 2102, or 2112). Mobile communication device 40004 may include mobile communication application 40006, and the like. Mobile communication device 40004 may also read tag 40020 (such as any of the aforementioned tags, e.g tag 704, 1002, 2502, 2304, 23104), connect to a network access device 40008, and the like. As mentioned above, tag 40020 may be a code, audio signal, beacon, near field communication (NFC) tag, touch signal, uniform resource locator (URL) and the like. As mentioned above, mobile communication device 40004 may read tag 40020 using a camera, microphone, NFC connection, Bluetooth connection, and the like. Network access device 40008 may be a Wi-Fi router, cell phone tower, and the like. Network access device 40008 may connect to network 40022. Network 40022 may be a local area network (LAN), wide area network (WAN), and the like. Network 40022 may be a network such as network 3840. An example of network 40022 may be the Public Internet. Service provider mobile application server 40010 may include a program 40012, storage 40014, engine 40036, and the like. Service provider mobile application server 40010 may be a server such as server 4001. Engine 40036 may be integrated with payment service provider and the like. Service provider mobile application server 40010 may connect to network 40022. Merchant dashboard 40016 may connect to network 40022. Consumer dashboard 40018 may connect to network 40020.

Merchant ecosystem 40026 may include point of sale (POS) system 40028, consumer user interface (UI) to server client 40030, customer server 40032 which individually or in combination may correspond to transaction server 2310, and the like. POS system 40028 may connect to network 40022. Consumer UI to server client 40030 may connect to network 40022. Customer server 40032 may include storage 40034. Customer server 40032 may connect to network 40022 and the like. Customer server 40032 may be a server such as server 4001. Customer for customer server 40032 may be a merchant and the like. Third party service provider 40024 may be a tax service provider, shipping service provider, registry service provider, audio service provider, video service provider, broadcasting system service provider, and the like.

As discussed, machine-readable tags or codes, such as QR codes, for merchandise may add to a shopper's convenience by acting as, or as a conduit to, a ready, reliable and up-to-date source of information on product offerings from a merchant or provider. In some instances, a tag may include information on a single product, such as identified by a unique stock-keeping unit identifier (SKU) or other unique identifier, such as assigned within the hierarchy, catalog, or the like that includes the products of a merchant or merchants. In other instances, a tag may represent a product which has several models and for which a wide variety of features, colors, sizes and the like, are available. In the present e-commerce environment, a beacon assist is a beneficial mechanism to provide additional information to a shopper and potential customer. For example, the platform described herein may recognize, by communicating directly with an app on the mobile device that the user has interacted with a bicycle that is tagged by a particular QR code. Alternatively, the beacon itself can be used to trigger a process which is akin to the user detecting the QR code. A beacon broadcast can be associated with a relevant product, such as the product in the example above. A device detecting such a beacon sends an indication to a server that it has detected a beacon broadcast. The server then establishes that this beacon broadcast is associated with the product, and sends a message to the user's app indicating, for example, that the bicycle is available in the following colors, sizes, and prices, along with other information, such as shipping information. The user can then interact with the message via the app, such as be selecting a color and size, selecting a payment type, and ordering a specific product, as well as selecting a payment method, shipping date, and the like.

The message may encourage the user to download additional information about the product, such as features, colors, sizes, terms of service, warranty information, and the like. The additional information may also include product availability, shipping information, and the like. The merchant or provider may also use the beacon to triggers a process (as above) which entices the shopper with coupons or other incentives to encourage the shopper to make a purchase. One advantage is that with user-authentication readily available with the user's mobile electronic device, the merchant or other provider can easily dispense with the need for the user or shopper to carry and present a physical "loyalty" card for the merchant's loyalty program. The user will appreciate the convenience of not having to carry the card. There is also an advantage to both the consumer and the merchant that transactions suitable for the loyalty card may be recorded electronically. There is thus no confusion about a lost card. The chance that a clerk will fail to note the transaction is also avoided. The merchant can use an electronic version of the loyalty card and post the user's transactions on a user account page accessible to the user/customer at his or her convenience, much as a person can look at a statement of the person's account with a credit card company or a bank.

The use of the present e-commerce transaction platform has a number of advantages because of the capabilities of the beacon, especially if the merchant also provides a hot spot for wireless Internet coverage, i.e., Wi-Fi. Once the user has a connection to the e-commerce platform, or the transaction facilitating platform, many possible hook-ups and connections are possible. Thus, the user may access his account with a financial institution, such as an account with a bank, a credit card company, or the like. The user may also access his account with the merchant or provider of the beacon, the personal area network, and the wireless Internet connection. The provider, i.e., the merchant or other provider of a good or a service, may have a web site for electronic transactions. The web site of choice may be the web site for the present e-commerce transaction platform. The user may choose to conduct business and to make a transaction with the e-commerce transaction platform, rather than using the Point-of-Sale (POS) terminal in the same store with the beacon. In one embodiment, the beacon triggers a process (as above) which directs the person to the web site for the e-commerce platform. In other embodiments, the user may use a POS terminal with the capabilities described herein, but certain information, such as product choices, coupon selection, payment type selection, and the like, may be pre-populated on the user's mobile device, so that the steps required using the POS terminal are reduced, eliminated, or made more efficient.

The beacon system allows the merchant or provider an opportunity to serve shoppers, visitors and passers-by, and allows the merchant an opportunity to turn each of these into a customer. As mentioned, beacon-provider allows the beacon to trigger a process (as above) to provide information to each of these visitors. When the visitor enters into range of the beacon or hot spot, a welcome message may appear on a screen of a mobile device of the visitor. Most mobile devices have at least minimal security features. Thus, the first hint that the visitor sees may be a cue from the mobile device, informing the visitor that he or she has a message and querying whether the person wishes to see the message. For example, mobile device users may enable broadcasting of their locations to nearby cell towers so that mobile phone calls can be made. Mobile device users can also broadcast their locations in other ways, such as for GPS location, enabling geo-location, and the like. Mobile phones may also be located by other mechanisms, such as by triangulation using varying signal strength at different known locations, such as the locations of installed beacons.

Once the beacon has triggered a process (as above) which provides information to the user or potential customer, many actions can follow. The application for e-commerce, already downloaded to the user's mobile device, may then be launched on the user's mobile device, and messages may be sent through the application. Alternatively, messages may be sent without going through the application, e.g., to the user's e-mail, text message box, instant message folder, SMS, and so forth. In one embodiment, perhaps after the user has viewed one or more product tags or codes, and indicated interest in at least one of them, the user may be directed to or may request checkout. The checkout, i.e., transacting the business, buying a product, purchasing a tour, and the like, may be conducted at a point-of-sale (POS) in the merchant's location, including POS terminals with enhanced capabilities and features as disclosed elsewhere in this disclosure. These terminals may look and feel like a standard checkout at a store, but are microprocessor operated and are connected to the merchant's information system. The microprocessor and associated circuitry, such as memory, interfaces and the like, may be securely and safely housed so as to prevent unauthorized access and any possible electronic, magnetic, or electromagnetic interference. The POS terminal may include a printer so that the user may be offered a receipt, if desired. A scanner at the POS terminal may be useful for scanning the tags or other indicia of the merchandise, including scanning a tag that has been captured and displayed via the app on the mobile device of the user.

The customer or potential customer may prefer to pay for the item in cash or with a credit or debit card that is not registered with the merchant's system or with the e-commerce platform. The POS terminal is able to accommodate these variations. Accordingly, the POS terminal may be equipped with scanners suitable for reading an EMV chip and for reading a standard magnetic strip such as those on credit and debit cards. The terminal may also be equipped with an interface for a cash drawer for those customers wishing to pay in cash. Physical security is just as important, if not more important, for limiting unauthorized access to the computer hardware, as for the cash drawer. Accordingly, the design of the data entry points should discourage unauthorized devices, such as skimmers, transmitting key pad overlays, and the like. These devices are useful in fraudulently obtaining a user's credit card number and verification number, such as a 3-digit card verification value (CVV) or a pin number. The design of the POS terminal may prevent or discourage the use of these sorts of devices.

The utility of the e-commerce platform and the beacon system may be enhanced by application software that is written to enhance these programs. The application software and an application software development kit are discussed elsewhere herein. The software operation is a very important aspect of secure electronic transactions.

An example of a software application that may be useful is the ability of the display on the POS system to right itself when the display screen is re-oriented. For example, a display screen may normally be oriented with a longer side horizontal and a shorter side vertical. Clerks and customers may be accustomed to using this orientation. A clerk may need to re-position the POS terminal or the screen in an orientation where there is insufficient room for a long horizontal stretch. The POS terminal software in one embodiment re-orients the display on the display screen so that the information is always correctly presented to the user or clerk during transactions. The screen, or associated device, may be equipped with a tilt sensor, an accelerometer, or both, to sense screen rotation and thus orientation. Including the sensor and an auto-rotate application gives the merchant or operator more degrees of freedom in controlling the orientation and thus comfort level of store clerks and customers in conducting transactions. The software for the POS terminal may allow for the auto-rotation feature to be turned off, i.e., a fixed horizontal or vertical orientation, so that no re-orientation occurs.

In addition to these embodiments, it may be useful to consider "Touch to Buy" and "Speak to Buy" designations in a beacon-enabled payment environment. Thus, the user may be shopping in a brick-and-mortar store for items he or she is considering for purchase. When a signal is emitted by a beacon tag discussed above, which triggers a process (as above) to display a "Buy" button icon on the user's phone, the signal may be routed through an interface application on the user's mobile phone. The interface application may be a computer program application useful for communicating with the e-commerce platform, and also useful for communicating with allied computers, servers and sensors of the e-commerce platform. In this example, the user's interface program or application may receive a signal indicative of the item selected for purchase when the user touches the item or voices a commend that is sufficient to show interest. The user may be in communication with the e-commerce platform through the application and may also be in communication with the appropriate tag. Thus, it may not be necessary for the user or buyer to interface with the point-of-sale (POS) terminal of the merchant or store, or even with an e-commerce feature, as the platform may allow purchase and fulfill that purchase automatically upon initiation of purchase via the app's recognition of the code or tag associated with a particular product. For example, the purchase may be made and delivery arranged for using the stored purchase and delivery information of the user. This information may be stored in several places, as discussed elsewhere, such as the e-commerce server, a third-party server, a file on the user's mobile phone or smart phone, and so on. This advantage may be useful if the item to be purchased is heavy, awkward, or otherwise inconvenient to handle by the prospective customer, or if a particular version (such as size or color) is not available at the location but is available from the merchant from another store or a warehouse.

In some embodiments, the merchant's point-of-sale terminal (POS) may be equipped for beacon system transactions. The POS terminal will thus be equipped with software suitable for interacting with shopper and customers using the beacon-type system, the customers having the application or interface application on their mobile devices. This POS software will desirably be part of the beacon-enabled system. Thus, if the shopper or user of the beacon system alternatively wishes to interact with the merchant's point-of-sale terminal (POS), the application or interface application on the user's mobile device or smart phone may be used to contact the POS software application on the merchant's POS terminal (i.e. the process triggered by the beacon includes the step of contacting the POS software application on the merchant's POS terminal). Since the user's payment and delivery information is stored in several places, including a file on the user's mobile device, the interaction may take place quickly and directly from the mobile device to the POS system, avoiding the need for separate entry of data on the POS system or reducing the number of steps taken with the POS system. The user may then receive a receipt in person or electronically, and the transaction may be completed. The user/shopper may also take delivery of the item or may request that the merchant ship the item to one of the user's designated delivery addresses, or to a different address. The POS system may take on several possible forms. In one embodiment, the point-of-sale system may include a printer housed in a plastic or composite base shell. The system may also include a scanner for bar codes or other stock-keeping unit (SKU) information and may include a screen for ease of use by a clerk. The screen may be mounted on a stem attached to the plastic printer housing, or the screen may have a base suitable for mounting on a desk or counter-top. The POS system or terminal will also include a microprocessor or computer and have access to a non-transitory computer memory. In the present application, the POS terminal may be equipped with interface and communications devices described elsewhere herein for a beacon-type system. The POS system and microprocessor may have one or more interfaces suitable for receiving electronic payment, such as an interface for interfacing with an EMV chip on a user's electronic smart card, which may be a debit card or a credit card. The POS system may also be equipped with a magnetic strip card reader and may have an RFID reader suitable for interfacing with RFID type key fobs or other RFID embodiments, such as RFID tags on products.

Keeping secure data secure and encrypted is thus important in beacon-enabled commerce and in all transactions related to beacon-enabled commerce. The need for security arises as soon as the user or potential customer and his or her mobile device come within range of a beacon system of a merchant or other provider, which triggers a process (as above) to send messages. Any non-encrypted messages or information to the public in general should be non-confidential. This may include information on today's specials or other opportunities that the merchant wishes to advertise or broadcast. Once the user is within range, the mobile device of the user may emit information on the identity of the user, e.g., the user's mobile phone number or an identifier of the user in the app on the mobile device. No other information should be available from the user or the user's mobile phone, or other electronic device that is not encrypted.

When the user wishes to make a purchase, two-way communication is initiated between the user's mobile device and the POS system. The user's identification and all information relating to the desired purchase or other transaction are encrypted. As noted, the sensitive user dated may already be encrypted and stored in one or more files on the user's mobile device, the e-commerce server or another server, such as a third-party server. Each use of the secure data may require the use of secure keys, unique machine-generated identifiers for each transaction or use of the secure data, and the like. As noted, the necessary information for making the purchase may already be available to the merchant or to the e-commerce system. It may not be necessary for the user to transmit a credit card number or other sensitive information, other than a password or passcode to identify the user to the e-commerce system. The password or passcode should of course be encrypted when it is sent.

When the user and his or mobile device come within range of a beacon system, the beacon system may contact the user. That is, the beacon may trigger a process (as above) which launches a message to the user, such as launching the e-commerce application. The launch may take the form of a casual message, e.g., a welcome message to the store, to a museum, or other establishment where transactions may be encouraged by a proprietor. These may include, without limitation, a hotel, a convention center, a sporting arena, a shopping mall, a university, a government facility, a transportation center, a restaurant, a tourist attraction and the like. Each of these venues may use the sort of beacon and e-commerce transaction platform described herein. The launch of each may be tailored for the expected taste or preferences of visitors or guests. That is, when the beacon and the application launch, the merchandise that is offered may be the sort expected for the venue. A museum may offer tickets to special events, an audio tour, a special attraction, a new exhibit, and the like. A transportation center may offer insights as to what sorts of transportation and to which destinations is offered, and so forth. Each of these may then encourage purchase of the desired tour(s), packages of attractions, book(s) of tickets, and the like.

The same POS system and POS type of hardware discussed elsewhere throughout this disclosure may be used. It may also be important and useful to ensure the physical security of certain hardware used in carrying out e-commerce transactions described herein. The computer or microprocessor used for the POS terminal should not be subject to tampering, nor should the other components, such as any memory devices, receiver/transmitters, interfaces and the like. In embodiments, any electronic access to the devices should be password/passcode protected. In other embodiments, electronic access to the devices may take place only with certain authentications or keys that are available from the manufacturer or from authorized service personnel. In other environments, the housing may be interlocked so that when the housing is opened, the POS terminal is not operable. In other embodiments, the device may be protected from EMI intrusion or from signal interception by appropriate blocking devices or interference, such as a security cage, and the like.

The present disclosure includes use of a beacon to interact with customers and to transact business using the e-commerce platform. Thus the software discussed here may be provided in connection with that application. There are, however, other useful embodiments and variations of this theme. For example, the beacon may be used to trigger a process (as above) to first attract the attention of passersby or persons who enter a shop, a museum, and so forth. The software that powers the e-commerce transaction enablement platform or transaction facilitating platform may then be used in other ways to enable a purchase or to communicate a transaction. For example, besides using the beacon for one-way communication, the merchant or other provider may use a Wi-Fi hot spot, or even a direct connection, e.g., a USB port, to communicate with the mobile device of the user. Thus, in one embodiment, the mobile device of the user may be mounted on the merchant's POS system. While this should make the transaction easier, the software should be adapted so that this method is easily accomplished.

A further embodiment may be a software development kit (SDK) that is furnished for independent software developers to assist in additional applications and embellishments for the e-commerce enablement platform and for beacon-assisted transactions and payments. These kits may contain source code or other information that is helpful for independent developers to assist. The SDK may be constructed to emphasize that transactions and ancillary communications should be encrypted and secure and not subject to eavesdropping or interference from other parties. In some embodiments, the software development kits may encourage the storage of sensitive user information or data in files that are intended to remain on the user's mobile device, rather than being stored on the e-commerce platform or on a third-party server. In other embodiments, the kits may encourage strong encryption and secure storage on the e-commerce platform or on a third party server.

When the personal data of users is secure, and the operation of their mobile electronic devices is also secure, users will be more apt to engage in electronic communication with new and unfamiliar vendors. Thus, when users venture away from their comfort zones, as in short trips or extended travel, they will be more likely to engage in such commerce when they are satisfied that their data is secure. Such security will make users more comfortable when viewing information provided from a beacon that is associated with a particular store or venue, as discussed elsewhere. Assurances from merchants and from holders in due course will help make consumers more comfortable when engaging in beacon-enabled transactions in such an e-commerce platform. Such assurances may take the form of assurances and guarantees that consumers will not suffer from fraud, eavesdropping or any unauthorized transactions if there is any sort of security breach.

These assurances and a truly secure encrypted authentication system will also encourage users to continue their normal purchases, e.g., favored brands of consumer goods, foods, recreation and the like, when they are away from home. For example, a user may prefer a certain department store or grocery store, but may not be comfortable engaging in e-commerce when the user is far away from home. If the user has confidence in the e-commerce platform and in the security of transactions with the department store or grocery store, then the user will be more likely to respond to beacon-type triggered communications. This will make the user more likely to continue to prefer his or her favored merchants, thus enhancing the loyalty program of one or more merchants. One advantage of the system described herein is that the user need not carry and present a loyalty card to a merchant or provider, since this information may be stored on the user's mobile device. Alternatively, the information may be stored on a consumer dashboard, the e-commerce server, a third party server, or the like. The key to gaining user participation may well be the confidence of the user in transactions handled by the beacon-assisted e-commerce platform.

The user may wish to add one or more devices to the transaction enablement platform for the convenience of the user. Thus, in addition to the user's smart phone, the user may wish to also make purchases via other mobile devices. These may include navigation devices, mobile personal digital assistants, laptops, palmtops, netbooks, pagers, electronic books readers, music players and the like, as well as mobile devices of family members, employees, or the like. What is needed is the ability to communicate with a beacon system as described herein. Many of these devices are equipped with a small screen to output data, questions, options and the like to the user, making practical their use in e-commerce. In one embodiment, a user registers each additional device separately. Thus, each device will be traceable to the same user, but each device will have a unique identity or identification number. In one example, the user's primary device, perhaps a smart phone may have a unique identification equivalent to "Jones1." The user's other devices may then be registered and be given unique identifications equivalent to "Jones 2" or Jones1-1," and so on.

Each device may function completely independently, and thus the user need have only a single device for making an e-commerce transaction. However, all the devices may be registered to the user, and may be registered separately. In this way, the user can separately identify each device and can track which purchase was made with which device. Thus, a user may loan a smart phone to a family member who has the user's permission to make purchases. When a statement of the user's account is rendered, the user will see all the transactions at a glance. In one embodiment, the e-commerce platform may encode each transaction with the device identification. If the statement of the account uses these device identifications, the user can immediately identify which purchases have been made with which device and thus identify which family member made the purchases. Thus, even though there are several devices, the charges may all be made to the account of the primary user.

This may help in gathering points or rewards for a loyalty program. In addition, because the purchases are made with the transaction facilitating system, it is not necessary for the primary user or family members to carry a loyalty or rewards card for presentation upon making a purchase or conducting a transaction. The transaction facilitating system, with beacon assist, continues to be useful by triggering a process (as above) to inform customers or potential customers of bargains or coupons that are available to consumers entering the particular beacon environment. The same features discussed elsewhere, such as the ability to read machine-readable tags, apply to each of the devices for each user.

In other embodiments, the user may be a small business owner or administrator. A plurality of mobile devices may be purchased, identified, coded with a unique identifier and issued to employees or agents of the business. The devices may include smart phones, mobile phones, navigation devices, mobile personal digital assistants, laptops, palmtops, netbooks, pagers, electronic books readers, music players and the like. When purchases are made, the unique identifiers allow easy separation of purchase amounts per each employee or agent and the appropriate charges or bills may be made to the customer accounts or client accounts of the business.

As discussed elsewhere, a disadvantage of electronic transactions is that data breaches can occur, potentially exposing consumer data to unauthorized persons. The risk is minimized when communications, transactions and settlements are minimized and are made highly secure and highly resistant to breaches. An additional way to minimize such risks is to avoid storing consumer data on the system, such as on computers, servers and data storage accessible to the e-commerce platform or parts of the transaction facilitating system described herein. This is made possible, as discussed elsewhere in this disclosure, by encrypting the user's personal information and storing the information, or portions thereof, only on the user's mobile device itself. Alternatively certain information may be stored on the mobile device, while other information necessary to complete a transaction may be stored elsewhere, such as on a secure server of a merchant, a secure server of a credit card company or bank, or a secure server of the e-commerce platform described herein. For example, CVV information might be stored on the device, while other sensitive information is stored separately. If certain important consumer and user data is not stored on the system, the data is less vulnerable to breaches by unauthorized persons. This level of security may give customers and merchants more confidence in the system and may encourage more widespread use of the system.

An example of this advantage may occur when a user enters a zone subject to beacon transmissions, e.g., a store, a venue, or the like. The user may observe on his or her cell phone that a launch of the application has occurred, e.g., by receiving a welcome message from a particular merchant. A first reaction may be to turn off the launch; however, if the user is interested in the store or venue, and the user has confidence in the system, the user is much more likely to listen to the welcome message and to allow the launch to proceed, e.g., to providing information about a service or a product available from the particular provider. Software should securely and reliably store the consumer information, and should also encrypt the information for sharing when the user wishes to share the data with the e-commerce platform or other desired and authorized entity. Software, for example, may allow decryption only at the e-commerce server. The information need not be shared with the merchant, who only needs to know that the transaction is authorized by the appropriate credit-granting agency or firm, e.g., the credit card company, bank or other financial institution that is sponsoring and guaranteeing performance by all parties.

Thus, the software for all aspects of the e-commerce platform, the e-commerce server, any third-party server, and so forth, would need to be synched to this method of processing the transactions. Software development kits (SDKs) provided to outside developers could assist with this effort, or to prepare related apps that may be useful to users or to merchants and providers that form part of the e-commerce platform and network.

Storing the information only on the user's mobile device will lend added security and confidence to the user and to the parties conducting business with the user, the merchants and providers of goods or services. This confidence will allow the user more freedom in making his or her purchases, including continued purchases of goods or services from preferred vendors or providers. This may extend to brands of personal products, services from preferred providers, e.g., preferred hotels and airlines, preferred grocery stores and preferred department stores. As also discussed, the user may not need to carry or display a physical loyalty card or other information that positively identifies the user to a merchant.

While only a few embodiments of the present disclosure have been shown and described, it will be obvious to those skilled in the art that many changes and modifications may be made thereunto without departing from the spirit and scope of the present disclosure as described in the following claims. All patent applications and patents, both foreign and domestic, and all other publications referenced herein are incorporated herein in their entireties to the full extent permitted by law.

The methods and systems described herein may be deployed in part or in whole through a machine that executes computer software, program codes, and/or instructions on a processor. The present disclosure may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platform. A processor may be any kind of computational or processing device capable of executing program instructions, codes, binary instructions and the like. The processor may be or may include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor, or any machine utilizing one, may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, internet server, intranet server, cloud server, and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements. The methods and systems described herein may be adapted for use with any kind of private, community, or hybrid cloud computing network or cloud computing environment, including those which involve features of software as a service (SaaS), platform as a service (PaaS), and/or infrastructure as a service (IaaS).

The methods, program codes, and instructions described herein and elsewhere may be implemented on a cellular network having multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, EVDO, mesh, or other networks types.

The methods, program codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine-readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g. USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or or intangible items from one state to another. The methods and systems described herein may also transform data representing physical and/or intangible items from one state to another.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps associated therewith, may be realized in hardware, software or any combination of hardware and software suitable for a particular application. The hardware may include a general- purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions. For the web dashboard, as described herein, HTML 5.0 and Javascript may be used. For the cloud solution, as described herein, Java and node.js may be used.

Thus, in one aspect, methods described above and combinations thereof may be embodied in computer executable code that, when executing on one or more computing devices, performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

While the disclosure has been disclosed in connection with the preferred embodiments shown and described in detail, various modifications and improvements thereon will become readily apparent to those skilled in the art. Accordingly, the spirit and scope of the present disclosure is not to be limited by the foregoing examples, but is to be understood in the broadest sense allowable by law.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein may be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

While the foregoing written description enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope and spirit of the disclosure.

All documents referenced herein are hereby incorporated by reference.

The following is a non-exhaustive list of embodiments which form part of this disclosure:
1. A method of performing a transaction, the method comprising steps of:
   generating a machine-identifiable tag, wherein the machine-identifiable tag comprises data indicative of a transaction; and
   initiating the transaction when an electronic device interprets the machine-identifiable tag and said machine-identifiable tag has been validated.
2. The method of embodiment 1, wherein generating the machine-identifiable tag comprises generating one or more of an audio tag for inclusion in the audio stream which is output, the audio tag being indicative of the transaction; or generating an odour indicative of the transaction.
3. The method of embodiment 2, wherein the audio tag comprises a watermark specifically generated and indicative of the transaction.
4. The method of any one of embodiments 1 to 3, further comprising, after the step of generating prior to the step of initiating, requesting a biometric authentication of the transaction at the electronic device and proceeding with the step of initiating the transaction only if a valid authentication of a user associated with the electronic device via the biometric authentication is determined.
5. The method of embodiment 4, wherein the biometric authentication comprises a fingerprint authentication at the electronic device.
6. The method of embodiment 1, wherein the machine-identifiable tag comprises at least one of: a QR code, an RFID tag, an NFC tag, and a transmission from a beacon.
7. An electronic device for outputting a machine-identifiable tag comprising machine-identifiable data, wherein the machine-identifiable data is indicative of a transaction such that an additional electronic device interpreting the tag can perform the transaction.
8. The electronic device of embodiment 7, wherein the machine-identifiable tag is: an audio tag indicative of the transaction or an odour indicative of the transaction.
9. The electronic device of embodiment 7, wherein the machine-identifiable tag comprises at least one of: a QR code, an RFID tag, an NFC tag, and a transmission from a beacon.
10. A method of validating a transaction, the method comprising steps of:
   associating an electronic device with identification information;
   initiating a transaction between a user of the electronic device and a transacting entity by using the electronic device; and
   displaying the identification information on a display associated with the transacting entity for validation of the electronic device used to perform the transaction.
11. The method of embodiment 10, further comprising the step of displaying the identification information on a display of the electronic device after the step of initiating the transaction with the electronic device.
12. The method of embodiment 10 or embodiment 11, further comprising the step of performing the transaction.
13. The method of any one of embodiments 10 to 12, further comprising, after the step of generating prior to the step of initiating, requesting a biometric authentication of the transaction at the electronic device and proceeding with the step of initiating the transaction only if a valid authentication of a user associated with the electronic device via the biometric authentication is determined.
14. The method of embodiment 4, wherein the biometric authentication comprises a fingerprint authentication at the electronic device.
15. The method of embodiment 12, further comprising the step of displaying confirmation of the completed transaction on the display associated with the transacting entity.
16. The method of any one of embodiments 12 to 15, further comprising the step of displaying confirmation of the completed transaction on a display of the electronic device.
17. The method of any one of embodiments 10 to 16, wherein the transaction is initiated by interpreting a machine-identifiable tag displayed on the display associated with the transacting entity using the electronic device.
18. The method of embodiment 17, wherein the machine-identifiable tag is a QR code displayed on the display associated with the transacting entity.
19. The method of embodiment 18, wherein the QR code is displayed in a web browser on the display associated with the transacting entity.
20. The method of any one of embodiments 10 to 16, wherein the transaction is initiated by interpreting a machine-identifiable tag, the machine-identifiable tag comprising at least one of: a QR code, an RFID tag, an NFC tag, and a transmission from a beacon.
21. The method of any one of embodiments 10 to 19, further comprising steps of:
   storing the identification information on a server after associating a electronic device with identification information; and
   requesting the identification information from the server after initiating the transaction using the electronic device.
22. The method of any one of embodiments 10 to 21, wherein the identification information is personal information related to the user of the electronic device.
23. The method of any one of embodiments 10 to 22, wherein the identification information is information related to the electronic device.
24. An electronic device comprising processing circuitry configured to perform the steps of any one of the methods of embodiments 1 to 3 or 10 to 23.
25. A computer-readable medium comprising computer executable instructions executable by processing circuitry, which, when executed, cause the processing circuitry to perform the steps of any one of the methods of embodiments 1 to 3 or 10 to 23.
26. A method of validating a transaction, the method comprising steps of:
   associating an electronic device with identification information;
   initiating a transaction between a user of the electronic device and a transacting entity by using the electronic device; and
   displaying the identification information on a display associated with the transacting entity for validation of the electronic device used to perform the transaction.
27. The method of embodiment 26, further comprising the step of displaying the identification information on a display of the electronic device after the step of initiating the transaction with the electronic device.
28. The method of embodiment 26 or embodiment 27, further comprising the step of performing the transaction.
29. The method of embodiment 28, further comprising the step of displaying confirmation of the completed transaction on the display associated with the transacting entity.
30. The method of embodiment 28 or embodiment 29, further comprising the step of displaying confirmation of the completed transaction on a display of the electronic device.
31. The method of any one of embodiments 26 to 30, wherein the transaction is initiated by interpreting a machine-identifiable tag displayed on the display associated with the transacting entity using the electronic device.
32. The method of embodiment 31, wherein the machine-identifiable tag is scannable code, such as a QR code, displayed on the display associated with the transacting entity.
33. The method of embodiment 32, wherein the scannable code is displayed in a web browser on the display associated with the transacting entity.
34. The method of any one of embodiments 26 to 33, further comprising steps of:
   storing the identification information on a server after associating the electronic device with identification information; and
   requesting the identification information from the server after initiating the transaction using the electronic device.
35. The method of any one of embodiments 26 to 34, further comprising, prior to the step of initiating, requesting a biometric authentication of the transaction at the electronic device and proceeding with the step of initiating the transaction only if a valid authentication of a user associated with the electronic device via the biometric authentication is determined.
36. The method of embodiment 35, wherein the biometric authentication comprises a fingerprint authentication at the electronic device.
37. The method of any one of embodiments 26 to 34, wherein the identification information is personal information related to the user of the electronic device.
38. The method of any one of embodiments 26 to 35, wherein the identification information is information related to the electronic device.
39. An electronic device comprising processing circuitry configured to perform the steps of any one of the methods of embodiments 26 to 38.
40. A computer-readable medium comprising computer executable instructions executable by processing circuitry, which, when executed, cause the processing circuitry to perform the steps of any one of the methods of embodiments 26 to 39.
41. A system for validating a transaction comprising circuitry configured to:
   associate an electronic device with identification information;
   initiate a transaction between a user of the electronic device and a transacting entity by using the electronic device; and
   display the identification information on a display associated with the transacting entity for validation of the electronic device used to perform the transaction.
42. A method of performing a transaction, the method comprising steps of:
   generating a machine-identifiable tag, wherein the machine-identifiable tag comprises data indicative of a transaction; and
   initiating the transaction when an electronic device interprets the machine-identifiable tag and said machine-identifiable tag has been validated.
43. The method of embodiment 42, wherein the machine-identifiable tag is a non-visual and/or a non-radio-frequency detectable tag.
44. The method of embodiment 42, further comprising generating an additional output associated with a product which is the subject of the transaction.
45. The method of embodiment 44, wherein the additional output comprises one or more of: an image, audio and/or video associated with or indicative of the product.
46. The method of embodiment 42, wherein generating the machine-identifiable tag comprises generating an audio tag for inclusion in the audio stream which is output, the audio tag being indicative of the transaction.
47. The method of embodiment 42, wherein generating the machine-identifiable tag comprises generating an odour tag and outputting said odour tag.
48. The method of embodiment 47, wherein the audio tag comprises a watermark specifically generated and indicative of the transaction.
49. The method of embodiment 48, wherein the watermark comprises a pre-defined analogue or digital signal embedded within an underlying audio waveform representative of the audio tag.
50. The method of embodiment 49, wherein the pre-defined analogue or digital signal is implemented in the time or frequency domain of the audio waveform.
51. The method of embodiment 50, wherein the pre-defined analogue or digital signal can be extracted using signal processing techniques.
52. The method of any one of embodiments 42 to 51, further comprising, after the step of generating prior to the step of initiating, requesting a biometric authentication of the transaction at the electronic device and proceeding with the step of initiating the transaction only if a valid authentication of a user associated with the electronic device via the biometric authentication is determined.
53. The method of embodiment 52, wherein the biometric authentication comprises a fingerprint authentication at the electronic device.
54. An electronic device comprising processing circuitry configured to perform the steps of any one of the methods of any of embodiments 42 to 51.
55. A computer-readable medium comprising computer executable instructions executable by processing circuitry, which, when executed, cause the processing circuitry to perform the steps of any one of the methods of embodiment 42 to 54.
56. An electronic device for outputting a machine-identifiable tag comprising machine-identifiable data, wherein the machine-identifiable data is indicative of a transaction such that an additional electronic device interpreting the tag can perform the transaction.
57. The electronic device of embodiment 56 wherein the machine-identifiable tag is a non-visual and/or a non-radio-frequency detectable tag.
58. The electronic device of embodiment 56 wherein the electronic device generates an additional output associated with a product which is the subject of the transaction.
59. The electronic device of embodiment 58 wherein the additional output comprises one or more of: an image, audio and/or video associated with or indicative of the product.
60. The electronic device of embodiment 56, wherein the machine-identifiable tag is: an audio tag indicative of the transaction or an odour indicative of the transaction.
61. A method of providing a machine-identifiable tag in response to a request, the method comprising steps of:
   receiving a request for a machine-identifiable tag from a requestor;
   determining whether the machine-identifiable tag exists in a reverse proxy,
   if it is determined that the machine-identifiable tag exists in the reverse proxy, outputting the machine-identifiable tag from the reverse proxy in response to requests for the machine-identifiable tags;
   if it is determined that the machine-identifiable tag does not exist in the reverse proxy, encoding a machine-identifiable tag as data, transmitting the data to the requestor and storing the machine-identifiable tag in the reverse proxy.
62. The method of embodiment 61, wherein the request for a machine-identifiable tag is received over an encrypted connection and wherein the receiving step further comprises terminating the encrypted connection.
63. The method of embodiment 61 or embodiment 62, wherein the machine-identifiable tag has a defined time to live and wherein the machine-identifiable tag is removed from the reverse proxy once the time to live of the machine-identifiable tag has expired.
64. The method of any one of embodiments 61 to 63, wherein the step of storing the machine-identifiable tag comprises associating, in the reverse proxy, the machine-identifiable tag with at least one item of unique information.
65. The method of embodiment 64, wherein the at least one piece of unique information may be one or more of: a product code, a date, a time and a location.
66. The method of any one of embodiments 61 to 65, wherein the machine-identifiable tag is a scannable code, such as a QR code.
67. The method of any one of embodiments 61 to 66, wherein the machine-identifiable tag is configured to be interpreted by an electronic device.
68. The method of embodiment 67, wherein a transaction between a user of the electronic device and a transacting entity is initiated upon interpretation of the machine-identifiable tag by the electronic device.
69. The method of any one of embodiments 61 to 68, wherein the machine-identifiable tag is displayed on a display in communication with the requestor.
70. The method of embodiment 69, wherein the machine-identifiable tag is displayed in the display via a web browser which is implemented by the requestor.
71. The method of embodiment 70, wherein the requestor is the web browser.
72. The method of embodiment 71, wherein the request for the machine-identifiable tag is requested according to client-side script provided on a web page displayed by the web browser.
73. The method of any one of embodiment 61 to 72, wherein the machine-identifiable tag is displayed on an online shopping web page.
74. An electronic device comprising processing circuitry configured to perform the steps of any one of the methods of embodiments 61 to 73.
75. A computer-readable medium comprising computer executable instructions which when executed by processing circuitry cause the processing circuitry to perform the steps of the method of any one of embodiments 61 to 73.
76. A machine-identifiable tag provider comprising processing circuitry configured to:
   receive a request for a machine-identifiable tag from a requestor;
   determine whether the machine-identifiable tag exists in a reverse proxy,
   if it is determined that the machine-identifiable tag exists in the reverse proxy, output the machine-identifiable tag from the reverse proxy in response to requests for the machine-identifiable tags;
   if it is determined that the machine-identifiable tag does not exist in the reverse proxy, encode a machine-identifiable tag as data, transmit the data to the requestor and store the machine-identifiable tag in the reverse proxy.
77. The machine-identifiable tag generator of embodiment 76, comprising a memory, wherein the processing circuitry is in communication with the memory.
78. A method of requesting a machine-identifiable tag, the method comprising steps of:
   periodically sending a request for a machine-identifiable tag with a defined time to live to a machine-identifiable tag generator;
   receiving the machine-identifiable tag from a reverse proxy if the machine-identifiable tag exists on the reverse proxy; and
   outputting the machine-identifiable tag.
79. The method of embodiment 78, wherein the step of outputting comprises displaying the received machine-identifiable tag on a display.
80. The method of embodiment 79, wherein the machine-identifiable tag is displayed in the display via a web browser.
81. The method of embodiment 80, wherein the request for the machine-identifiable tag is requested via a client-side script provided on a web page displayed by the web browser.
82. A computer-readable medium comprising computer executable instructions which when executed by processing circuitry cause the processing circuitry to perform the steps of the method of any one of embodiments 78 to 81.
83. A machine-identifiable tag requestor comprising processing circuitry configured to:
   periodically send a request for a machine-identifiable tag with a defined time to live to a machine-identifiable tag generator;
      receive the machine-identifiable tag from a reverse proxy if the machine-identifiable tag exists on the reverse proxy; and
   output the machine-identifiable tag.
84. A method of generating a machine-identifiable tag, the method comprising steps of:
   receiving a request for a machine-identifiable tag from a requestor;
   if a machine-identifiable tag corresponding to the request does not already exist in a memory, generating a machine-identifiable tag with a defined time to live;
   storing the machine-identifiable tag in the memory; and
   removing the machine-identifiable tag from the memory once the machine-identifiable tag's time to live has expired.
85. The method of embodiment 84, wherein the step of storing the machine-identifiable tag comprises associating, in the memory, the machine-identifiable tag with at least one item of unique information.
86. The method of embodiment 85, wherein the at least one item of unique information is one or more of: a product code, a date, a time, a shop identifier, and a location.
87. The method of any one of embodiments 84 to 86, further comprising receiving the request for the machine-identifiable tag periodically.
88. The method of any one of embodiments 84 to 87, further comprising sending the machine-identifiable tag to the requestor once it has been generated.
89. The method of any one of embodiments 84 to 88, wherein the machine-identifiable tag is a scannable code, such as a QR code.
90. The method of any one of embodiments 84 to 89, wherein the machine-identifiable tag is configured to be interpreted by an electronic device.
91. The method of embodiment 90, wherein a transaction between a user of the electronic device and a transacting entity is initiated upon interpretation of the machine-identifiable tag by the electronic device.
92. The method of any one of embodiments 84 to 91, wherein the machine-identifiable tag is displayed on a display in communication with the requestor.
93. The method of embodiment 92, wherein the machine-identifiable tag is displayed in the display via a web browser which is implemented by the requestor.
94. The method of embodiment 93, wherein the requestor is the web browser.
95. The method of embodiment 94, wherein the request for the machine-identifiable tag is requested according to client-side script provided on a web page displayed by the web browser.
96. The method of any one of embodiments 84 to 95, wherein the machine-identifiable tag is displayed on an online shopping web page.
97. An electronic device comprising processing circuitry configured to perform the steps of any one of the methods of embodiments 84 to 96.
98. A computer-readable medium comprising computer executable instructions which when executed by processing circuitry cause the processing circuitry to perform the steps of the method of any one of embodiments 84 to 96.
99. A machine-identifiable tag generator comprising processing circuitry configured to:
   receive a request for a machine-identifiable tag from a requestor;
   if a machine-identifiable tag corresponding to the request does not already exist in a memory, generate a machine-identifiable tag with a defined time to live;
   store the machine-identifiable tag in the memory;
   remove the machine-identifiable tag from the memory once the machine-identifiable tag's time to live has expired.
100. The machine-identifiable tag generator of embodiment 99, comprising a memory, wherein the processing circuitry is in communication with the memory.
101. A method of requesting a machine-identifiable tag, the method comprising steps of:
   periodically sending a request for a machine-identifiable tag with a defined time to live to a machine-identifiable tag generator;
   receiving the machine-identifiable tag if a preceding machine-identifiable tag's time to live has not expired; and
   outputting the machine-identifiable tag.
102. The method of embodiment 101, wherein the step of outputting comprises displaying the received machine-identifiable tag on a display.
103. The method of embodiment 102, wherein the machine-identifiable tag is displayed in the display via a web browser.
104. The method of embodiment 103, wherein the request for the machine-identifiable tag is requested via a client-side script provided on a web page displayed by the web browser.
105. An electronic device comprising processing circuitry configured to perform the steps of any one of the methods of embodiments 101 to 104.
106. A computer-readable medium comprising computer executable instructions which when executed by processing circuitry cause the processing circuitry to perform the steps of the method of any one of embodiments 101 to 104.
107. A machine-identifiable tag requestor comprising processing circuitry configured to:
   periodically send a request for a machine-identifiable tag with a defined time to live to a machine-identifiable tag generator;
   receive the machine-identifiable tag if a preceding machine-identifiable tag's time to live has expired; and
   output the machine-identifiable tag.
108. A method of processing a machine-identifiable tag, the method comprising steps of:
   generating an instance of a machine-readable tag, wherein the machine-readable tag comprises data unique to the instance of the machine-identifiable tag;
   identifying, with an electronic device, an identifier corresponding to the instance of the machine-readable tag;
   sending the identifier to a tag validation device which is configured to participate in a transaction associated with the instance of the machine-identifiable tag,
   wherein the machine-identifiable tag does not comprise data relating to the transaction itself.
109. The method of embodiment 108, wherein the data unique to the instance of the machine-identifiable tag comprises a Uniform Resource Locator ("URL").
110. The method of embodiment 109, wherein the Uniform Resource Locator comprises a location of the tag validation device and the identifier unique to the instance of the machine-identifiable tag.
111. The method of any one of embodiments 108 to 110, wherein the data relating to the transaction itself which is not comprised in the machine-identifiable tag comprises one or more of: product information, a product identifier, product quantity, a URL on which the instance of the machine-identifiable tag is located, user information, and a delivery or shipping information.
112. The method of any one of embodiments 108 to 111, wherein the machine-identifiable tag comprises a scannable code, such as a QR code.
113. An electronic device comprising processing circuitry configured to perform the steps of any one of the methods of any of embodiments 108 to 112.
114. A computer-readable medium comprising computer executable instructions executable by processing circuitry, which, when executed, cause the processing circuitry to perform the steps of any one of the methods of embodiments 108 to 112.
115. A validation server for initiating a transaction, the validation server configured to:
   generate an instance of a machine-identifiable tag, wherein the a machine-identifiable tag comprises data unique to the instance of the machine-identifiable tag;
   receive from an electronic device an identifier corresponding to the instance of the machine-identifiable tag;
   initiate a transaction associated with the instance of the machine-identifiable tag; and
   wherein the machine-identifiable tag does not comprise data relating to the transaction itself.
116. An electronic device for requesting a transaction, the electronic device configured to:
   identify, in a machine-identifiable tag, data unique to the instance of the machine-identifiable tag;
   send an identifier corresponding to the instance of the machine-identifiable tag to
   a validation server to initiate the transaction associated with the instance of the machine-identifiable tag; and
   wherein the electronic device does not send data relating to the transaction itself.
117. A method of authenticating an electronic device with a validation device for participating in a transaction, the method comprising steps of:
   obtaining user data at a tag output device;
   outputting a machine-identifiable tag via the tag output device, wherein the machine-identifiable tag comprises data instructing the electronic device to send authentication data to a validation device;
   sending the user data to the validation device;
   identifying the data instructing the electronic device to send authentication data to a validation device via the machine-identifiable tag with the electronic device; and
   sending the authentication data from the electronic device to the identified validation device to associate the electronic device with the user data.
118. The method of embodiment 117, further comprising outputting with the tag output device information identifying the electronic device when the electronic device identifies the machine-identifiable tag.
119. The method of embodiment 118, wherein the step of outputting comprises displaying information indicative of the electronic device being associated and/or and the user with which the electronic device is associated.
120. The method of any one of embodiments 117 to 119, wherein the user data comprises one or more of: a user's name, postal address, email address, phone number, and payment information, such as credit or debit card details.
121. The method of any one of embodiments 117 to 120, wherein the authentication data is unique to the electronic device.
122. The method of any one of embodiments 117 to 121, wherein the tag output device outputs a reference to a resource from which the electronic device can obtain software executable on the electronic device for sending data to the validation device when the software identifies the machine-identifiable tag.
123. The method of embodiment 122, wherein the machine-identifiable tag comprises the reference to a resource.
124. The method of embodiment 122 or embodiment 123, wherein the reference comprises a Uniform Resource Locator ("URL").
125. The method of any one of embodiments 117 to 124, further comprising the step of revoking via the validation device the association of the electronic device with the user data.
126. The method of any one of embodiments 117 to 125, further comprising, upon registration and authentication of the electronic device, participating in a transaction via the electronic device by identifying a further machine-identifiable tag and sending information of the further machine identifiable tag and information identifying the electronic device to the validation device.
127. The method of embodiment 126 wherein the further machine-identifiable tag comprises a scannable code, such as a QR code.
128. The method of any one of embodiments 117 to 127, wherein the machine-identifiable tag comprises a scannable code, such as a QR code.
129. An electronic device comprising processing circuitry configured to perform the steps of any one of the methods of any embodiments 117 to 128.
130. A computer-readable medium comprising computer executable instructions executable by processing circuitry, which, when executed, cause the processing circuitry to perform the steps of any one of the methods of embodiments 117 to 128.
131. An electronic device for authenticating the electronic device with a validation device, the electronic device comprising processing circuitry configured to:
   identify an instruction to send authentication data to a validation device from a machine-identifiable tag; and
   send the authentication data from the electronic device to the validation device to associate the electronic device with user data input at a tag output device which outputs the machine-identifiable tag.
132. A validation device for authenticating an electronic device with the validation device, the validation device comprising processing circuitry configured to:
   receive authentication data from an electronic device;
   associate the electronic device with user data input at a tag output device from which the electronic device obtains a machined-identifiable tag comprising data to instruct the electronic device to send authentication; and
   authenticates the electronic device.
133. A machine-identifiable tag output device, comprising:
   a display and processing circuitry in communication with the display,
   wherein the display is configured to output a machine-identifiable tag for identifying by an electronic device for use in initiating an electronic transaction, and
   wherein upon detection of a pending transaction processing message, the processing circuitry causes the output on the display to be modified to indicate that the processing of a transaction is in progress.
134. The device of embodiment 133, wherein upon detection of a transaction completion message, the processing circuitry is further configured to cause the display to be modified to indicate that the transaction has been completed.
135. A machine-identifiable tag output device, comprising:
   a display and processing circuitry,
   wherein the display is configured to output a machine-identifiable tag for identifying by an electronic device for use in initiating an electronic transaction, and
   wherein upon detection of a transaction completion message, the processing circuitry is configured to cause the display to be modified to indicate that the transaction has been completed.
136. The device of embodiment 135, wherein upon detection of a pending transaction processing message, the processing circuitry causes the output on the display to be modified to indicate that the processing of a transaction is in progress.
137. The device of embodiment 133 or embodiment 136, wherein the processing circuitry causes the output on the display to be modified to provide identification information on the display upon detection of the pending transaction processing message.
138. The device of embodiment 137, wherein the identification information comprises personal information which is related and/or unique to the user of the electronic device.
139. The device of embodiment 137 or embodiment 138, wherein the identification information comprises information which is related and/or unique to the electronic device.
140. The device of any one of embodiments 133 to 139, wherein the transaction is initiated following interpretation of the machine-identifiable tag displayed on the display by the electronic device.
141. The device of any one of embodiments 133 to 140, wherein the machine-identifiable tag displayed on the display is a machine-readable code, such as a scannable code, for example a QR code or a bar code.
142. A system for processing transactions, comprising:
   the machine-identifiable tag output device of any one of the preceding embodiments when dependent on embodiment 133;
   a tag validation device; and
   an electronic device configured to identify the machine-identifiable tag output on the display,
   wherein the electronic device and machine-identifiable tag output device are in communication with the tag validation device,
   wherein the electronic device is configured, upon identification of the machine-identifiable tag output by the machine-identifiable tag output device, to transmit first data pertaining to the identified machine-identifiable tag and second data identifying the electronic device or a user thereof to the tag validation device,
   wherein the tag validation device is configured, upon receipt of the first data and second data, to initiate transaction processing for a product identified by the first data based on transaction processing information corresponding to the second data and transmits the pending transaction processing message to the tag output device.
143. A system for processing transactions, comprising:
   the machine-identifiable tag output device of any one of the preceding embodiments when dependent on embodiment 135;
   a tag validation device; and
   an electronic device configured to identify the machine-identifiable tag output on the display,
   wherein the electronic device and machine-identifiable tag output device are in communication with the tag validation device,
   wherein the electronic device is configured, upon identification of the machine-identifiable tag output by the machine-identifiable tag output device, to transmit first data pertaining to the identified machine-identifiable tag and second data identifying the electronic device or a user thereof to the tag validation device,
   wherein the tag validation device is configured, upon receipt of the first data and second data, to initiate transaction processing for a product identified by the first data based on transaction processing information corresponding to the second data,
   wherein upon satisfactory completion of the transaction processing, the tag validation device transmits the transaction completion message to the tag output device.
144. The system of embodiment 143, wherein the tag validation device is configured to transmit a transaction failure message to the tag output device when it is determined that the transaction processing cannot be completed following its initiation, wherein the processing circuitry of the tag output device is configured to modify the display to indicate that the transaction processing has failed.
145. The system of any one of embodiments 142 to 144, further comprising a transaction processing device configured receive the transaction processing information from the tag validation device to perform the transaction processing, and transmit a notification of completion or failure of the transaction processing to the tag validation device.
146. A method of processing transactions, the method comprising steps of:
   identifying with an electronic device a machine-identifiable tag output on a display of a tag output device;
   upon identification of the machine-identifiable tag output by the machine-identifiable tag output device, transmitting by the electronic device first data pertaining to the identified machine-identifiable tag and second data identifying the electronic device or a user thereof to a tag validation device;
   upon receipt of the first data and second data by the tag validation device, initiating transaction processing for a product identified by the first data based on transaction processing information corresponding to the second data;
   transmitting a pending transaction processing message from the tag validation device to the tag output device; and
   upon receipt of the pending transaction processing message by the tag output device, modifying the output of the display to indicate that the transaction processing is in progress.
147. A method of processing transactions, the method comprising steps of:
   identifying the machine-identifiable tag output on the display with an electronic device;
   upon identification of the machine-identifiable tag output by the machine-identifiable tag output device, transmitting by the electronic device first data pertaining to the identified machine-identifiable tag and second data identifying the electronic device or a user thereof to a tag validation device;
   upon receipt of the first data and second data by the tag validation device, initiating transaction processing for a product identified by the first data based on transaction processing information corresponding to the second data;
   initiating transaction processing for a product identified by the first data based on transaction processing information corresponding to the second data;
   upon satisfactory completion of the transaction processing, transmitting a transaction completion message from the tag validation device to the tag output device; and
   upon receipt of the transaction completion message by the tag output device, modifying the output of the display to indicate that the transaction processing is complete.
148. An electronic device comprising processing circuitry configured to perform the steps of any one of the methods of embodiment 146 or embodiment 147.
149. A computer-readable medium comprising computer executable instructions executable by processing circuitry, which, when executed, cause the processing circuitry to perform the steps of any one of the methods of embodiment 146 or embodiment 147.
150. A method for performing an electronic transaction, the method comprising steps of:
   receiving, at a server from an electronic device, payment instrument verification data associated with a payment instrument;
   combining, at the server, the verification data with payment instrument data pertaining to the payment instrument; and
   initiating the electronic transaction with the combined data.
151. A method for performing an electronic transaction, the method comprising steps of:
   sending, from an electronic device to a server, verification data associated with a payment instrument for combining with the payment instrument data stored at the server.
152. A method for performing an electronic transaction, the method comprising steps of:
   sending, from an electronic device, payment instrument verification data associated with a payment instrument to a server;
   receiving the verification data at the server;
   obtaining, at the server, payment instrument data pertaining to the payment instrument;
   combining, at the server, the verification data with the data pertaining to the payment instrument to initiate a transaction; and
   initiating the electronic transaction with the combined data.
153. The method of any one of embodiments 150 to 152, further comprising, prior to the step of sending payment instrument verification data, requesting a biometric authentication of the transaction at the electronic device and proceeding with the step of sending the payment instrument verification data only if a valid authentication of a user associated with the electronic device via the biometric authentication is determined.
154. The method of embodiment 153, wherein the biometric authentication comprises a fingerprint authentication at the electronic device.
155. The method of embodiments to 154, wherein the payment instrument data does not comprise the verification data.
156. The method of embodiments 150 to 154, wherein the payment instrument verification data comprises a Card Security Code (CSC) or Card Verification Value (CVV), and the payment instrument comprises a payment card.
157. The method of any one of embodiments 150 to embodiment 156, wherein the verification data is not stored on the server prior to it being received by the server.
158. The method of embodiment 157, wherein the verification data is stored on the electronic device.
159. The method of any one of embodiments 150 to embodiment 158, wherein the payment instrument data comprises at least one of:
   a payment card number;
   at least one date associated with the payment card;
   an issue number associated with the payment card;
   at least one address associated with the payment card;
   at least one name associated with the payment card; and
   at least one identifier to indicate data pertaining to the payment means.
160. The method of any one of embodiments 150 to embodiment 159, wherein the payment instrument data is stored at the server prior to it being received by the server.
161. The method of embodiment 160, wherein the payment instrument data is stored in memory at the server alongside identification data associated with the payment instrument, or is stored in memory at one or more additional servers and obtained upon request by the server.
162. The method of embodiment 161, wherein the electronic device sends the identification data to the server, wherein the identification data identifies the payment instrument data pertaining to the payment instrument for combining with the verification data by performing a lookup of the verification data received from the electronic device in the memory.
163. The method of embodiment 162, wherein the electronic device stores verification data and corresponding identification data for a plurality of payment instruments.
164. The method of any one of embodiments 150 to 163, wherein the electronic device sends data indicative of the electronic transaction which is to be performed to the server.
165. The method of embodiment 164, wherein the verification data is stored on the electronic device in memory in a first encrypted form.
166. The method of embodiment 165, wherein the electronic device decrypts the verification data in its memory using a first encryption-decryption algorithm associated with the electronic device.
167. The method of embodiment 166, wherein the electronic device encrypts the decrypted verification data into a second encrypted form using a second encryption-decryption algorithm associated with the server, and the step of sending comprises sending the encrypted verification data in its second encrypted form to the server.
168. The method of embodiment 167, wherein the server decrypts the re-encrypted verification data using the second encryption-decryption algorithm prior to combining it with the payment instrument data.
169. The method of embodiments 150 to 168, wherein the combined data is sent by the server to a transaction server for carrying out the electronic transaction.
170. The method of embodiments 150 to 169 wherein the data pertaining to the payment instrument is obtained by the server from one or more additional servers.
171. The method of embodiment 170, wherein the payment instrument data comprises a plurality of subsets of payment instrument data, each of which is obtained by the server from a separate additional server.
172. A computer-readable medium comprising computer executable instructions executable by processing circuitry, which, when executed, cause the processing circuitry to perform the steps of any one of the methods of embodiments 150 to 171 when dependent on embodiment 150.
173. A server comprising:
   processing circuitry configured to:
      receive from an electronic device, verification data associated with a payment instrument;
      combine the verification data with payment instrument data pertaining to the payment instrument; and
   initiate the electronic transaction with the combined data.
174. The server of embodiment 173 wherein the processing circuitry is further configured to perform the steps of any one of the methods of embodiments 150 to 171 when dependent on embodiment 150.
175. A computer-readable medium comprising computer executable instructions executable by processing circuitry, which, when executed, cause the processing circuitry to perform the steps of any one of the methods of embodiments 151 to 171 when dependent on embodiment 151.
176. A user operable electronic device comprising:
   processing circuitry configured to:
      send to a server, verification data associated with a payment instrument for combining with the payment instrument data stored at the server.
177. The user operable electronic device of embodiment 176 wherein the processing circuitry is configured to perform the steps of any one of the methods of embodiments 151 to 171 when dependent on embodiment 151.
178. A system for performing an electronic transaction comprising:
   the server of embodiment 173 or embodiment 174; and
   the electronic device of embodiment 176 or embodiment 177.
179. A method for configuring a wireless beacon, the method comprising steps of:
   receiving, at an electronic device, identification information from a wireless beacon;
   sending, by the electronic device, an indication to a server that it has received the identification information;
   based on the identification information, receiving at the electronic device, configuration data for the beacon, from the server; and
   sending, by the electronic device, the configuration data to the wireless beacon.
180. A method for configuring a wireless beacon, the method comprising steps of:
   receiving, at a server, an indication that an electronic device has detected identification information from a wireless beacon;
   based on the identification information, identifying, by the server, configuration data for the beacon; and
   sending, by the server, the configuration data to the electronic device.
181. A method for configuring a wireless beacon, the method comprising steps of:
   receiving, at an electronic device, identification information from a wireless beacon; sending, by the electronic device, an indication to a server that it has received the identification information;
   receiving, at the server, an indication that an electronic device has detected the identification information from a wireless beacon;
   based on the identification information, identifying, by the server, configuration data for the beacon;
   sending, by the server, the configuration data to the electronic device; and
   sending, by the electronic device, the configuration data to the wireless beacon.
182. The method of any one of embodiments 179 to 181, further comprising performing by the beacon a configuration operation on the beacon with the configuration data.
183. The method of embodiment 182, wherein the identification information is of a first type, and the configuration operation comprises configuring the beacon identification information to be of a second type.
184. The method of embodiment 183 where the identification information of the first type is different to the identification information of the second type.
185. The method of embodiment 183 or embodiment 184, wherein the identification information of the first type comprises a first unique identifier, and the identification information of the second type comprises a second unique identifier.
186. The method of embodiment 185, wherein the first unique identifier differs from the second unique identifier by at least one characteristic.
187. The method of embodiment 186, wherein the at least one characteristic comprises at least one of: a universally unique identifier (UUID), a major value, a minor value, an indication of a transmission power of the beacon, a beacon transmission interval, and a period of repetition.
188. The method of any one of embodiments 179 to 187, further comprising, following receipt of the configuration data at the wireless beacon, establishing a first mode of communication between the electronic device and the beacon.
189. The method of embodiment 188, wherein the first mode of communication is a unidirectional mode of communication whereby the electronic device is configured to transmit data to the beacon and the wireless beacon is configured to receive data from the beacon.
190. The method of any one of embodiments 179 to 187, further comprising, following receipt of the configuration data at the wireless beacon, establishing a second mode of communication between the electronic device and the beacon.
191. The method of embodiment 190, wherein the second mode of communication is a bidirectional mode of communication whereby the electronic device is configured to transmit data to the beacon and the wireless beacon is configured to receive data from the beacon, and transmit data to the electronic device.
192. The method of any one of embodiments 188 to 191, wherein the data transmitted to the beacon comprises data associated with the beacon, such as a firmware update.
193. The method of any one of embodiments 179 to 192, wherein the wireless beacon sends and/or receives data to and/or from a remote device which is in communication with the electronic device via a communication interface of the electronic device.
194. The method of embodiment 193, wherein the communication interface is configured to communicate with the remote device over a network.
195. The method of embodiment 193 or embodiment 194, wherein the communication interface is configured to communicate with the remote device via a long-range wireless protocol.
196. The method of embodiments 188 to 195, wherein the data is passed to and/or from a further device to which the beacon is in direct communication.
197. The method of embodiment 196 when dependent on embodiment 193, wherein the wireless beacon sends and/or receives data for the further device via the communication interface of the electronic device to and/or from the remote device.
198. The method of any one of embodiments 179 to 197, wherein the beacon is configured to communicate with the electronic device via a short-range wireless communications protocol.
199. The method of embodiment 198, wherein the beacon comprises a Bluetooth or Bluetooth Low Energy, or Bluetooth Smart beacon.
200. The method of any one of embodiments 179 to 199, wherein the configuration data is sent to the wireless beacon by the electronic device under control of the server according to a schedule.
201. A computer-readable medium comprising computer executable instructions executable by processing circuitry, which, when executed, cause the processing circuitry to perform the steps of any one of the methods of embodiments 179 to 200.
202. An electronic device for configuring a wireless beacon, comprising:
   a first transceiver configured to receive identification information from a wireless beacon;
   a second transceiver configured to transmit an indication to a server that it has received the identification information from the wireless beacon, and in response receive from the server configuration data for configuring the wireless beacon; and
   wherein the first transceiver is configured to send the configuration data to the wireless beacon.
203. The electronic device of embodiment 202, further comprising:
   processing circuitry in communication with the first and second transceivers and configured to perform the steps of any one of the methods of embodiments 179 to 200.
204. A communications system comprising:
   the electronic device of embodiment 202 or embodiment 203;
   the wireless beacon; and
   the server,
   wherein the electronic device and wireless beacon are each configured to communicate with each other, the server and electronic device are each configured to communicate with each other, and the server and wireless beacon are each configured to communicate with each other via the electronic device.
205. A method for mapping a plurality of wireless beacons located in disparate locations, the method comprising steps of:
   receiving, at a computer-implemented registry, identification data for identifying a wireless beaconlocal wireless transceiver;
   receiving, at the computer-implemented registry, location data indicative of a location of the local wireless transceiver;
   associating, at the computer-implemented registry, the identification data with the location data for the local wireless transceiver; and
   storing, at the computer-implemented registry, the associated identification and location data in a profile associated with the local wireless transceiver.
206. A method for mapping a plurality of local wireless transceivers located in disparate locations, the method comprising a step of:
   sending, from an electronic device to a computer-implemented registry, identification data for identifying a local wireless transceiver,
   wherein the identification data enables the computer-implemented registry to verify whether a profile associated with the local wireless transceiver exists, wherein the profile comprises location data corresponding to a location of the local wireless transceiver.
207. The method of embodiment 205 or embodiment 206, wherein the location data indicative of a location of the local wireless transceiver is determined by the electronic device based on a location service of the electronic device and sent to the computer-implemented registry for storing.
208. A method for locating an electronic device, the method comprising steps of:
   receiving, at a computer-implemented registry, an indication that an electronic device has received identification data of a local wireless transceiver;
   identifying, at the computer-implemented registry, based on location data corresponding to a location of the identified local wireless transceiver stored at the computer-implemented registry, a location of the electronic device.
209. The method of embodiment 208, further comprising storing the identified location of the electronic device in the computer-implemented registry.
210. The method of embodiment 208 or embodiment 209, wherein the location of the electronic device is determined as the identified location of the local wireless transceiver, or as a relative location with respect to the local wireless transceiver based on a signal power of the local wireless transceiver received by the electronic device.
211. The method of any one of embodiments 208 to 210 wherein the step of identifying comprises:
   comparing, at the computer-implemented registry, the identification data with identification data of local wireless transceivers in the registry; and
   determining, at the computer-implemented registry, based on the identification data, location data corresponding to a location of the local wireless transceiver.
212. A method for locating an electronic device, the method comprising steps of:
   receiving, at an electronic device, identification data from a local wireless transceiver;
   sending, from the electronic device, the identification data to a computer-implemented registry; and
   based on the identification data, receiving, at the electronic device, from the computer-implemented registry, a location associated with the electronic device.
213. The method of any one of embodiments 208 to 212, further comprising:
   tracking locations of the electronic device by storing, at the computer-implemented registry, a plurality of identified locations of local wireless transceivers over time.
214. The method of any one of embodiments 205 to 213, wherein the computer-implemented registry comprises a plurality of profiles, each profile associated with a respective local wireless transceiver.
215. The method of embodiment 214, wherein each profile comprises data indicative of each of the electronic devices which have received a wireless broadcast from the profile's corresponding local wireless transceiver.
216. The method of embodiment 214 or embodiment 215, wherein each profile comprises at least one data entry from a plurality of data entries, the plurality of data entries comprising at least one of: an unique identifier associated with the local wireless transceiver, unique identifier characteristics, a universally unique identifier (UUID), a major value, a minor value, an indication of a transmission power of the local wireless transceiver, a beacon transmission interval and a period of repetition, data pertaining to: an owner/proprietor of the local wireless transceiver, a manufacturer of the local wireless transceiver, a local wireless transceiver's service history, firmware version, previous locations of the local wireless transceiver, a history an indication of a transmission power of the local wireless transceiver, a local wireless transceiver transmission interval and a period of repetition which detected this local wireless transceiver, a data file associated with each electronic device in the history an indication of a transmission power of the local wireless transceiver, a local wireless transceiver transmission interval and a period of repetition, a local wireless transceiver device profile, an RSSI value, local wireless transceiver internal data comprising a time, a date, a zone of detection, a geo-location, a battery voltage, an external data from a mobile application which detected the local wireless transceiver, data pertaining to the device or user thereof on which the mobile application is run, a profile, timestamps, and statistical analysis, a service provider of the local wireless transceiver, and data associated with a device to which the local wireless transceiver is connected.
217. The method of any one of embodiments 206 to 216, wherein the location data comprises at least one of: GPS coordinates, a latitude and a longitude, an altitude, an address, and a name of a location.
218. The method any one of embodiments 205 to 217, further comprising:
   receiving, at the computer-implemented registry, an indication that a broadcast from a local wireless transceiver has been detected by an electronic device;
   comparing, at the computer-implemented registry, the broadcast with information in the computer-implemented registry to determine whether a profile associated with the local wireless transceiver exists;
   if it is determined that a profile does not exist, creating, at the computer-implemented registry, a new profile based on the broadcast and location information associated with the electronic device; and
   if it is determined that a profile does exist, updating or verifying, at the computer-implemented registry, an existing profile based on the broadcast and location information associated with the electronic device.
219. The method of embodiment 218, wherein the location information associated with the electronic device is received at the computer-implemented registry from the electronic device.
220. The method of any one of embodiments 205 to 219, wherein the local wireless transceiver is a wireless beacon.
221. The method of any one of embodiments 205 to 220, wherein each local wireless transceiver is configured to communicate with the electronic device via a short-range wireless communications protocol.
222. The method of embodiment 221, wherein the local wireless transceiver comprises a Bluetooth or Bluetooth Low Energy, or Bluetooth Smart beacon.
223. The method of any one of embodiments 205 to 222, wherein the electronic device is configured to communicate with the computer-implemented registry via a long-range wireless protocol.
224. A computer-readable medium comprising computer executable instructions executable by processing circuitry, which, when executed, cause the processing circuitry to perform the steps of any one of the methods of embodiments 205 to 223.
225. An electronic device comprising:
   a transmitter configured to send to a computer-implemented registry, identification data indicative of a local wireless transceiver,
   wherein the identification data enables the computer-implemented registry to verify whether a profile associated with the local wireless transceiver exists within the registry, wherein the profile comprises location data corresponding to a location of the local wireless transceiver.
226. An electronic device comprising:
   a receiver configured to receive identification data from a local wireless transceiver identifying the local wireless transceiver;
   a transceiver configured to transmit the identification data to a computer-implemented registry and based on the identification data receive from the computer-implemented registry, a location associated with the electronic device.
227. The electronic device of embodiment 225 or embodiment 226, further comprising:
   processing circuitry in communication with the transmitter or receiver and transceiver and is configured to perform the steps of any one of the methods of embodiments 205 to 223.
228. A processing device comprising:
   a receiver configured to receive identification data for identifying a local wireless transceiver and location data indicative of a location of the local wireless transceiver; and
   processing circuitry configured to associate the identification data with the location data for the local wireless transceiver and storing in memory the associated identification and location data in a profile associated with the local wireless transceiver.
229. A processing device comprising:
   a receiver configured to receive an indication that an electronic device has received identification data of a local wireless transceiver; and
   processing circuitry configured to identify based on location data corresponding to a location of the identified local wireless transceiver stored at the computer-implemented registry, a location of the electronic device.
230. The processing device of embodiment 228 or embodiment 229, wherein the processing circuitry is in communication with the receiver and is configured to perform the steps of any one of the methods of embodiments 205 to 223.
231. The processing device of any one of embodiments 228 to 230 being a computer-implemented registry.
232. A system comprising:
   the electronic device of any one of embodiments 225 to 227;
   the processing device of any one of embodiments 228 to 231; and
   the local wireless transceiver.
233. A method for facilitating communication via a network based on a wireless protocol, the method comprising:
   receiving, by an electronic device, an indication that communication via the wireless protocol is available;
   upon receipt of the indication, connecting the electronic device to the network via the wireless protocol; and
   enabling communication across the network by the electronic device automatically providing access information for accessing the network.
234. A method for facilitating communication via a network based on a wireless protocol, the method comprising:
   determining, at a server, that communication via the wireless protocol is available to an electronic device; and
   sending, by the server, an indication that communication via the wireless protocol is available to the electronic device, the indication comprising access information to enable the electronic device to automatically connect to the network.
235. The method of embodiment 233 or embodiment 234 further comprising, upon receipt of the indication, the electronic device enabling a disabled wireless radio associated therewith for communication via the wireless protocol.
236. The method of embodiment 235, wherein enabling a disabled wireless radio comprises executing a program on the electronic device in communication with an underlying operating system on which the program runs, and requesting by the program that the operating system enables the wireless radio.
237. The method of embodiments 233 to 236, wherein the indication comprises parameters for connection to an access point associated with the wireless protocol.
238. The method of embodiment 237, wherein automatically providing access information for the network comprises providing the parameters to the access point.
239. The method of embodiment 238, wherein the parameters comprise at least one of: an SSID, an IP Address, a Subnet Mask, a Default Gateway, a DNS, a WPA, a WEP, and login information for the access point.
240. The method of embodiments 233 to 239, wherein the indication is received from a server upon the electronic device detecting identification data broadcast from a wireless beacon, wherein the identification data identifies the wireless beacon.
241. The method of embodiments 233 to 239, wherein the indication is received from a server upon the electronic device detecting providing location information of a wireless beacon.
242. The method of embodiment 240, wherein the indication is received from the server via an alternative wireless network.
243. The method of embodiment 242, wherein the alternative network employs a wireless protocol.
244. The method of any one of embodiments 240 to 243, wherein the identification data comprises a unique identifier, and the electronic device sends the unique identifier to the server.
245. The method of embodiment 244, wherein the server determines, based on the unique identifier, that the beacon is transmitting in an area in which the wireless protocol is available.
246. The method of embodiment 245, wherein upon the server determining that the beacon is transmitting in an area in which the wireless protocol is available, the server sends the indication to the electronic device.
247. The method of embodiment 246, wherein the unique identifier comprises at least one characteristic from a plurality of characteristics, the plurality of characteristics comprising at least one of: a universally unique identifier (UUID), a major value, a minor value, an indication of a transmission power of the beacon, a beacon transmission interval, and a period of transmission repetition.
248. The method of embodiments 233 to 239, wherein the electronic device receives the indication from a wireless beacon.
249. The method of any one of embodiments 240 to 248, wherein the beacon comprises a Bluetooth or Bluetooth Low Energy, or Bluetooth Smart beacon.
250. The method of embodiments 233 to 247, wherein the electronic device determines its location using a location service of the electronic device and sends its location to the server.
251. The method of embodiment 250, wherein the server determines, based on the location of the electronic device, that the electronic device in an area in which the wireless protocol is available.
252. The method of embodiment 251, wherein upon the server determining that the electronic device is an area in which the wireless protocol is available, the server sends the indication to the electronic device.
253. The method of embodiments 233 to 252, wherein the wireless network comprises a Wi-Fi network.
254. The method of any one of embodiments 233 to 253, wherein a user confirmation is required on the electronic device before automatically providing the access information for the network.
255. A server comprising:
   processing circuitry configured to determine that communication via a network based on a wireless protocol over a network is available to an electronic device and configured to send an indication that communication via the wireless protocol is available to the electronic device, the indication comprising access information to enable the electronic device to automatically connect to the network.
256. The server of embodiment 255, wherein the processing circuitry is further configured to perform the steps of any one of the methods of embodiments 233 to 254.
257. An electronic device comprising:
   a first transceiver configured to receive an indication that communication via a network based on a wireless protocol is available; and
   a second transceiver configured for communication based on the wireless protocol;
   processing circuitry in communication with the first and second transceivers and configured, upon receipt of the indication, to connect the electronic device to the network via the wireless protocol with the second transceiver, wherein the processing circuitry is further configured to enable communication across the network by the electronic device automatically providing access information for accessing the network.
258. The electronic device of embodiment 257, wherein the processing circuitry is further configured to perform the steps of any one of the methods of embodiments 233 to 254.
259. A wireless beacon comprising:
   a transmitter configured to broadcast identification data, wherein the identification data identifies the wireless beacon for providing access information for an electronic device that communication via a network based on a wireless protocol is available.
260. The wireless beacon of embodiment 259, further comprising processing circuitry in communication with the transmitter and further configured to perform the steps of any one of the methods of embodiments 233 to 254.
261. A system for facilitating communication via a network based on a wireless protocol comprising:
   the electronic device of embodiment 257 or embodiment 258;
   the server of embodiment 255 or embodiment 256; and
   the wireless beacon of embodiment 259 or embodiment 260;
262. A method for initiating an electronic transaction, the method comprising steps of:
   identifying, by an electronic device, a machine-identifiable tag indicative of an electronic transaction;
   requesting, by the electronic device, a confirmation to initiate the electronic transaction when the electronic device identifies the machine-identifiable tag; and
   initiating the transaction when the electronic device receives the confirmation.
263. A method for initiating an electronic transaction, the method comprising steps of:
   receiving, at a server, an indication that an electronic device has identified a machine-identifiable tag indicative of an electronic transaction;
   sending, by the server, to the electronic a device a request to confirm initiation of the electronic transaction; and
   initiating the transaction when the electronic device receives the confirmation.
264. The method of embodiment 262 or embodiment 263, wherein the confirmation comprises a request for an input to the electronic device.
265. The method of embodiment 264, wherein the input comprises an input on a touch sensitive display.
266. The method of embodiment 264, wherein the input comprises an input to a microphone associated with the electronic device.
267. The method of embodiment 264, wherein the input is a biometric input associated with a user of the electronic device.
268. The method of embodiment 267, wherein the biometric input is a fingerprint input.
269. The method of any one of embodiments 264 to 268, wherein only if the input is or is equivalent to a pre-determined input indicative of the confirmation to proceed with the transaction, then the transaction is initiated.
270. The method of embodiment 269, wherein the input is processed by processing circuitry of the electronic device to determine whether the input is or is equivalent to the predetermined input, wherein the predetermined input is stored in the electronic device.
271. The method of embodiment 269, wherein the input is transmitted to a remote device and processed by processing circuitry of the remote device to determine whether the input is or is equivalent to the predetermined input, and a flag indicative of whether or not the input is or is equivalent to the predetermined input is sent to the electronic device or server, wherein the predetermined input is stored in the remote device.
272. The method of embodiment 271 when dependent on embodiment 263, wherein the remote device is the server.
273. The method of embodiments 262 to 270, wherein the request is displayed on the electronic device.
274. The method of embodiments 262 to 273, wherein the machine-identifiable tag comprises executable instructions for processing by processing circuitry in the electronic device, and which when identified and executed by the processing circuitry, causes the device to communicate with the server, and obtain further instructions concerning the transaction from the server.
275. The method of embodiment 274, wherein the further instructions comprise at least one of:
   display data relevant to the transaction; and
   request the confirmation to initiate the transaction.
276. The method of embodiment 275, wherein the machine-identifiable tag comprises an off-line tag.
277. The method of any one of embodiments 262 to 276, wherein the step of initiating comprises sending, by the electronic device, an instruction to the server to proceed with the electronic transaction which is indicated by the machine-identifiable tag.
278. A computer-readable medium comprising computer executable instructions executable by processing circuitry, which, when executed, cause the processing circuitry to perform the steps of any one of the methods of embodiments 262 to 277.
279. A server comprising:
   processing circuitry configured to:
      receive an indication that an electronic device has identified a machine-identifiable tag indicative of an electronic transaction;
      send to the electronic a device a request to confirm initiation of the electronic transaction; and
      initiate the transaction when the electronic device receives the confirmation.
280. The server of embodiment 279 wherein the processing circuitry is further configured to perform the steps of any one of the methods of embodiments 262 to 277.
281. A user operable electronic device comprising:
   processing circuitry configured to:
      identify a machine-identifiable tag indicative of an electronic transaction;
      request a confirmation to initiate the electronic transaction when the machine-identifiable tag has been identified; and
      initiate the transaction when the electronic device receives the confirmation.

## Claims

1. A method of providing a machine-identifiable tag in response to a request, the method comprising steps of:
receiving a request for a machine-identifiable tag from a requestor;
determining whether the machine-identifiable tag exists in a reverse proxy,
if it is determined that the machine-identifiable tag exists in the reverse proxy, outputting the machine-identifiable tag from the reverse proxy in response to the request for the machine-identifiable tag;
if it is determined that the machine-identifiable tag does not exist in the reverse proxy, encoding a machine-identifiable tag as data, transmitting the data to the requestor and storing the machine-identifiable tag in the reverse proxy.

2. The method of claim 1, wherein the request for a machine-identifiable tag is received over an encrypted connection and wherein the receiving step further comprises terminating the encrypted connection.

3. The method of claim 1 or claim 2, wherein the machine-identifiable tag has a defined time to live and wherein the machine-identifiable tag is removed from the reverse proxy once the time to live of the machine-identifiable tag has expired.

4. The method of any one of claims 1 to 3, wherein the step of storing the machine-identifiable tag comprises associating, in the reverse proxy, the machine-identifiable tag with at least one item of unique information.

5. The method of claim 4, wherein the at least one piece of unique information may be one or more of: a product code, a date, a time and a location.

6. The method of any one of claims 1 to 5, wherein the machine-identifiable tag is a scannable code, such as a QR code.

7. The method of any one of claims 1 to 6, wherein the machine-identifiable tag is configured to be interpreted by an electronic device.

8. The method of claim 7, wherein a transaction between a user of the electronic device and a transacting entity is initiated upon interpretation of the machine-identifiable tag by the electronic device.

9. The method of any one of claims 1 to 8, wherein the machine-identifiable tag is displayed on a display in communication with the requestor.

10. The method of claim 9, wherein the machine-identifiable tag is displayed in the display via a web browser which is implemented by the requestor.

11. The method of claim 10, wherein the requestor is the web browser.

12. The method of any one of claim 1 to 11, wherein the machine-identifiable tag is displayed on an online shopping web page.

13. An electronic device comprising processing circuitry configured to perform the steps of any one of the methods of claims 1 to 12.

14. A computer-readable medium comprising computer executable instructions which when executed by processing circuitry cause the processing circuitry to perform the steps of the method of any one of claims 1 to 13.

15. A machine-identifiable tag provider comprising processing circuitry configured to:
receive a request for a machine-identifiable tag from a requestor;
determine whether the machine-identifiable tag exists in a reverse proxy,
if it is determined that the machine-identifiable tag exists in the reverse proxy, output the machine-identifiable tag from the reverse proxy in response to the request for the machine-identifiable tag;
if it is determined that the machine-identifiable tag does not exist in the reverse proxy, encode a machine-identifiable tag as data, transmit the data to the requestor and store the machine-identifiable tag in the reverse proxy.
